# EUROPÄISCHE PATENTSCHRIFT

(11) **EP 1 778 413 B1**
(45) Veröffentlichungstag und Bekanntmachung des Hinweises auf die Patenterteilung: **16.03.2016**
(21) Anmeldenummer: 05773771.0
(22) Anmeldetag: 01.08.2005
(51) Int. Cl.: B05D 5/12, C09D 5/08, C23F 11/18, C23C 22/34, C23C 22/40, H01B 1/12

(54) **VERFAHREN ZUM BESCHICHTEN METALLISCHER OBERFLÄCHEN MIT EINER KORROSIONSSCHÜTZENDEN BESCHICHTUNG**
PROCESS FOR COATING METALLIC SURFACES WITH AN ANTI-CORROSIVE COATING
PROCEDE DE REVETEMENT DE SURFACES METALLIQUES AVEC UNE COUCHE DE PROTECTION CONTRE LA CORROSION

(30) Priorität: 03.08.2004 DE 102004037542; 03.08.2004 DE 102004037552; 30.06.2005 DE 102005030488; 30.06.2005 DE 102005030489
(43) Veröffentlichungstag der Anmeldung: 02.05.2007
(73) Patentinhaber: Chemetall GmbH, 60487 Frankfurt am Main (DE)
(72) Erfinder: PLIETH, Waldfried, 01156 Dresden (DE); RAMMELT, Ursula, 01217 Dresden (DE); HEBESTREIT, Nils, 37339 Breitenworbis (DE); STRATMANN, Martin, 40670 Meerbusch (DE); ROHWERDER, Michael, 40627 Düsseldorf (DE); ADLER, Hans-Jürgen, 01796 Pirna (DE); POTJE-KAMLOTH, Karin, 85640 Putzbrunn (DE); JÄHNE, Evelin, 01458 Ottendorf-Okrilla (DE); PICH, Andrij, 01187 Dresden (DE); DOMES, Heribert, 35789 Weilmünster (DE); SCHNEIDER, Julia, 35041 Marburg (DE); PALIWODA-PROBESKA, Grazyna, 50 305 Wroclaw (PL)
(74) Vertreter: Hübner, Günter
(86) Internationale Anmeldenummer: PCT/EP2005/008309
(87) Internationale Veröffentlichungsnummer: WO 2006/015756

(56) Entgegenhaltungen:
- EP-A- 1 382 721
- WO-A-03/102034
- DE-A1- 19 919 261
- SPINKS,DOMINIS,WALLACE,TALLMAN: "Electroactive conducting polymers for corrosion control" JOURNAL OF SOLID STATE ELECTROCHEMISTRY, Bd. 6, 19. Juli 2001 (2001-07-19), - 2001 Seiten 85-100, XP002354093
- RUCKENSTEIN,YANG: "Processable conductive polypyrrole/poly(alkyl methacrylate) composites prepared by an emulsion pathway" POLYMER, Bd. 34, 1993, Seiten 4655-4660, XP002354095

## Beschreibung

Die Erfindung betrifft ein Verfahren zur Beschichtung von metallischen Oberflächen mit Partikeln, die leitfähiges Polymer insbesondere in ihrer Hüllschicht enthalten, die Zusammensetzung zum Beschichten, die derart mit einer elektrisch leitfähigen Beschichtung beschichteten Substrate sowie die Verwendung der derart beschichteten Substrate.

Viele Substanzen aus der Klasse der elektrisch leitfähigen Polymere, insbesondere auf Basis von Polyanilin, sind seit Jahren bekannt. Es wurden viele chemische Systeme mit elektrisch leitfähigen Polymeren entwickelt, die ohne Zusätze anderer elektrisch leitfähiger Stoffe, eingesetzt werden können. Dabei hat sich gezeigt, dass verschiedene Bestandteile zugesetzt und bestimmte Prozessschritte ausgeführt werden müssen, um eine höhere elektrische Leitfähigkeit zu erzielen. In manchen Anwendungen hat sich eine massive Lage oder dünne geschlossene Schicht aus leitfähigen Polymeren wie z.B. beim Korrosionsschutz von metallischen Oberflächen nicht bewährt.

Das Einbringen von leitfähigen Polymeren in eine organische Matrix ist jedoch ohne das Einbringen von Partikeln, die beim Mischen oder Benetzen durch Scherung (oft sogenanntes Mahlen) das Untermischen und Verteilen der leitfähigen Polymere in einer Matrix verstärken, schwierig. Denn pulverförmig ohne Kern hergestellte Pulver aus leitfähigen Polymeren, die in etwa die gleichen Eigenschaften wie die Beschichtungen aus reinem leitfähigen Polymer aufweisen, sind aufwendiger und mit schlechterem Mischungsgrad unter die Bestandteile der Zusammensetzung der organischen Beschichtung einzubringen. Denn da diese Pulver oft aus faserigen adhäsiven Gebilden bestehen, können sie leicht zusammenbacken.

Es sind viele Arten an anorganischen und organischen Partikeln, insbesondere an Pigmenten, grundsätzlich bekannt, die im beschichteten Zustand eingesetzt werden, z.B. mit einer oxidischen Hülle beschichtet wie z.B. etliche Arten Pigmente.

Das Aufbringen eines Gemisches, das Monomere oder/und Oligomere enthält, die zu leitfähigem Polymer reagieren können, auf oder/und in Partikelkerne kann Probleme bereiten, da viele organische Kernmaterialien von den Lösemitteln an- bzw. aufgelöst werden können, da anorganische Partikel nicht so flexibel angepasst werden können wie organische Partikel an die Eigenschaften der Beschichtungen wie z.B. an die Glasübergangstemperatur T_{g} und an die Konzentration im Gemisch und auch chemisch bezüglich der Oberflächeneigenschaften z.B. durch Vernetzung bzw. Verpfropfung optimiert werden können. Außerdem kann die Partikelgrößenverteilung bei anorganischen Partikeln nicht so stark variiert werden wie bei organischen Partikeln, insbesondere bezüglich der geringen Breite der Verteilung, aber auch bezüglich der Partikelform. Ferner passen organische Partikel chemisch oft besser zu organischen Bindemitteln, die für die organische Bindemittelmatrix manchmal notwendig sind. Andererseits sind anorganische Partikel eher in Plättchen-, Lineal- oder Nadelform kommerziell erhältlich.

Dabei sind oft Kernmaterialien auszuwählen, die in den gewählten Lösemitteln bzw. Flüssigkeiten möglichst vollständig unlöslich sind wie meistens solche insbesondere auf Basis von Polyacrylat, Polycarbonat, Polyethylen, Polyimid, Polystyrol oder/und Polyurethan bzw. wie alle anorganischen Partikel. Grundsätzlich sind auch andere organische polymere Partikel möglich. Daher ist die Auswahl einerseits der Kernmaterialien, andererseits der verwendbaren Lösemittel bei der Beschichtung organischer Partikel eingeschränkt. Da die Härte der organischen Kerne und ihrer Umhüllung gering ist, ist darauf zu achten, dass die beschichteten Partikel bei stärkerer Scherung (sog. Mahlung) nicht zerstört werden. Im Folgenden wird von Mahlung gesprochen, ohne zu unterscheiden, ob es sich nur um eine Benetzung durch Scherung oder tatsächlich um eine Mahlung mit einer Zerkleinerung handelt.

Die Patentanmeldungen DE 102004037542, DE 102004037552 und die daraus hervorgehenden Auslandsanmeldungen (PCT/EP2005/008306, PCT/EP2005/008314) sowie die parallele, beim gleichen Patentamt vom gleichen Anmelder eingereichte Anmeldung unter dem Titel Verfahren zum Beschichten von feinen Partikeln mit leitfähigen Polymeren" (DE 102005030489) sowie deren Auslandsanmeldungen (PCT/EP2005/008314) werden ausdrücklich in diese Anmeldung einbezogen, insbesondere bezüglich der Arten bzw. Mengen der Depotsubstanzen, der Anionen, der Kationen, der Matrixsubstanzen, der Ausgangs-, Zwischen- und Endsubstanzen und der weiteren zugesetzten bzw. entstandenen Komponenten sowie insbesondere bezüglich der chemischen Reaktionen, der Herstellungsverfahren und -bedingungen, der einzelnen Prozeßschritte, der physikochemischen Phänomene, der Leitfähigkeiten, der Potenzialwerte, der Potenzialdifferenzen, der Potenzialänderungen und anderer Eigenschaften, der Definitionen, der Gegenstände der Ansprüche, der Figuren, der Tabellen sowie der Verwendungen, der Ausführungsvarianten, der Beispiele und der Vergleichsbeispiele.

WO 03/102034 A1 lehrt Verfahren zum Schützen von metallischen Oberflächen gegen Korrosion durch Beschichtung mit einer Zusammensetzung, die strahlungshärtendes Harz und leitfähiges Polymer enthält, wobei das leitfähige Polymer auf Basis von Polyanilin unter elektrochemischen Bedingungen der oxidativen Korrosion korrosionsschützende Ionen freisetzt und wobei die strahlengehärtete Beschichtung eine geringe spontane Freisetzungsrate aufweist. EP 1 382 721 A1 beschreibt ein Verfahren zum Inhibieren der Korrosion von metallischen Oberflächen, bei dem Depotsubstanzen auf Basis von Polyanilinen zusammen mit Derivaten von Mono- und Dithiol-organischen Säuren, die als Anionen eingebaut sind, eingesetzt werden. DE 199 19 261 A1 lehrt ein Verfahren zur Beschichtung oxidischer Partikel mit leitfähigem Polymer, wobei die Oxidpartikel mit der Monomerlösung versetzt werden, der dann eine separate Lösung, die Oxidationsmittel enthält, zugesetzt wird, lehrt aber keine Details zur Herstellung von Beschichtungen auf Basis von organischem Polymer mit einem Gehalt an leitfähigem Polymer und zu deren korrosionsinhibierender Wirkung. G. M. Spinks et al., J. Solid State Electrochem. 2002, 6, 85-100, gibt einen Literaturüberblick über den Einsatz leitfähiger Polymere zur Kontrolle der Korrosion metallischer Oberflächen, wobei auf Polyaniline und auch auf Polypyrrol-basierte Zusammensetzungen eingegangen wird. E. Rückenstein & S. Yang, Polymer, 1993, 34, 22, 4655-4660, beschreibt die Herstellung leitfähiger Polypyrrol/Polyalkylmethacrylat-Kompositfilme.

Es ist den Anmeldern keine Publikation bekannt, bei der auch nur eine kleine Zahl an Arten an Anionen in Verbindung mit leitfähigen Polymeren systematisch variiert wurde. Da die Herstellung von leitfähigem Polymer, das bei vielen Verbindungen nicht kommerziell erhältlich ist und daher dann mühevoll selber präpariert werden muß, und die Variation der Herstellungsbedingungen sehr aufwendig ist, wird an der systematischen Variation von Edukten für das leitfähige Polymer, von Anionen und Oxidationsmittel in der Forschung offenbar nicht gearbeitet, insbesondere nicht bei solchen auf Basis von Polypyrrol oder Polythiophen.

In den meisten Untersuchungen des Standes der Technik zur Herstellung und Anwendung von leitfähigen Polymeren sind Anionen - in der Regel als Gegenanion oder Dotierungsanion bezeichnet - zwangsläufig aufgrund der Herstellungsbedingungen in den Gemischen enthalten, um die Elektroneutralität des leitfähigen Polymers während der Bildung aufrechtzuerhalten. Es ist jedoch sehr wenig bekannt über die Schutzwirkung von solchen Anionen bei Verwendung leitfähiger Polymere. In der Literatur wird selten über eine korrosionsschützende Wirkung der Anionen im leitfähigen Polymer berichtet. Jedoch wird bei einzelnen Experimenten vorab eine Passivierung der metallischen Oberfläche gewählt, bei der z.B. allein aus Oxalat eine schwerlösliche Metalloxalat-Passivierungsschicht gebildet wird, bevor das chemische System mit dem leitfähigen Polymer aufgebracht wird. Bei der Verwendung z.B. von einem Polyanilin wird üblicherweise ein undotiertes Polyanilin mit diesem System aufgebracht und erst hinterher z.B. mit Phosphorsäure dotiert. Die vorherige Passivierung ist immer dann erforderlich, wenn das leitfähige Polymer elektrochemisch aufgebracht wird. Das gleiche Anion, das bei der Passivierung verwendet wird, ist dann zwangsläufig vorhanden und wird gleichzeitig bei der Polymerisation des leitfähigen Polymers als Gegenion zur Wahrung der Elektroneutralität eingebaut.

Es wurde jetzt festgestellt, dass die zuzusetzenden Anionen nicht nur die erforderliche Elektroneutralität gewährleisten, wenn sie in die Struktur der leitfähigen Polymere eingebaut werden, sondern auch auf einer metallischen Oberfläche eine korrosionsschützende Wirkung ausüben können, wenn sie aus den leitfähigen Polymeren wieder auswandern. Die korrosionsschützende Wirkung tritt bereits bei kleinen Beschädigungen der Beschichtung ein, indem diese ausgewählten Anionen aus dem leitfähigen Polymer auswandern und zu der Beschädigung in der Schutzschicht auf der metallischen Oberfläche wandern. Die defekte metallische Oberfläche kann hierbei in vielen Fällen passiviert werden, insbesondere wenn sie nicht zu groß ist.

Es wurde außerdem jetzt festgestellt, dass beim korrosiven Angriff metallischer Oberflächen meistens eine kathodische Delamination auftritt. Ferner wurde dabei festgestellt, dass dieser kathodischen Delamination vielfach ein Potenzialabfall als Freisetzungssignal vorausläuft. Das Freisetzungssignal tritt generell im gestörten Bereich auf, weil dort das Potenzial bei den gängigen Gebrauchsmetallen und ihren Legierungen fast ausnahmslos einen negativeren Wert hat als das Redoxpotenzial der gängigen leitfähigen Polymere. Dadurch werden letztere negativ polarisiert und somit reduziert.

Bei der kathodischen Delamination läuft dann der eigentlichen Grenzflächenenthaftung eine Potenzialabsenkung voraus, bei der das Potenzial an der Grenzfläche bereits in diesem Vorstadium der Enthaftung von einem Wert, bei dem die gängigen leitfähigen Polymere im oxidierten Zustand vorliegen, absinkt auf einen niedrigeren Wert, was zumindest teilweise zu einer Reduktion führt. Dabei findet an dieser vorgeschobenen kathodischen Front, bei der die Polymerhaftung noch nicht zerstört ist, oft auch eine Sauerstoffreduktion an der Grenzfläche statt, bei der Radikale entstehen, die die Haftung an der Grenzfläche zerstören und somit schließlich zur Enthaftung führen. An einer delaminierten Stelle kann sich auch mindestens eine Blase bilden.

Es wurde jetzt festgestellt, dass diese Effekte ausgenutzt werden können, 1. um eine weitere Delamination zu stoppen oder/und 2. um in diesem frühen Stadium Delamination zu verhindern, indem Anionen freigesetzt werden, die diese Reaktion inhibieren. Wenn die Grenzfläche in diesem frühen Stadium noch nicht enthaftet ist, sind nur geringe Mengen an solchen Anionen wegen des geringen freien Volumens an der noch weitgehend intakten Grenzfläche nötig.

Dieses chemische System funktioniert bei kleinen Defekten, kann aber zu große Defekte nicht passivieren und kann dabei sogar zu einem Desaster führen, wenn die Kationentransportrate im Gesamtsystem zu hoch ist und wenn es dadurch zu einer schnell durchlaufenden Reduktion z.B. der organischen Beschichtung mit einem Gehalt an leitfähigem Polymer kommt. Denn es kommt auf die Abstimmung aller Mengen und Eigenschaften in diesem chemischen System zur Korrosionsinhibierung metallischer Oberflächen an. Aber Chromat allein kann zu große Defekte ebenfalls nicht passivieren.

Bei vielen chemischen Systemen, die leitfähige Polymere enthalten, ist ein auf der Freisetzung von Anionen basierender Effekt (Release-Effekt) erhofft oder vermutet, aber nur in seltenen Einzelfällen auch nachgewiesen worden. Die Einlagerungen der leitfähigen Polymere in einer Beschichtung könnten dabei möglicherweise als Depots für passivierende Substanzen wie z.B. passivierende Anionen dienen. Die hierbei in der Literatur beschriebenen Anionen sind meistens nicht korrosionsinhibierend. Die Ausnutzung eines Release-Effektes für eine korrosionsschützende Anwendung ist jedoch nur selten und dann nur vage angedeutet, nach Kenntnis der Anmelder in der Praxis aber nie nachgewiesen worden und daher eine Vermutung geblieben. Die Auslösung eines Release-Effektes durch eine Potenzialabsenkung ist jedoch nach Kenntnis der Anmelder nie beschrieben worden.

Wenn jedoch korrosionsschützende Anionen im Stand der Technik beschrieben sind, dann ist die korrosionsschützende Wirkung weitgehend auf eine passivierende Wirkung der lokalen defekten Stellen beschränkt, jedoch nicht für den gerade delaminierenden Bereich beschrieben. Bei leitfähigen Polymeren ist dabei zu unterscheiden, ob sie chemisch oder elektrochemisch polymerisiert werden, da bei der elektrochemischen Polymerisation die vergleichsweise unedle metallische Oberfläche vor der Abscheidung des Polymers immer passiviert wird: Beispielsweise wird die metallische Oberfläche bei Verwendung von Oxalatsalzen zuerst passiviert. Die Publikationen, die korrosionsinhibierende Anionen beschreiben, deuten nach Kenntnis der Anmelder nie eine Freisetzung dieser Anionen aufgrund einer Potenzialabsenkung an.

Mehr als ein selbstheilender Effekt ist nur von Chrom-VI-haltigen Beschichtungen, die frei von leitfähigen Polymere sind, bekannt: 1. Passivierung der metallischen Oberfläche am Defekt oder sogar an der beschädigten Stelle (anodische Teilreaktion), 2. Inhibierung der kathodischen Teilreaktion (Sauerstoffreduktion) im gerade delaminierenden oder/und im bereits delaminierten Bereich. Doch hexavalentes Chromat ist bekanntermaßen derart schädlich, dass aus Gründen des Umweltschutzes der Anteil des Chromatgehaltes zum Schutz von metallischen Oberflächen drastisch verringert wird. Aber auch Chromat kann nur kleine und keine großflächigen Defekte passivieren und heilen. Bisher ist jedoch kein chemisches System bekannt, das tatsächlich bei Freiheit von hexavalentem Chromat mehr als einen solchen Selbstheilungseffekt aufweist.

Es bestand daher die Aufgabe, Verfahren für die Beschichtung von metallischen Oberflächen mit Zusammensetzungen, die leitfähiges Polymer auf oder/und in Partikeln enthalten vorzuschlagen, die grundsätzlich für den Einsatz im Korrosionsschutz von metallischen Oberflächen geeignet sind. Es wäre vorteilhaft, wenn die Herstellung dieser Zusammensetzung und die Beschichtungsverfahren möglichst einfach und ohne besondere Vorrichtungen durchgeführt werden könnten.

Darüber hinaus wäre es besonders vorteilhaft, wenn tatsächlich einzelne der chemischen Systeme mit leitfähigen Polymeren in Beschichtungen auf metallischen Untergründen bei einer Beschädigung der Beschichtung nicht nur durch eine Potenzialänderung mit einem Gradienten des elektrischen Feldes (Freisetzung von Anionen; Release-Effekt) kenntlich machten, sondern auch einen Heilungseffekt (Repair-Effekt) aufweisen würden. Der Heilungseffekt, bei dem eine delaminierte Stelle wieder repariert wird, kann jedoch nur bei einzelnen wenigen chemischen Systemen erhofft werden.

Die Aufgabe wird gelöst mit einem Verfahren zum Beschichten von metallischen Oberflächen mit einer korrosionsschützenden Zusammensetzung, die leitfähiges Polymer enthält, bei dem die Zusammensetzung eine Dispersion ist, die leitfähiges Polymer enthaltende Partikel 1.) als typische Core-Shell-Partikel (beschichtete Partikel), die teilweise oder vollständig mit leitfähigem Polymer beschichtet sind, oder/und 2.) als organische Partikel, die teilweise im Inneren leitfähiges Polymer enthalten, sowie ein Bindersystem enthält, und bei dem das leitfähige Polymer mindestens eines ist auf der Basis von Polyphenylen, Polyfuran, Polyimidazol, Polyphenanthren, Polypyrrol, Polythiophen oder/und Polythiophenylen, das mit korrosionsschützenden beweglichen Anionen von Benzoat, Nitrosalicylat, Salicylat, Tartrat, Hexafluorotitanat, Hexafluorozirkonat oder/und Wolframat beladen ist.

Die Aufgabe wird außerdem gelöst mit einem Verfahren zum Beschichten von metallischen Oberflächen mit einer korrosionsschützenden Zusammensetzung, die leitfähiges Polymer enthält, bei dem auf die metallische Oberfläche zuerst eine erste Zusammensetzung, die eine Dispersion ist, die leitfähiges Polymer enthaltende Partikel enthält 1.) als typische Core-Shell-Partikel (beschichtete Partikel), die teilweise oder vollständig mit leitfähigem Polymer beschichtet sind, oder/und 2.) als organische Partikel, die teilweise im Inneren leitfähiges Polymer enthalten, aufgebracht sowie getrocknet wird und bei dem danach eine zweite, ein Bindersystem enthaltende Zusammensetzung als Dispersion (= Lösung, Emulsion oder/und Suspension) auf die vorbeschichtete metallische Oberfläche aufgebracht, getrocknet und gegebenenfalls auch polymerisiert wird, wobei das leitfähige Polymer mindestens eines ist auf der Basis von Polyphenylen, Polyfuran, Polyimidazol, Polyphenanthren, Polypyrrol, Polythiophen oder/und Polythiophenylen, das mit korrosionsschützenden beweglichen Anionen von Benzoat, Nitrosalicylat, Salicylat, Tartrat, Hexafluorotitanat, Hexafluorozirkonat oder/und Wolframat beladen ist.

Wenn im Folgenden von "Zusammensetzung" gesprochen wird, kann gegebenenfalls jede der in den Ansprüchen 1 und 2 genannten Zusammensetzungen einbezogen sein.

Wenn das leitfähige Polymer nicht nur in Partikelform vorliegt, kann es beispielsweise teilweise auch als Lösung, Sol, Gel oder Fällungsprodukt auftreten; gleichzeitig oder alternativ kann das nicht in Partikelform vorliegende Polymer auch zuerst in Form einer dünnen oder sehr dünnen Beschichtung aufgebracht werden bzw. worden serin, bevor mindestens eine erfindungsgemäße Zusammensetzung aufgebracht wird.

Eine solche, oft sehr dünne Beschichtung kann, aber muss nicht geschlossen sein; sie kann dabei direkt oder sehr nahe an der metallischen Oberfläche ein erstes Depot bilden, das aufgrund der kurzen Wege zur metallischen Oberfläche besonders schnell und effektiv wirkt, während die darauf aufgebrachte Beschichtung den Hauptvorrat an leitfähigem Polymer insbesondere zum Stoppen der Korrosion und zum Ausheilen von nicht sehr kleinen Defekten bilden kann. Eine solche dünne Beschichtung auf Basis von leitfähigem Polymer kann beispielsweise getrennt von der nachfolgenden erfindungsgemäßen, ein Bindersystem enthaltenden Zusammensetzung aufgetragen werden. Auch auf schnell laufende Bänder lässt sich solche Beschichtung z.B. mit einem ersten Rollcoater oder vielfach eher durch Walzenauftrag oder Sprühen und gegebenenfalls nachfolgendes Abquetschen aufbringen.

Beim Trocknen der ersten Zusammensetzung kann grundsätzlich jede Art des Trocknens gewählt werden: Ein teilweises Trocknen (=Antrocknen), bei dem oft eine gewisse Haftung der dabei entstehenden Beschichtung erzeugt werden soll, ein mehr oder weniger starkes bzw. ein mehr oder weniger vollständiges Trocknen (=Trocknen) oder ein Auftrocknen, das einem Beschichten auf einer bestimmten Oberfläche z.B. auf einem Band ist (=dry-in-place).

Besonders bevorzugt ist, dass jede Art von leitfähigem Polymer, das eingesetzt wird, mit korrosionsschützenden beweglichen Anionen beladen ist.

Die Aufgabe wird außerdem gelöst mit einer Zusammensetzung zur Beschichtung einer metallischen Oberfläche, bei der die Zusammensetzung enthält:
Mindestens ein wasserlösliches oder wasserdispergiertes organisches Polymer,
mindestens eine Art von leitfähigem Polymer enthaltende Partikel 1.) als typische Core-Shell-Partikel (beschichtete Partikel), die teilweise oder vollständig mit leitfähigem Polymer beschichtet sind, oder/und 2.) als organische Partikel, die teilweise im Inneren leitfähiges Polymer enthalten,
Wasser,
gegebenenfalls mindestens ein organisches Lösemittel und
gegebenenfalls mindestens ein Additiv,
wobei das leitfähige Polymer mindestens eines ist auf der Basis von Polyphenylen, Polyfuran, Polyimidazol, Polyphenanthren, Polypyrrol, Polythiophen oder/und Polythiophenylen, das mit korrosionsschützenden beweglichen Anionen von Benzoat, Nitrosalicylat, Salicylat, Tartrat, Hexafluorotitanat, Hexafluorozirkonat oder/und Wolframat beladen ist.

Hierbei ist es besonders bevorzugt, dass diese Zusammensetzung leitfähiges Polymer enthält, in das Anionen auf Basis von Titan- oder/und Zirkonium eingebaut sind, oder/und dass sie mindestens eine Verbindung von Titan oder/und Zirkonium enthält.

Die Aufgabe wird ferner mit Gegenständen gelöst, die auf einer metallischen Oberfläche mit einer Beschichtung auf Basis von Bindersystem, Partikeln und leitfähigem Polymer versehen sind, die nach mindestens einem der Ansprüche 1 bis 19 hergestellt ist.

Diese Beschichtung enthält insbesondere leitfähiges Polymer, das Titan- oder/und Zirkonium enthaltende Anionen aufweist, oder/und mindestens eine Verbindung von Titan oder/und Zirkonium.

Es wurde jetzt ermittelt, dass ein Verfahren zum Beschichten von anorganischen oder/und organischen Partikeln gut zur Herstellung von leitfähigem Polymer insbesondere auf anorganischen oder/und organischen Partikeln geeignet ist, bei dem die Partikel in einem Gemisch vorliegen oder/und hierin anfangs gebildet werden, wobei das Gemisch eine Dispersion ist.

Hierbei enthält das als **Edukt-Gemisch** bezeichnete Gemisch mindestens ein Monomer oder/und mindestens ein Oligomer, das im Folgenden als "Edukt(e) der leitfähigen Polymere" oder nur als "Edukt(e)" bezeichnet wird, ausgewählt aus Monomeren oder/und Oligomeren von Aromaten oder/und ungesättigten Kohlenwasserstoff-Verbindungen, die geeignet sind, hieraus elektrisch leitfähiges Oligomer/Polymer/Copolymer/Blockcopolymer/Pfropfcopolymer zu bilden, und insbesondere ausgewählt aus unsubstituierten oder/und substituierten Verbindungen auf der Basis von Imidazol, Phenanthren, Pyrrol, Thiophen oder/und Thiophenol. Hierbei wird/ist mindestens ein Edukt zur Herstellung von mindestens einem leitfähigen Polymer danach ausgewählt, dass sein Oxidationspotenzial kleiner oder gleich ist dem Zersetzungspotenzial des Wassers oder/und mindestens eines anderen polaren Lösemittels in dem hierzu verwendeten Gemisch. Hierbei erfolgt die Freisetzung von beweglichen korrosionsschützenden Anionen und gegebenenfalls auch von haftvermittelnden Anionen aus dem entstandenen leitfähigen, Anionen-beladenen Polymer nicht oder/und nur untergeordnet über eine Deprotonierungsreaktion, sondern vorwiegend oder/und gänzlich über eine Reduktionsreaktion. Hierbei kann mindestens eine Art von Anionen - gegebenenfalls mindestens ein Salz, ein Ester oder/und mindestens eine Säure als Träger dieser Anionen - in das leitfähige Polymer 1. als Dotierion in die Struktur des leitfähigen Polymers eingebaut werden, 2. aus dieser Struktur im Falle eines Potenzialabfalls des leitfähigen Polymers (Reduktion) auch wieder freigesetzt werden und 3. im Falle der Anwesenheit einer metallischen Oberfläche korrosionsschützend wirken. Sie werden im Folgenden "bewegliche korrosionsschützende Anionen" genannt.

Gegebenenfalls enthält das Edukt-Gemisch mindestens ein Oxidationsmittel, wobei dieses mindestens eine Oxidationsmittel gänzlich oder teilweise entfallen kann, insbesondere wenn mindestens ein Anion gleichzeitig als Oxidationsmittel wirkt oder/und wenn elektrochemisch oder/und photochemisch polymerisiert wird.

Das Edukt-Gemisch enthält auch mindestens eine Art von Partikeln ausgewählt aus Clustern, Nanopartikeln, Nanoröhrchen, faserigen, knäuelartigen oder/und porösen Strukturen, Partikeln mit einer mittleren Partikelgröße im Bereich von 10 nm bis 10 mm und deren Ansammlungen wie Agglomeraten oder/und Aggregaten sowie Wasser oder/und mindestens ein anderes polares Lösemittel und gegebenenfalls mindestens ein weiteres Lösemittel, insbesondere ausgewählt aus polaren Lösemitteln, unpolaren oder schwach polaren Lösemitteln und aus Solventien, die nicht bei Raumtemperatur flüssig vorliegen, aber bei höherer Temperatur als Lösemittel wirken können.

Hierbei wird aus dem Edukt-Gemisch auf mindestens einem Teil der Oberflächen der Partikel eine Beschichtung mit einer Dicke mindestens von einer Monolage ausgebildet, die insbesondere entweder im Wesentlichen aus Monomeren oder/und Oligomeren besteht oder zumindest einen wesentlichen Anteil aus Monomeren oder/und Oligomeren neben gegebenenfalls mindestens einer weiteren Komponente des Edukt-Gemisches enthält.

Hierbei wird in dem Edukt-Gemisch zumindest ein Teil der Monomere oder/und Oligomere durch Oxidation chemisch mit mindestens einem Oxidationsmittel, elektrochemisch unter elektrischer Spannung oder/und photochemisch unter Einwirkung von elektromagnetischer Strahlung jeweils in Gegenwart von mindestens einer Art von beweglichen korrosionsschützenden Anionen mindestens teilweise zu mindestens einem Oligomer oder/und gegebenenfalls teilweise oder gänzlich zu jeweils mindestens einem Polymer, Copolymer, Blockcopolymer oder/und Pfropfcopolymer in einem Wasser oder/und mindestens ein anderes polares Lösemittel enthaltenden Gemisch umgesetzt **("Produkt(e)").** Hierbei werden die hierbei gebildeten Oligomere, Polymere, Copolymere, Blockcopolymere oder/und Pfropfcopolymere - im Folgenden "leitfähige Polymere" genannt - zumindest teilweise elektrisch leitfähig oder/und elektrisch leitfähiger.

In dem Verfahren zum Beschichten von anorganischen oder/und organischen Partikeln können die Partikel in einem **Produkt-Gemisch** vorliegen oder/und hierin anfangs gebildet werden, wobei das Gemisch eine Dispersion ist. Hierbei kann das Produkt-Gemisch mindestens ein elektrisch "leitfähiges Polymer" auf Basis von Oligomer/Polymer/Copolymer/Blockcopolymer/Pfropfcopolymer enthalten, wobei mindestens ein Edukt zur Herstellung von mindestens einem leitfähigen Polymer danach ausgewählt ist, dass das Oxidationspotenzial des Edukts kleiner oder gleich ist dem Zersetzungspotenzial des Wassers oder/und mindestens eines anderen polaren Lösemittels in dem hierzu verwendeten Gemisch und wobei die Freisetzung von beweglichen korrosionsschützenden Anionen und gegebenenfalls auch von haftvermittelnden Anionen aus dem entstandenen leitfähigen Polymer nicht oder/und nur untergeordnet über eine Deprotonierungsreaktion, sondern vorwiegend oder/und gänzlich über eine Reduktionsreaktion erfolgt. Hierbei enthält das Produkt-Gemisch mindestens eine Art von Anionen - gegebenenfalls mindestens ein Salz, ein Ester oder/und mindestens eine Säure als Träger dieser Anionen, wobei diese mindestens eine Art von Anionen in das leitfähige Polymer 1. als Dotierion in die Struktur des leitfähigen Polymers eingebaut werden kann oder/und zumindest teilweise eingebaut ist, 2. aus dieser Struktur im Falle eines Potenzialabfalls des leitfähigen Polymers (Reduktion) auch wieder freigesetzt werden kann und 3. im Falle der Anwesenheit einer metallischen Oberfläche korrosionsschützend wirken kann - im Folgenden "bewegliche korrosionsschützende Anionen" genannt.

Hierbei enthält das Produkt-Gemisch auch mindestens eine Art von Partikeln ausgewählt aus Clustern, Nanopartikeln, Nanoröhrchen, faserigen, knäuelartigen oder/und porösen Strukturen, Partikeln mit einer mittleren Partikelgröße im Bereich von 10 nm bis 10 mm und deren Ansammlungen wie Agglomeraten oder/und Aggregaten sowie gegebenenfalls Oxidationsmittel, Wasser oder/und mindestens ein anderes Lösemittel.

Hierbei wird aus dem Produkt-Gemisch auf mindestens einem Teil der Oberflächen der Partikel eine Beschichtung mit einer Dicke mindestens von einer Monolage ausgebildet,
wobei die gebildeten Oligomere, Polymere, Copolymere, Blockcopolymere oder/und Pfropfcopolymere - im Folgenden "leitfähige Polymere" genannt - zumindest teilweise elektrisch leitfähig sind oder/und elektrisch leitfähiger werden.

Den Anmeldern sind bisher keine Aniline, Polyaniline oder deren Derivate bekannt, die erfindungsgemäß wirken. Besonders bevorzugt ist es, dass die beweglichen korrosionsschützenden Anionen auch 4. die Fähigkeit aufweisen, eine Sauerstoffreduktion im gestörten Bereich zumindest an der Delaminationsfront oder/und an einer vorauseilenden Front zu stoppen oder/und 5. auch haftvermittelnd zu wirken, so dass eine Delamination zumindest teilweise wieder geschlossen wird (Repair-Effekt).

Bei Polyanilinen werden die beweglichen korrosionsschützenden Anionen nicht über eine Reduktionsreaktion aus dem leitfähigen Polymer freigesetzt. Da die Reduktionsprodukte des Polyanilins nicht stabil sind, wird die Reduktionsreaktion im Rahmen der Erfindung nicht gewählt. Vielmehr wird anstelle der Reduktionsreaktion die Deprotonierungsreaktion zur Freisetzung der Anionen gewählt. Den Anmeldern sind keine leitfähigen Polymere auf Basis von Polyanilin bekannt, bei denen diese Freisetzung durch eine Deprotonierungsreaktion erfolgt.

Wenn das Oxidationspotenzial des Edukts kleiner oder gleich ist dem Zersetzungspotenzial des Wassers oder/und mindestens eines anderen polaren Lösemittels in dem hierzu verwendeten Gemisch, bedingt das, dass die Oxidation (= Polymerisation) des leitfähigen Polymers abgeschlossen ist/wird, ohne dass es oder bevor es zu einer Zersetzung z.B. von Wasser und z.B. zur Wasserstoff-Freisetzung kommen kann.

Der Begriff "Dispersion" im Sinne dieser Anmeldung umfasst nicht nur Suspensionen, sondern auch Lösungen und Emulsionen.

Es wurde jetzt nachgewiesen, dass unter anderem Molybdat-Anionen aufgrund einer Potenzialabsenkung im leitfähigen Polymer, das sich im gestörten Bereich befindet, freigesetzt wurden und direkt zum Defekt gewandert sind. Andere Wanderwege können bei dieser Versuchsdurchführung ausgeschlossen werden. Auf der metallischen Oberfläche wurde dann an der beschädigten Stelle eine Molybdat-haltige Passivierungsschicht ausgebildet und durch XPS-Messungen (Röntgenspektroskopie) ermittelt.

Ferner wurde jetzt mit einer Raster-Kelvin-Sonde (SKP) ein Repair-Effekt nachgewiesen, bei dem Figur 2 der DE 102004037542 in Verbindung mit dem dortigen Beispiel 1 Messergebnisse zu einem starken Passivierungseffekt eines beschädigten Bereiches wiedergibt. In Figur 2 wurden jedoch etliche Messkurven weggelassen, die zwischen der bei sehr niedrigem Korrosionspotenzial liegenden ersten Messung und einzelnen Messkurven aus der Mitte der Reihenmessung gewonnen wurden. Dazwischen liegt ein sehr starker Potenzialanstieg um ca. 0,3 V, der dafür spricht, dass die Delamination an einer delaminierenden Stelle zumindest teilweise gestoppt wurde. Figur 1 zeigt im Vergleich hierzu die allgemein auftretenden Effekte.

Es wurde jetzt festgestellt, dass durch den Beginn des Korrosionsprozesses an einer Stelle der Grenzfläche Metall/Beschichtung eine Potenzialänderung mit einem Gradienten des elektrischen Feldes eintritt. Die Freisetzung der Anionen (Release-Effekt) erfolgt jedoch nur, wenn eine solche Potenzialänderung erfolgt. Ohne eine Verletzung der Beschichtung, ohne eine sonstige Störung der Beschichtung oder ohne einen sonstigen Defekt an der Grenzfläche Metall - Beschichtung wie z.B. Verunreinigungen sind die im leitfähigen Polymer eingebauten Anionen gespeichert und die Potenziale konstant. Bereits vor und bei der Enthaftung von metallischer Oberfläche und Beschichtung, wie sie bei einer Beschädigung der Beschichtung auftritt, wird das Elektrodenpotenzial deutlich abgesenkt.

Diese Potenzialabsenkung führt zu einer Reduktion der leitfähigen Polymere insbesondere in der Nähe des Defektes, wobei Anionen mit korrosionsschützenden, passivierenden oder/und haftvermittelnden Eigenschaften freigesetzt werden.

Die Potenzialabsenkung kann hierbei vorzugsweise einerseits mindestens die Werte der Potenzialdifferenz zwischen dem Redoxpotenzial mindestens einer Depotsubstanz (leitfähiges Polymer) im ungestörten Zustand zum Korrosionspotenzial der metallischen Oberfläche an einem Defekt aufweisen, so dass zumindest teilweise vorzeitig oder frühzeitig, bevor eine starke Delamination eintritt, dem Entstehen oder Fortschreiten der Delamination entgegengewirkt werden kann.

Die Potenzialabsenkung kann hierbei vorzugsweise andererseits geringere Werte als die zwischen dem Redoxpotenzial mindestens einer Depotsubstanz im ungestörten Zustand zum Korrosionspotenzial der metallischen Oberfläche an einem Defekt aufweisen, insbesondere an einer der Enthaftung vorauseilenden Front mit einer Potenzialänderung, so dass zumindest teilweise vorzeitig oder frühzeitig, bevor eine schwache oder starke Delamination eintritt, dem Entstehen oder Fortschreiten der Delamination entgegengewirkt werden kann.

Das Redoxpotenzial des leitfähigen Polymers ist vorzugsweise höher als das Passivpotenzial des jeweiligen metallischen Materials, das durch geeignete Beschichtung vor Korrosion geschützt werden soll. Das Redoxpotenzial ist das Potenzial, das sich beim Vorliegen von korrespondierenden Redoxpaaren mit verschiedenen Dotierungsgraden, die gleichzeitig vorhanden sind, unter Normalbedingungen einstellt.

Das Redoxpotenzial kann primär über den Dotierungsgrad, also abhängig von der Art der Anionen und ihrer Menge, eingestellt werden. Hierdurch kann gezielt eine Potenzialdifferenz bei den erfindungsgemäßen Partikeln bzw. in Polymers wird vorzugsweise so eingestellt, dass es oberhalb des Potenzials der passivierten metallischen Oberfläche liegt und deutlich oberhalb des Potenzials der korrodierenden Oberfläche liegt.

Das Passivpotenzial ist das Potenzial an der Grenzfläche der metallischen Oberfläche zu Wasser, bei dem sich eine geschlossene stabile passivierende Deckschicht auf der metallischen Oberfläche ausbildet, so dass eine weitere Auflösung des Metalls unterbunden wird.

Besonders vorteilhaft ist es, wenn das Oxidationspotenzial des Anions höher ist als das Oxidationspotenzial des Eduktes, weil das Anion dann gleichzeitig als Oxidationsmittel wirken kann.

Ferner ist es bevorzugt, dass mindestens eine Depotsubstanz, das heißt, mindestens ein leitfähiges Polymer, ein Redoxpotenzial aufweist, das eine frühzeitige Freisetzung von Anionen ermöglicht, und dass mindestens eine Depotsubstanz eine vergleichsweise niedrige Kationentransportrate der Kationen aus dem Elektrolyten insbesondere vom Defekt oder/und der metallischen Oberfläche aufweist.

Vorzugsweise beträgt die Kationentransportrate der Kationen aus dem Elektrolyten insbesondere vom Defekt oder/und von der metallischen Oberfläche in die mindestens eine Depotsubstanz weniger als 10⁻⁸ cm²/s, besonders bevorzugt weniger als 10⁻¹⁰ cm²/s, ganz besonders bevorzugt weniger als 10⁻¹² cm²/s, insbesondere auch weniger als 10⁻¹⁴ cm²/s.

Der Begriff "gestörter Bereich" bedeutet den Bereich um den Defekt, in dem gegebenenfalls sowohl der Defekt, die beschädigte Stelle, als auch vorauslaufende Fronten der Potenzialänderung enthalten sind, also Änderungen des chemischen Systems aufgetreten sind. Die "beschädigte Stelle" bezeichnet den Defekt einschließlich der gegebenenfalls aufgetretenen Delaminationen. Eine schwache Delamination tritt im Bereich einer vorgeschobenen kathodischen Front auf, bei der die Polymerhaftung noch nicht zerstört ist, oft aber auch eine Sauerstoffreduktion an der Grenzfläche stattfindet. Eine starke Delamination tritt auf, wenn dort zusätzlich noch so viele Radikale entstehen, die die Haftung an der Grenzfläche zerstören, also zur eigentlichen Delamination führen.

In allen Fällen sollten einerseits die Anionen und andererseits die Beschichtung, insbesondere mindestens eine Depotsubstanz oder/und mindestens eine Matrixsubstanz, solche Porengrößen aufweisen, dass die gewählten freizusetzenden Anionen nicht oder nicht wesentlich beim Wandern durch die Beschichtung, also insbesondere durch die Depotsubstanz(en) und durch weitere Komponenten wie z.B. die Matrix, behindert werden. Eine sogenannte Matrixsubstanz ist eine Substanz, die zumindest teilweise die Matrix einer Beschichtung bildet oder grundsätzlich bilden könnte wie z.B. ein organisches Polymer/Copolymer, wobei es fließende Übergänge zwischen der Matrix und den weiteren Komponenten wie z.B. nach dem Verfilmen geben kann.

Die beweglichen korrosionsschützenden Anionen oder/und die gegebenenfalls auch vorhandenen haftvermittelnden Anionen weisen vorzugsweise eine Größe auf, die sie in die Lage versetzt, bei Potenzialabfall mit einer hohen Beweglichkeit aus dem leitfähigen Polymer im gestörten Bereich auszuwandern und insbesondere in Richtung auf den Defekt zu wandern. Durch die gezielte Wanderung der Anionen an die beschädigte Stelle könnte in einzelnen chemischen Systemen mit leitfähigen Polymeren eine Passivierung, mit der eine (weitere) Metallauflösung unterdrückt wird, und gegebenenfalls auch eine Reparatur der verletzten Stelle erzielt werden (Repair-Effekt). Voraussetzung für diese Wanderung ist, dass die Porenkanäle für die wandernden Anionen gegebenenfalls einschließlich ihrer Solvathüllen groß genug sind. Bei der chemischen Reaktion an der beschädigten Stelle werden bei der Metallauflösung Kationen gebildet, die mit den Anionen lokal eine Passivierungsschicht im Bereich der Verletzungsstelle bilden können.

Die bisherige Praxis hat jedoch gezeigt, dass die realen chemischen Systeme mit leitfähigen Polymeren fast ausnahmslos nur relativ geringe elektrische Leitfähigkeiten gewähren und dass die Repair-Effekte bisher nicht nachweisbar waren oder so schwach waren, dass sie für die technische Praxis nicht anwendbar sind. Daher ist es besonders bevorzugt, ein chemisches System auszuwählen, bei dem auch ein Repair-Effekt auftritt, der aber offenbar nur in manchen Ausführungsformen und unter bestimmten Bedingungen genutzt werden kann. Darüber hinaus wird angestrebt, die Bedingungen für die Ausbildung eines Potenzialgradienten (Auslösen des Release-Effektes) und gegebenenfalls auch für den Heilungseffekt (Repair-Effekt) zu optimieren, so dass er technisch anwendbar wird. Außerdem soll die enthaftete Grenzfläche durch das chemische System vor (weitergehender) Korrosion geschützt werden.

Ein Vorteil der Verwendung von Partikeln mit einem Anteil an leitfähigem Polymer ist die Vielseitigkeit der Anwendung der Partikel für beliebige metallische Oberflächen bzw. für beliebige Arten der Beschichtungen.

Viele gänzlich oder vorwiegend organisch zusammengesetzte und auch chemisch andersartig zusammengesetzte Beschichtungen könnten durch einen Zusatz von leitfähigen Polymeren verbessert werden: Bei einem geringen Gehalt an elektrisch leitfähigen Bestandteilen insbesondere bezüglich des antistatischen Verhaltens der Beschichtung, bei einem höheren Gehalt derartiger Bestandteile - insbesondere mit einer einstellbaren elektrischen Leitfähigkeit, was beispielsweise für die Abscheidung von Lackkomponenten im elektrischen Feld oder gegebenenfalls auch für die Elektroschweißbarkeit von mit solchen Schichten überzogenen Blechen bedeutsam sein kann. In sehr vielen Anwendungen kann ein hoher oder sogar besserer Korrosionsschutz von metallischen Oberflächen gewonnen werden.

Partikel im Wesentlichen bestehend aus leitfähigem Polymer, Partikel enthaltend leitfähiges Polymer oder/und Partikel als Kerne mit einer sehr dünnen, dünnen, dicken oder sehr dicken Hülle (Core-Shell-Particles) aus leitfähigem Polymer können hilfreich sein, leitfähige Polymere in eine Masse, Dispersion oder Lösung in partikulärer, dünnflüssiger oder hochviskoser Form einzubringen.

### Zusammensetzungen zum Beschichten metallischer Oberflächen:

Die Zusammensetzung zur Ausbildung der Beschichtung, die leitfähiges Polymer auf oder/und in Partikeln enthält, auf metallischen Oberflächen kann unterschiedlich zusammengesetzt sein, je nachdem es sich a) bei einer einzigen Zusammensetzung entsprechend Anspruch 1 um eine Zusammensetzung handelt, die immer gleichzeitig leitfähiges Polymer enthaltende Partikel und ein Bindersystem enthält, b) bei einer ersten Zusammensetzung entsprechend Anspruch 2 um eine Zusammensetzung handelt, die immer leitfähiges Polymer enthaltende Partikel enthält, oder c) bei einer zweiten Zusammensetzung entsprechend Anspruch 2 um eine Zusammensetzung handelt, die immer ein Bindersystem enthält. Dennoch ist bei b) oder/und c) nicht ausgeschlossen, dass jene Zusammensetzungen bei b) zusätzlich auch einen Anteil an Bindersystem oder/und Additive neben mindestens einem Lösemittel bzw. bei c) zusätzlich auch einen Anteil an leitfähiges Polymer enthaltenden Partikeln oder/und Additive neben mindestens einem Lösemittel enthalten.

Die Zusammensetzung zur Ausbildung der Beschichtung, die leitfähiges Polymer auf oder/und in Partikeln enthält, auf metallischen Oberflächen enthält vorzugsweise:
Im Falle a):
   - Mindestens eine Art leitfähiges Polymer enthaltender Partikel, gegebenenfalls als mindestens eine Art anorganischer oder/und organischer Partikel, die mit leitfähigem Polymer beschichtet sind oder/und im Inneren leitfähiges Polymer enthalten, mit einem Gesamtgehalt an leitfähiges Polymer enthaltenden Partikeln vorzugsweise im Bereich von 0,5 bis 90 Gew.-%, besonders bevorzugt im Bereich von 5 bis 80 Gew.-%, wobei das mindestens eine leitfähige Polymer ausgewählt ist aus der Gruppe von leitfähigen Polymeren bestehend aus Oligomeren, Polymeren, Copolymeren, Blockcopolymeren oder/und Pfropfcopolymeren mit einem Gehalt an leitfähigen Polymeren vorzugsweise im Bereich von 0,1 bis 30 Gew.-%, besonders bevorzugt im Bereich von 0,5 bis 20 Gew.-%, in das mindestens eine Art beweglicher korrosionsschützender Anionen eingebaut ist,
   - ein Bindersystem, das mindestens ein organisches Polymer enthält ausgewählt aus der Gruppe von organischen Polymeren bestehend aus Oligomeren, Polymeren, Copolymeren, Blockcopolymeren und Pfropfcopolymeren vorzugsweise mit einem Gehalt im Bereich von 5 bis 99 Gew.-%, besonders bevorzugt im Bereich von 10 bis 95 Gew.-%, und
   - gegebenenfalls mindestens ein Additiv vorzugsweise mit einem Gehalt im Bereich von 0,1 bis 30 Gew.-%, besonders bevorzugt im Bereich von 1 bis 20 Gew.-%, enthält,
   - wobei alle diese Gehalte einschließlich gegebenenfalls weiterer, hier nicht genannter Zusätze, jedoch ohne Lösemittel, insgesamt 100 Gew.-% ergeben sowie
   - mindestens ein Lösemittel, über 100 Gew.-% hinaus angegeben.
Im Falle b):
   - Mindestens eine Art leitfähiges Polymer enthaltender Partikel, gegebenenfalls als mindestens eine Art anorganischer oder/und organischer Partikel, die mit leitfähigem Polymer beschichtet sind oder/und im Inneren leitfähiges Polymer enthalten, mit einem Gesamtgehalt an leitfähiges Polymer enthaltenden Partikeln vorzugsweise im Bereich von 10 bis 100 Gew.-%, besonders bevorzugt im Bereich von 20 bis 99 Gew.-%, wobei das mindestens eine leitfähige Polymer ausgewählt ist aus der Gruppe von leitfähigen Polymeren bestehend aus Oligomeren, Polymeren, Copolymeren, Blockcopolymeren oder/und Pfropfcopolymeren mit einem Gehalt an leitfähigen Polymeren vorzugsweise im Bereich von 0,1 bis 100 Gew.-%, besonders bevorzugt im Bereich von 5 bis 60 Gew.-%, in das mindestens eine Art beweglicher korrosionsschützender Anionen eingebaut ist,
   - gegebenenfalls ein Bindersystem, das mindestens ein organisches Polymer enthält ausgewählt aus der Gruppe von organischen Polymeren bestehend aus Oligomeren, Polymeren, Copolymeren, Blockcopolymeren und Pfropfcopolymeren vorzugsweise mit einem Gehalt im Bereich von 0,1 bis 90 Gew.-%, besonders bevorzugt im Bereich von 1 bis 80 Gew.-%, und
   - gegebenenfalls mindestens ein Additiv vorzugsweise mit einem Gehalt im Bereich von 0,1 bis 30 Gew.-%, besonders bevorzugt im Bereich von 1 bis 20 Gew.-%, enthält,
   - wobei alle diese Gehalte einschließlich gegebenenfalls weiterer, hier nicht genannter Zusätze, jedoch ohne Lösemittel, insgesamt 100 Gew.-% ergeben sowie
   - mindestens ein Lösemittel, über 100 Gew.-% hinaus angegeben.
Im Falle c):
   - Ein Bindersystem, das mindestens ein organisches Polymer enthält ausgewählt aus der Gruppe von organischen Polymeren bestehend aus Oligomeren, Polymeren, Copolymeren, Blockcopolymeren und Pfropfcopolymeren vorzugsweise mit einem Gehalt im Bereich von 10 bis 100 Gew.-%, besonders bevorzugt im Bereich von 40 bis 95 Gew.-%,
   - gegebenenfalls mindestens eine Art leitfähiges Polymer enthaltender Partikel, gegebenenfalls als mindestens eine Art anorganischer oder/und organischer Partikel, die mit leitfähigem Polymer beschichtet sind oder/und im Inneren leitfähiges Polymer enthalten, mit einem Gesamtgehalt an leitfähiges Polymer enthaltenden Partikeln vorzugsweise im Bereich von 0,1 bis 50 Gew.-%, besonders bevorzugt im Bereich von 1 bis 30 Gew.-%, wobei das mindestens eine leitfähige Polymer ausgewählt ist aus der Gruppe von leitfähigen Polymeren bestehend aus Oligomeren, Polymeren, Copolymeren, Blockcopolymeren oder/und Pfropfcopolymeren mit einem Gehalt an leitfähigen Polymeren vorzugsweise im Bereich von 0,1 bis 30 Gew.-%, besonders bevorzugt im Bereich von 0,5 bis 20 Gew.-%, in das mindestens eine Art beweglicher korrosionsschützender Anionen eingebaut ist, und
   - gegebenenfalls mindestens ein Additiv vorzugsweise mit einem Gehalt im Bereich von 0,1 bis 30 Gew.-%, besonders bevorzugt im Bereich von 1 bis 20 Gew.-%, enthält,
   - wobei alle diese Gehalte einschließlich gegebenenfalls weiterer, hier nicht genannter Zusätze, jedoch ohne Lösemittel, insgesamt 100 Gew.-% ergeben sowie
   - mindestens ein Lösemittel, über 100 Gew.-% hinaus angegeben.

Vorzugsweise liegt der Gehalt der Zusammensetzung a), b) oder/und c) an mindestens einer Art leitfähiges Polymer enthaltenden Partikeln im Bereich von 1 bis 99 Gew.-%, im Bereich von 5 bis 95 Gew.-%, im Bereich von 10 bis 90 Gew.-%, im Bereich von 15 bis 85 Gew.-%, im Bereich von 20 bis 80 Gew.-%, im Bereich von 25 bis 75 Gew.-% oder im Bereich von 30 bis 70 Gew.-%, besonders bevorzugt im Bereich von 35 bis 65 Gew.-%, im Bereich von 40 bis 60 Gew.-% oder im Bereich von 45 bis 55 Gew.-%. Hierbei können die besonders bevorzugten Bereiche auch zu kleineren oder größeren Werten verschoben sein, insbesondere davon abhängig, ob es sich um eine Zusammensetzung a), b) oder/und c) handelt und ob es sich vorwiegend oder gänzlich um beschichtete anorganische Partikel, leitfähiges Polymer enthaltende organische Partikel oder um vorwiegend oder gänzlich leitfähiges Polymer enthaltende Partikel handelt.

Vorzugsweise liegt der Gehalt der Zusammensetzung a), b) oder/und c) an mindestens einem leitfähigen Polymer im Bereich von 0,1 bis 99 Gew.-%, im Bereich von 0,5 bis 95 Gew.-%, im Bereich von 1 bis 90 Gew.-%, im Bereich von 1,5 bis 85 Gew.-%, im Bereich von 2 bis 80 Gew.-%, im Bereich von 2,5 bis 75 Gew.-% oder im Bereich von 3 bis 70 Gew.-%, besonders bevorzugt im Bereich von 3,5 bis 65 Gew.-%, im Bereich von 4 bis 60 Gew.-% oder im Bereich von 4,5 bis 55 Gew.-%, gegebenenfalls besonders bevorzugt im Bereich von 5 bis 60 Gew.-%, im Bereich von 10 bis 55 Gew.-%, im Bereich von 15 bis 50 Gew.-%, im Bereich von 20 bis 45 Gew.-%, im Bereich von 25 bis 40 Gew.-% oder im Bereich von 30 bis 35 Gew.-%. Hierbei können die besonders bevorzugten Bereiche auch zu kleineren oder größeren Werten verschoben sein, insbesondere davon abhängig, ob es sich um eine Zusammensetzung a), b) oder/und c) handelt und ob es sich vorwiegend oder gänzlich um beschichtete anorganische Partikel, leitfähiges Polymer enthaltende organische Partikel oder um vorwiegend oder gänzlich leitfähiges Polymer enthaltende Partikel handelt.

Vorzugsweise liegt der Gehalt der Zusammensetzung a), b) oder/und c) an Bindersystem im Bereich von 1 bis 99 Gew.-%, im Bereich von 5 bis 96 Gew.-%, im Bereich von 10 bis 92 Gew.-%, im Bereich von 15 bis 88 Gew.-%, im Bereich von 20 bis 84 Gew.-%, im Bereich von 25 bis 80 Gew.-% oder im Bereich von 30 bis 76 Gew.-%, besonders bevorzugt im Bereich von 35 bis 72 Gew.-%, im Bereich von 40 bis 68 Gew.-%, im Bereich von 45 bis 64 Gew.-% oder im Bereich von 50 bis 60 Gew-%. Hierbei können die besonders bevorzugten Bereiche auch zu kleineren oder größeren Werten verschoben sein, insbesondere davon abhängig, ob es sich um eine Zusammensetzung a), b) oder/und c) handelt und ob es sich vorwiegend oder gänzlich um beschichtete anorganische Partikel, leitfähiges Polymer enthaltende organische Partikel oder um vorwiegend oder gänzlich leitfähiges Polymer enthaltende Partikel handelt. Gegebenenfalls zugesetzte organische Monomere, thermische Vernetzer oder/und Photoinitiatoren werden ebenfalls zu den Bestandteilen des Bindersystems gezählt.

Vorzugsweise liegt der Gehalt der Zusammensetzung a), b) oder/und c) an Lösemittel(n), über den Gehalt an Feststoffen = 100 Gew.-% hinaus angegeben, im Bereich von 2 bis 4000 Gew.-%, im Bereich von 1 bis 2500 Gew.-%, im Bereich von 5 bis 3000 Gew.-%, im Bereich von 10 bis 800 Gew.-%, im Bereich von 2 bis 300 Gew.-%, im Bereich von 20 bis 2500 Gew.-% oder im Bereich von 30 bis 600 Gew.-%, besonders bevorzugt im Bereich von 1 bis 1500 Gew.-%, im Bereich von 2 bis 1200 Gew.-% oder im Bereich von 50 bis 600 Gew.-%, ganz besonders bevorzugt im Bereich von 30 bis 400 Gew.-%, im Bereich von 5 bis 160 Gew.-% oder im Bereich von 5 bis 80 Gew.-%.

Das Gewichtsverhältnis der Bestandteile in der Zusammensetzung a), b) oder/und c) zwischen (leitfähige Polymere enthaltenden Partikeln) : (Binder-system) liegt in manchen Ausführungsvarianten vorzugsweise bei 1 : (0,05 bis 30) und besonders bevorzugt bei 1 : (0,5 bis 20). Auch hierbei können die besonders bevorzugten Bereiche auch zu kleineren oder größeren Werten verschoben sein, insbesondere davon abhängig, ob es sich um eine Zusammensetzung a), b) oder/und c) handelt und ob es sich vorwiegend oder gänzlich um beschichtete anorganische Partikel, leitfähiges Polymer enthaltende organische Partikel oder um vorwiegend oder gänzlich leitfähiges Polymer enthaltende Partikel handelt.

Die Gehalte dieser Bestandteile in diesen Zusammensetzungen können grundsätzlich in weiten Grenzen variiert werden. Die Variation ist insbesonders von der Dicke der Beschichtung abhängig: Es können ultradünne, dünne, dicke oder sehr dicke Beschichtungen aufgebracht werden, die beispielsweise eine Schichtdicke im Bereich von 0,1 bis 10 nm, von > 1 bis 100 nm, von > 10 bis 1000 nm (1 µm), von > 100 nm bis 10 µm oder von > 0,5 µm bis 50 µm aufweisen. Falls anorganische oder/und organische Partikel eingesetzt werden, kann das Volumen- bzw. Gewichtsverhältnis von den Partikelkernen zu dem leitfähigen Polymer wesentlich eingehen. Es können auch Bestandteile mit geringer oder hoher Dichte ausgewählt werden. Ferner kann auch die spezifische Oberfläche der anorganischen Partikel sehr stark eingehen, wie z.B. bei SiO₂-Pulvern, die durch Flammenhydrolyse hergestellt sind.

Falls im Wesentlichen oder gänzlich leitfähiges Polymer enthaltende Partikel der Zusammensetzung zugesetzt werden, die weitgehend oder gänzlich aus leitfähigem Polymer bestehen, wird der Anteil an diesen Partikeln eher gering gehalten werden. Der Anteil an leitfähiges Polymer enthaltenden Partikeln wird meistens stärker zunehmen, je größer die Partikel sind oder/und je geringer das Verhältnis von leitfähigem Polymer zu Partikelkernen ist.

Es hat sich bei den ersten Versuchen herausgestellt, dass es für viele erfindungsgemäße Beschichtungen vorteilhaft ist, leitfähiges Polymer enthaltende Partikel einzusetzen, die eine mittlere Partikelgröße im Bereich von 10 bis 200 nm aufweisen, insbesondere bei anorganischen oder/und organischen Partikeln. Das Verhältnis der Gehalte an leitfähigem Polymer zu den Gehalten an anorganischen oder/und organischen Partikelkernen kann hierbei auch in weiten Grenzen variiert werden, vorzugsweise im Bereich von 1 : (0,05 bis 20) und besonders bevorzugt bei 1 : (0,2 bis 5).

Darüber hinaus kann das leitfähige Polymer bzw. die leitfähiges Polymer enthaltenden Partikel gegebenenfalls auch einen geringen Gehalt oder Spuren an jeweils mindestens einem Tensid, einem Schutzkolloid, einem Säurefänger oder/und einem Komplexbildner enthalten. Der Zusammensetzung a), b) oder/und c) kann bei Bedarf jeweils mindestens ein Additiv zugesetzt werden, gegebenenfalls mindestens ein Tensid wie z.B. jeweils mindestens ein nichtionisches, anionisches oder/und amphoteres Tensid, mindestens ein Schutzkolloid wie z.B. ein Polyvinylalkohol, mindestens ein Säurefänger wie z.B. Ammoniak bzw. eine schwache Base wie z.B. ein Acetat oder/und mindestens ein Komplexbildner wie z.B. Ammoniak, Citronensäure, EDTA bzw. Milchsäure. Der Gehalt des mindestens einen Tensids liegt vorzugsweise bei 0,01 bis 1,5 Gew.-%. Der Gehalt des mindestens einen Schutzkolloids, des mindestens einen Säurefängers oder/und des mindestens einen Komplexbildners liegt jeweils vorzugsweise bei 0,01 bis 0,8 Gew.-%.

### Verfahrenstechnische Varianten bei der Herstellung der Zusammensetzung und der Beschichtung:

Leitfähiges Polymer enthaltende Partikel können bei Bedarf - gerade im trockenen Zustand - vor dem Dispergieren oder vor dem Zusetzen zu der Zusammensetzung gewaschen, getrocknet oder/und erwärmt werden. Als Lösemittel wird bevorzugt ein Gemisch mit höherem Wassergehalt oder nur Wasser eingesetzt. In einer Reihe von Varianten ist es jedoch förderlich oder notwendig, einen geringen Zusatz an organischem Lösemittel, insbesondere mindestens einen Alkohol, zuzugeben, vor allem 1 bis 10 Gew.-% an mindestens einem Alkohol wie z.B. Ethanol, Propanol oder/und Isopropanol.

Besonders bevorzugt ist es, die anorganischen oder/und organischen Partikel nicht im trockenen Zustand, sondern als Dispersion der Zusammensetzung zuzugeben. Hierbei ist es vorteilhaft, wenn die trockenen Pulver Ladungen enthalten, die sich im Lösemittel verteilen und zur Stabilisierung der Dispersion beitragen. Die stabile Dispersion der anorganischen oder/und organischen Partikel kann dabei ohne oder mit einem Zusatz an Ladungsträgern erfolgen. Die Redispergierung kann beispielsweise mit Dissolver, Kugelmühle, Perlmühle oder/und Ultraturrax erfolgen. Hierbei ist es vorteilhaft, wenn die Partikeloberflächen teilweise oder möglichst vollständig mit Binder benetzt werden. Ganz besonders bevorzugt ist es, wenn die Partikel enthaltende Dispersion einer Dispersion zugesetzt wird, die einen ähnlichen pH-Wert wie die übrige, in diesem Stadium teilweise oder vollständig zusammengemischte Zusammensetzung aufweist. Ganz besonders bevorzugt ist es auch, wenn die Binder des Bindersystems oder/und die leitfähiges Polymer enthaltenden Partikel, insbesondere die organischen Partikel, so zugesetzt werden, dass in der Zusammensetzung im Wesentlichen keine oder gar keine chemische Reaktion oder/und Polymerisation insbesondere der organischen Bestandteile der Zusammensetzung bis zur Abgabe von wesentlichen Anteilen an Lösemittel wie z.B. Wasser auftritt.

In manchen Ausführungsvarianten werden beim Zusammenmischen der Bestandteile zu der Zusammensetzung zuerst die mindestens eine Flüssigkeit und die anorganischen oder/und organischen Partikel und danach das Bindersystem vorgelegt.

Vorzugsweise werden alle Bestandteile, die der Zusammensetzung beigemischt werden, jeweils in Form einer Lösung oder/und Dispersion der Zusammensetzung zugesetzt.

In anderen Ausführungsvarianten werden beim Zusammenmischen der Bestandteile zu der mindestens ein Lösemittel enthaltenden Zusammensetzung zuerst Anteile des Bindersystems und eventuell auch der Additive oder sogar das gesamte Bindersystem vorgelegt, bevor die anorganischen oder/und organischen Partikel zugesetzt werden. Besonders bevorzugt ist es, anfangs nur 3 bis 25 Gew.-% der Feststoffgehalte des Bindersystems der Zusammensetzung zuzusetzen, die bereits die anorganischen oder/und organischen Partikel enthält oder/und die dann dieser Stufe der Zusammensetzung zugesetzt werden. In dieser Stufe kann bei Bedarf die Rheologie der Dispersion angepasst oder/und eingestellt werden oder/und eine Scherung der Zusammensetzung z.B. durch Mahlen erfolgen.

Falls zuerst das gesamte Bindersystem zu der Zusammensetzung zugesetzt wird, kann es vorteilhaft sein, dann zuerst die Rheologie der Zusammensetzung anzupassen oder/und einzustellen und danach die anorganischen oder/und organischen Partikel zuzusetzen.

### Bewegliche korrosionsschützende Anionen:

Bewegliche korrosionsschützende Anionen haben im leitfähigen Polymer und in der Zusammensetzung der Beschichtung des Produktes die Aufgabe, die zur Ladungskompensation der bei der Oxidation auf den Polymerketten entstehenden elektrophilen Zentren die notwendigen Ladungen bereitzustellen sowie eine durch Adsorption auf Metalloberflächen einleitende korrosionsschützende Wirkung bereitzustellen.

Wenn einem Edukt-Gemisch bei der Präparation des leitfähigen Polymers keine Anionen zugesetzt werden, wird das leitfähige Polymer irgendwelche Anionen, die in der Dispersion vorhanden sind, in sein Gitter einbauen, kann dann aber keine beweglichen korrosionsschützenden Anionen einbauen. Es werden - falls überhaupt - dann häufig porösere, dünnere und schlechter elektrisch leitende Schichten auf den Partikeln ausgebildet.

Wenn ein Anion bei den weitaus meisten Untersuchungen des Standes der Technik zur Herstellung und Anwendung von leitfähigen Polymeren zugegeben wird, wird in der Regel die Elektroneutralität des leitfähigen Polymers während der Bildung erreicht. Außerdem werden durch das Anion bestimmte Eigenschaften des leitfähigen Polymers beeinflusst wie z.B. die elektrische oder ionische Leitfähigkeit sowie die Morphologie und die Austrittsarbeit (Oxidationspotenzial). Es wurde jetzt erkannt, dass durch das Anion auch ein Korrosionsschutz erzielt werden kann.

Das mindestens eine Anion weist vorzugsweise eine Wasserlöslichkeit oder eine Löslichkeit in dem mindestens einen polaren Lösemittel oder Lösemittelgemisch von mindestens 1 • 10⁻³ Mol/L auf, da sonst das Anion auch nicht mehr in das leitfähige Polymer (= Salz) eingebaut werden kann.

Es kann jedoch auch mindestens ein bewegliches korrosionsschützendes Anion, das gleichzeitig als Oxidationsmittel wirkt, wie Molybdat oder/und Wolframat, zusätzlich oder alternativ zu dem/den nicht oxidierend wirkenden beweglichen korrosionsschützenden Anion(en) in das leitfähige Polymer eingebaut sein.

Bei dem erfindungsgemäßen Verfahren ist mindestens eine Art der korrosionsschützenden beweglichen Anionen vorzugsweise mindestens eine auf Basis von Benzoat, Nitrosalicylat, Salicylat, Carboxylat, Wolframat, Titankomplexfluorid oder/und Zirkoniumkomplexfluorid, letztere jeweils als MeF₄ oder/und MeF₆, wobei auch andere stöchiometrische Verhältnisse auftreten können.

Bei dem erfindungsgemäßen Verfahren wird als die mindestens eine Art der korrosionsinhibierenden bzw. haftvermittelnden Anionen vorzugsweise ein Gemisch aus Anionen eingesetzt.

Vorzugsweise wird ein Zusatz an mindestens einem beweglichen korrosionsschützenden Anion in der Höhe von 1 bis 33 mol% in Bezug auf die Gehalte an Polymer-Einheit gewählt, vorzugsweise von 5 bis 33 mol%. Diese Zugabemengen entsprechen den Dotierungsgraden der leitfähigen Polymere. Andererseits können diese Anionen bei der Präparation des leitfähigen Polymers auch im Überschuss zugesetzt sein.

Mindestens eine Art Anionen kann insbesondere danach ausgewählt sein, dass diese Anionen in Wasser, in mindestens einem anderen polaren Lösemittel oder/und in einem auch mindestens ein nicht-polares Lösemittel enthaltenden Gemisch beweglich sind.

Neben dem mindestens einen beweglichen korrosionsschützenden Anion kann jedoch auch mindestens ein Anion ohne Korrosionsschutzwirkung oder/und ohne die Fähigkeit, in die Struktur eingebaut werden zu können oder/und aus der Struktur herauswandern zu können, im oder/und neben dem leitfähigen Polymer anwesend sein. Der Anteil derartiger Anionen sollte jedoch im Vergleich zu den sogenannten beweglichen korrosionsschützenden Anionen oft vorzugsweise nicht zu groß sein. Mit dem Oxidationsmittel, das oft für die Oxidation der Edukte zu leitfähigen Polymeren benötigt wird, wird teilweise auch ein weiteres Anion eingebracht wie z.B. bei dem Oxidationsmittel Peroxodisulfat. Wenn jedoch als Oxidationsmittel z.B. H₂O₂ und Fe^{2+/3+}-Salz verwendet wird, wird kein zusätzliches Anion eingebracht, wenn das Fe^{2+/3+}-Salz in katalytischen Mengen von meistens weniger als 10⁻⁴ Mol/L zugesetzt wird. Der Anteil der Anionen, der zu den beweglichen korrosionsschützenden Anionen gehört, sollte in vielen Ausführungsvarianten möglichst hoch gewählt sein, um eine hohe Korrosionsschutzwirkung zu erzielen.

Bei der Präparation des leitfähigen Polymers werden insbesondere alle Arten von beweglichen korrosionsschützenden Anionen vorzugsweise so ausgewählt, dass diese Anionen nicht zu groß sind, um die Mobilität dieser Anionen im leitfähigen Polymer und in benachbarten Substanzen nicht zu beeinträchtigen.

Vorzugsweise weist das mindestens eine bewegliche korrosionsschützende Anion einen Durchmesser auf, der nicht größer ist als die mittlere Porengröße des Porensystems des leitfähigen Polymers, wobei dieser Durchmesser vorzugsweise um mindestens 8 % kleiner oder sogar um mindestens 15 % kleiner ist als die mittlere Porengröße des Porensystems. Hierbei kann das Anion durch einen sehr hohen Anteil an Poren wie z.B. Porenkanälen insbesondere im leitfähigen Polymer beweglich sein und kann dadurch u.U. schneller wandern oder überhaupt erst wandern. Ein Anion, das sehr viel kleiner ist als die mittlere Porengröße des Porensystems kann auch mit höherer Wahrscheinlichkeit ungehindert oder wenig gehindert durch das Porensystem wandern, wenn eine Potenzialdifferenz durch den Gradienten der Differenz des Redoxpotenzials des leitfähigen Polymers und dem Korrosionspotenzial des korrodierenden Metalls vorliegt.

Wenn bei dem erfindungsgemäßen Verfahren Bindemittel-reiche Beschichtungen hergestellt werden, sollte das bewegliche korrosionsschützende Anion eine so geringe Größe haben, dass seine Beweglichkeit auch in den übrigen Bestandteilen der Beschichtung nicht oder nicht wesentlich behindert wird. Diese Anionen wandern bei einem korrosiven Angriff zum gestörten Bereich, der fast immer ein geringeres Potenzial als die intakte Grenzfläche aufweist.

Vielfach wird die elektrische Leitfähigkeit der Beschichtung auf den Partikeln und somit auch der Beschichtung auf der metallischen Oberfläche erhöht durch den Zusatz des mindestens einen beweglichen korrosionsschützenden Anions, das verschiedene Wertigkeitsstufen annehmen kann und das leicht in andere Wertigkeitsstufen wechselt.

Es können auch Anionen eingebaut sein, die einen Wertigkeitswechsel oder/und einen Ligandenaustausch (Koordinationswechsel) im gestörten Bereich erfahren wie z.B. ein Ligandenaustausch bei Hexafluorotitanat oder/und Hexafluorozirkonat. Vorteilhafterweise ist hiermit auch ein Löslichkeitswechsel verbunden, der dazu führt, dass das ursprünglich lösliche Anion im gestörten Bereich ausfällt bzw. eine korrosionsschützende Schicht bildet. Der Wertigkeitswechsel kann als Oxidation oder Reduktion auftreten. Vorzugsweise sind derartige Schichten Oxidschichten oder/und Schichten schwerlöslicher Salze. Bei Verwendung von Hexafluorotitanat oder/und Hexafluorozirkonat hat es sich als vorteilhaft erwiesen, wenn dem Gemisch zur Präparation des leitfähigen Polymers Flußsäure zugesetzt wurde.

Es wurde jetzt in Experimenten ermittelt, dass das mindestens eine bewegliche korrosionsschützende Anion wie z.B. TiF₆²⁻, ZrF₆²⁻, WO₄²⁻, WO₄⁴⁻ einen Ligandenaustausch, Wertigkeits- oder/und Löslichkeitswechsel erfährt und eine oxidische schützende Schicht im Bereich des Defektes oder/und im Bereich der Delaminationsfront ausbildet. Derartige Anionen sind ebenso wie die meisten Komplexsalze besonders vorteilhaft.

In Delaminationsversuchen in N₂-Atmosphäre konnte jetzt nachgewiesen werden, dass Molybdat-Ionen tatsächlich Potenzial-getrieben aus leitfähigem Polymer auf Basis von Polypyrrol freigesetzt werden und zum Defekt wandern, wo das Molybdat mit XPS ermittelt wurde.

Bei der Präparation des leitfähigen Polymers kann auch dem Gemisch als mindestens eine Art der haftvermittelnden Anionen vorzugsweise mindestens eine auf Basis von Phosphor enthaltenden Oxyanionen wie z.B. Phosphonat, Silan, Siloxan, Polysiloxan oder/und Tensid zugesetzt sein.

Bei der Präparation des leitfähigen Polymers kann auch dem Gemisch als mindestens eine Art der haftvermittelnden Anionen vorzugsweise mindestens eine auf Basis von Phosphor enthaltenden Oxyanionen wie z.B. Phosphonat, Silan, Siloxan, Polysiloxan oder/und Tensid zugesetzt sein.

Es kann auch als die mindestens eine Art der korrosionsinhibierenden oder/und haftvermittelnden Anionen vorzugsweise ein Gemisch von mindestes zwei Arten von Anionen in die Depotsubstanz eingebaut sein, ganz besonders bevorzugt eines auf Basis von mindestens einem der oben genannten korrosionsschützenden beweglichen Anionen mit mindestens einer Art der oben genannten haftvermittelnden Anionen.

Besonders bevorzugt ist es, Anionen auszuwählen, die analog zu Chromat schützende Substanzen bilden, die den gestörten Bereich - zumindest teilweise - sowohl anodisch, als auch kathodisch schützen. Hierbei werden Anionen bevorzugt ausgewählt, die einen Wertigkeitswechsel erfahren können oder/und komplexe Anionen, die zerfallen können.

Besonders vorteilhaft sind auch Anionen von Nebengruppenelementen mit höheren Oxidationsstufen wie z.B. 4+ oder 6+ eingebaut, insbesondere Oxyanionen. Diese können eine besonders hohe korrosionsschützende Wirkung auf einer zu schützenden metallischen Oberfläche entfalten, wenn diese mit einer organischen Beschichtung versehen wird, die leitfähig beschichtete Partikel enthält.

Bei korrosionsschützenden Anionen ist es vorteilhaft, wenn diese mit den im gestörten Bereich vorhandenen Kationen wie z.B. den aus der metallischen Oberfläche bei der Korrosion herausgelösten Kationen eine möglichst dichte, möglichst geschlossene Passivierungsschicht auf der metallischen Oberfläche bilden, wobei die mindestens eine gebildete Substanz der Passivierungsschicht nicht ionenleitend ist und bei dem an der Grenzfläche genutzten pH-Wertbereich stabil ist. Diese Substanzen können beispielsweise Oxide, Hydroxide und Phosphate bzw. deren Gemische sein.

Oft wird die elektrische Leitfähigkeit der auszubildenden Beschichtung erhöht durch eine Erhöhung der Konzentration des mindestens einen beweglichen korrosionsschützenden Anions im leitfähigen Polymer. Vorzugsweise beträgt das Verhältnis des Gehalts an dem mindestens einen Anion eingebaut im leitfähigen Polymer zum Gehalt an ursprünglich eingesetzten Edukt(en) (= Dotierungsgrad) mindestens 1 Mol %, vorzugsweise mindestens 5 Mol %, besonders bevorzugt mindestens 10 Mol %, ganz besonders bevorzugt mindestens 15 Mol %, insbesondere mindestens 20 Mol %. Theoretisch wären 50 Mol% erreichbar, werden aber in der Praxis offenbar nicht erzielt.

### Oxidationsmittel:

Oxidationsmittel haben im Edukt-Gemisch zur Herstellung des leitfähigen Polymers die Aufgabe, den z.B. nach einem kationisch-radikalischen Mechanismus stattfindenden Kettenaufbau zu starten und trotz Verbrauch aufrechtzuerhalten. Daher sind Oxidationsmittel dem Edukt-Gemisch in der Regel vorzugsweise über die Gehalte von 33 mol% hinaus überzudosieren. Für die Umsetzung des mindestens einen Edukts (Monomere oder/und Oligomere, die geeignet sind, Depotsubstanz, d.h. leitfähiges Polymer mit eingebauten Anionen, zu bilden) zu mindestens einem Produkt (= leitfähiges Polymer) sind Anionen für die Elektroneutralität des leitfähigen Polymers und gegebenenfalls Oxidationsmittel für die Polymerisation erforderlich. Vorzugsweise ist mindestens ein Oxidationsmittel zugesetzt, insbesondere dann, wenn nicht mindestens ein Anion auch gleichzeitig als Oxidationsmittel wirken konnte oder/und soweit nicht elektrochemisch oder/und photochemisch polymerisiert wird.

Das Oxidationsmittel für die chemische Umsetzung kann mindestens eines sein auf Basis von H₂O₂ wie z.B. Bariumperoxid, Peressigsäure, Perbenzoesäure, Permangansäure, Peroxomonoschwefelsäure, Peroxodischwefelsäure, Lewis-Säure, Molybdänsäure, Niobsäure, Tantalsäure, Titansäure, Wolframsäure, Zirkoniumsäure, Yttrium-haltiger Säure, Lanthanid-haltiger Säure, Fe³⁺-haltiger Säure, Cu²⁺-haltiger Säure, deren Salzen, deren Estern oder/und deren Gemischen.

Als Oxidationsmittel kann dabei beispielsweise mindestens eine Verbindung auf Basis von Säure(n), deren Salz(e) in mehreren Wertigkeitsstufen vorliegen wie z.B. Eisensalz(e), auf Basis von Peroxid(en) oder/und Persäure(n) wie z.B. Peroxodisulfat eingesetzt werden.

Bei Oxidationsmitteln, die mehrere Wertigkeiten annehmen können und diese mehr oder minder leicht wechseln können, ist dabei oft ein geeigneter, meist etwas niedrigerer oder mittlerer pH-Wert zu wählen. Die pH-Werte liegen in vielen Fällen dann im Bereich von 2 bis 6, insbesondere im Bereich von 2 bis 4 oder von 3 bis 5. Außerdem ist es wichtig, darauf zu achten, dass das Oxidationspotenzial des Oxidationsmittels höher ist als das Oxidationspotenzial des zu oxidierenden Eduktes oder dass es zu diesem zumindest gleich groß ist.

Vorzugsweise sind die leitfähige Polymere enthaltenden Partikel, die der erfindungsgemäßen Zusammensetzung zugesetzt werden, frei oder im Wesentlichen frei von Oxidationsmitteln.

### Leitfähige Polymer enthaltende Partikel:

Die Zusammensetzung, die Gehalte und der Aufbau der organischen oder/und anorganischen Partikel können in weiten Bereichen variieren.

Die mittlere Größe der Partikel ist im Bereich bis hinab zu 0,1 µm mittlerer Größe im Rasterelektronenmikroskop bei geeigneter Präparation unter getrennter Bewertung und Zählung der Einzelteile von Agglomeraten und unter Bewertung und Zählung von Aggregaten als ein großes Einzelteilchen zu zählen, während die mittlere Größe im Partikelgrößenbereich von 5 nm bis kleiner 0,1 µm mit einem Laserdoppleranemometer des Typs Zeta-Sizer der Fa. Malvern Instruments bestimmt werden soll, während bei noch kleineren mittleren Partikelgrößen die Elektronenbeugung zur Ermittlung bevorzugt ist. Hierbei kann für die rasterelektronenmikroskopisch erfassten Teilchen näherungsweise erreicht werden, dass zerteilbare Agglomerate, die trennbare Einzelteilchen enthalten, als jeweils mehrere Einzelteilchen bewertet und gezählt werden, was in etwa der Wirkung einer schwachen Mahlung entsprechen kann.

Die Größe der organischen oder anorganischen Partikel sollte sich in der Regel während des Beschichtens der Partikel und möglichst auch bei der Herstellung, beim Aufbringen und beim Trocknen der Zusammensetzung oder/und bei nachfolgenden Behandlungen der Beschichtung auf metallische Oberflächen nicht wesentlich verändern.

Die Partikel können gegebenenfalls vorbeschichtet, chemisch modifiziert oder/und physikalisch modifiziert sein. So kann beispielsweise bei SiO₂-Partikeln zwischen sauren und basischen, hydrophilen und hydrophoben Partikeln unterschieden werden.

Hierbei können die Partikel in mindestens einer Form vorliegen ausgewählt aus: Im Wesentlichen in Form von Clustern, Nanopartikeln, Nanoröhrchen, jeweils näherungsweise in Form von isometrischen, faserförmigen, nadelförmigen, plättchenförmigen, diskusförmigen oder/und knäuelförmigen Partikeln, jeweils näherungsweise in Form von faserigen, knäuelartigen oder/und porösen Strukturen, massiven Partikeln, als beschichtete oder/und gefüllte Partikel, als Hohlpartikel oder/und in schwammähnlichen Partikeln. Besonders bevorzugt sind jeweils im Wesentlichen flächig oder linealförmig ausgebildete Barrierepartikel bzw. beschichtete Pigmente wie z.B. beschichtete Schichtsilicate.

Insbesondere bei anorganischen Clustern, Nanopartikeln oder kleinen Partikeln sowie solchen, die leitfähige Polymere enthalten, ist es vorteilhaft, die Agglomerationsneigung durch geeignete Maßnahmen wie z.B. Zusatz von Pyrophosphat zu der wässerigen Dispersion des Gemisches zu unterdrücken und gut zu dispergieren.

Insbesondere die anorganischen Partikel können bei Bedarf vor dem Versetzen mit einer Flüssigkeit oder vor dem Zusetzen zu dem Gemisch für die Umsetzung zu leitfähigen Polymeren oder zu der Zusammensetzung für die Beschichtung metallischer Oberflächen im weitgehend oder gänzlich trockenen Zustand oder in einer flüssigen Dispersion gemahlen, getrocknet, geglüht oder/und redispergiert werden.

Die Schichtdicke der Schicht des leitfähigen Polymers auf den Partikeln kann in breiten Bereichen variiert werden. Vorzugsweise sind die Schichtdicken oder/und die Partien im Inneren der Partikel im Bereich von 1 bis 200 nm, besonders bevorzugt im Bereich von 2 bis 100 nm, vor allem im Bereich von 1 bis 40 oder von 3 bis 80 nm. Diese Schichten werden unter Umständen bei anorganischen Partikeln dünner als bei organischen Partikeln hergestellt. Dickere Schichten sind zwar grundsätzlich denkbar und möglich, könnten aber ihre Grenzen finden, wenn die beschichteten Partikel nicht mehr dispergiert werden können. Die Schichtdicke dieser Hüllen ist insbesondere abhängig von der Reaktionszeit, der Konzentration der Edukte und den zur Verfügung stehenden Grenzflächen zwischen Partikeln und flüssigen Komponenten des Edukt-Gemisches.

Vorteilhafterweise werden beschichtete anorganische Partikel jedoch oft anders als beschichtete organische Partikel vor dem Mischen mit der Bindemittel-haltigen Matrix redispergiert, insbesondere, wenn Agglomerate oder/und Aggregate vorliegen. Anorganische Partikel als Kerne zur Umhüllung mit leitfähigen Polymeren bieten sich andererseits an, weil sie auf einfache Weise z.B. in eine organische Zusammensetzung wie z.B. einen Lack u.a. durch Mischen oder/und leichtes Mahlen eingebracht werden können.

In einem erfindungsgemäßen Gemisch oder in einer Zusammensetzung zum Beschichten metallischer Oberflächen mit Partikeln kann sich jeweils mindestens eine der folgenden Arten an leitfähiges Polymer enthaltenden Partikel befinden:
1.) Typische Core-Shell-Partikel (beschichtete Partikel), die teilweise oder vollständig mit leitfähigem Polymer beschichtet sind, wobei es sich hierbei häufig um anorganische beschichtete Partikel handelt, oder/und
2.) Partikel, die zumindest teilweise im Inneren oder auch im Inneren leitfähiges Polymer enthalten, wobei es sich hierbei häufig um organische Partikel handelt, die oft zusammen mit dem leitfähigen Polymer hergestellt worden sind.

Darüber hinaus können gegebenenfalls auch enthalten sein:
3.) leitfähiges Polymer, das beliebig geformt bzw. hergestellt sein kann, das partikulär vorliegt und gegebenenfalls separat oder/und ausnahmsweise nicht um einen Partikelkern herum gebildet worden ist, also nicht als Beschichtung auf Partikeln ausgebildet worden ist; gegebenenfalls kann leitfähiges Polymer auch in den Partikeln, die zu beschichten sind, auftreten, insbesondere auch dann, wenn diese noch wachsen, miteinander zusammenwachsen oder/und ausheilen,
4.) sogenannte "Haftvermittler-Partikel" aus leitfähigem Polymer, das mindestens eine Haftung vermittelnde chemische Gruppe am Molekül wie z.B. eine Phosphonat-Gruppe aufweist,
5.) Bruchstücke a) von Partikelhüllen aus leitfähigem Polymer oder/und b) von leitfähiges Polymer enthaltenden Partikeln oder/und
6.) separat ohne Partikelkerne entstandene, leitfähiges Polymer enthaltende Partikel, die im Wesentlichen oder gänzlich aus leitfähigem Polymer bestehen.

Die leitfähiges Polymer enthaltenden Partikel sind insbesondere ausgewählt aus der Gruppe bestehend aus 1.) typischen Core-Shell-Partikeln (beschichteten Partikeln), die teilweise oder vollständig mit leitfähigem Polymer beschichtet sind und 2.) Partikeln, die zumindest teilweise im Inneren leitfähiges Polymer enthalten wie viele organische Partikel.

Die mittlere Partikelgröße der leitfähiges Polymer enthaltenden Partikel einschließlich deren Ansammlungen wie Agglomeraten oder/und Aggregaten liegt vorzugsweise im Bereich von 10 nm bis 20 µm oder/und ohne Agglomerate und ohne Aggregate im Bereich von 10 nm bis 10 µm letzteren Fall können die Partikel oder die sie enthaltende Zusammensetzung entsprechend zerkleinert worden sein z.B. durch Mahlen oder/und können bei der Bestimmung der Partikelgrößen die Agglomerate und Aggregate nicht mitgezählt worden sein.

Alle solche Partikel können gegebenenfalls auch in die erfindungsgemäße Beschichtung eingebaut werden. Sie alle werden im Sinne dieser Anmeldung unter dem Begriff "beschichtete Partikel" oder "leitfähiges Polymer enthaltende Partikel" zusammengefasst. Der Gehalt dieser einzelnen Partikelarten kann vergleichsweise klein oder groß sein. Die Aussagen zum Beschichtungsverfahren gelten in entsprechender Weise auch für alle diese anderen Varianten "beschichteter Partikel".

### Organische Partikel mit Gehalt an leitfähigem Polymer:

Bei dem Material der organischen Partikel wird unter "Polymer" mindestens ein Polymer ausgewählt aus Homopolymer(en), Copolymer(en), Blockcopolymer(en) oder/und Pfropfcopolymer(en) verstanden. Diese Polymere können aus dispergierbaren oder/und nichtdispergierbaren Partikeln bestehen. Diese Partikel können als Kerne für Core-Shell-Partikel verwendet werden. Insbesondere bei der Präparation der organischen Partikel kann es dazu kommen, dass das leitfähige Polymer teilweise, weitgehend oder vollständig im Inneren dieser Partikel eingelagert wird, wobei auch derartige Partikel hier als "beschichtete Partikel" und als Core-Shell-Partikel im Sinne dieser Anmeldung angesehen werden.

Insbesondere bestehen die organischen Polymere im Wesentlichen aus folgenden Polymeren:

Die leitfähiges Polymer enthaltenden organischen Partikel sind vorzugsweise vorwiegend oder gänzlich solche, die ausgewählt sind aus der Gruppe bestehend aus Polymeren auf der Basis von Styrol, Acrylat, Methacrylat, Polycarbonat, Cellulose, Polyepoxid, Polyimid, Polyether, Polyurethan, Siloxan, Polysiloxan, Polysilan und Polysilazan.
1. Polymer auf der Basis von Styrol, Acrylat oder/und Methacrylat, letztere beide Varianten im Folgenden (Meth)acrylat genannt. Sie können insbesondere im Wesentlichen aus (Meth)Acrylat(en) ausgewählt aus (Meth)Acrylat, Butyl(meth)acrylat, Hydroxy(meth)alkylacrylat, Glycidyl(meth)acrylat und Ethylenglycol(meth)acrylat oder/und im Wesentlichen aus Styrol oder/und im Wesentlichen aus substituierten Styrolen jeweils unabhängig voneinander mit Substituenten wie z.B. Hydroxid, Alkyl, Alkoxyl oder/und Sulfonat bestehen.
2. Polymer auf der Basis von Polycarbonat: Sie können insbesondere im Wesentlichen aus organischem/en Carbonat(en) basierend auf Bisphenol A, B, C, F oder/und Z und gegebenenfalls beispielsweise substituiert mit Alkyl, Alkoxy oder/und Aryl bestehen.
3. Polymer auf der Basis von Cellulose: Sie können insbesondere im Wesentlichen aus Cellulose(n) ausgewählt aus Alkylcellulose und Hydroxyalkylcellulose bestehen, gegebenenfalls substituiert mit Substituenten wie z.B. Hydroxid, Alkyl, Alkoxy, Carboxylat oder/und Sulfonat.
4. Polymer auf der Basis von Polyepoxiden: Sie können insbesondere im Wesentlichen aus Epoxid(en) ausgewählt aus unsubstituierten oder/und aus substituierten mit Substituenten wie z.B. Hydroxid, Alkyl, Alkoxyl oder/und Sulfonat bestehen.
5. Polymer auf der Basis von Polyolefinen: Sie können insbesondere im Wesentlichen aus Polyolefin(en) ausgewählt aus Ethylen(en), Propylen(en), Isobutylen, Butylen(en) und 4-Methylpenten oder/und aus mindestens einem substituierten Polyolefin mit Substituenten wie z.B. Alkyl, Amino oder/und Hydroxy bestehen.
6. Polymer auf der Basis von Polyimid: Sie können insbesondere im Wesentlichen aus Pol(imiden) ausgewählt aus unsubstituierten oder/und aus substituierten Poly(imiden) mit Substituenten wie z.B. Hydroxid, Alkyl, Alkoxyl oder/und Sulfonat bestehen.
7. Polymer auf der Basis von Polyethern: Sie können insbesondere im Wesentlichen aus Epoxiden ausgewählt aus Ethylenoxid(en) und Propylenoxid(en) oder/und aus substituierten Epoxiden mit Substituenten wie z.B. Alkyl, Aryl, Amino oder/und Chlorid bestehen.
8. Polymer auf der Basis von Polyurethan: Sie können insbesondere im Wesentlichen aus Polyurethan(en) ausgewählt aus unsubstituierten oder/und aus substituierten Polyurethan(en) mit Substituenten wie z.B. Hydroxid, Alkyl, Alkoxyl oder/und Sulfonat bestehen. Sie können insbesondere über Diisocyanate und Diole bzw. über Diisocyanate und primäre/sekundäre Diamine hergestellt werden, wobei als Diole hydroxyterminierte Diole, Polyester, Polyether, Polycarbonate oder/und Oligo(meth)acrylate und als Diamine insbesondere Alkyldiamine mit n = 5 bis 12 eingesetzt werden können.
9. Polymer auf der Basis von Siloxanen oder/und Polysiloxanen, auch von Siliconen: Sie können insbesondere im Wesentlichen aus unsubstituierten oder/und aus substituierten Siloxanen oder/und Polysiloxanen mit Substituenten wie z.B. Hydroxid, Alkyl, Alkoxyl, Amino, Mercapto oder/und Sulfonat bestehen.
10. Polymer auf der Basis von Polysilanen oder/und Polysilazanen: Sie können im Wesentlichen aus unsubstituierten oder/und aus substituierten Polysilanen oder/und Polysilazanen mit Substituenten wie z.B. Hydroxid, Alkyl, Alkoxyl oder/und Sulfonat bestehen. Beispielsweise können sie im Wesentlichen aus Poly(cyclohexylmethyl)silan(en), Poly(dihexyl)silan(en) oder/und Poly(phenylmethyl)silan(en) bzw. im Wesentlichen aus Poly(1,2-dimethyl)silazan(en) oder/und Poly(1,1-dimethyl)silazan(en) bestehen.

Für die Beschichtung von organischen Partikeln bzw. ihre Herstellung zusammen mit der Herstellung von leitfähigem Polymer, so dass die daraus entstehenden organischen Partikel oft einen erhöhten Anteil an leitfähigem Polymer in ihrem Inneren aufweisen, sind jedoch insbesondere Kerne auf Basis von dispergierbaren organischen Polymeren wie z.B. Polyacrylaten, Polystyrolen, Polyurethanen oder/und Polysiloxanen geeignet. Diese Polymere können auch in einem Verfahren zur Beschichtung von organischem Polymer mit leitfähigem Polymer behandelt werden, bei dem zuerst - insbesondere in der gleichen Lösung bzw. Dispersion oder/und im gleichen Sol bzw. Gel - die organischen Partikel hergestellt werden und danach diese organischen Partikel erfindungsgemäß beschichtet werden oder bei dem die organischen Partikel und das leitfähige Polymer im Wesentlichen gleichzeitig oder gleichzeitig hergestellt werden, so dass die hieraus entstehenden Partikel oft Einlagerungen von leitfähigem Polymer in ihrem Inneren und teilweise auch leitfähiges Polymer an ihrer Oberfläche aufweisen. Dieses Verfahren ist vorzugsweise ein Eintopfverfahren oder/und ein im Wesentlichen kontinuierliches Verfahren. Die Herstellung der organischen Partikel beruht dabei vorzugsweise auf der Emulsionspolymerisation, insbesondere frei von Tensiden. Die Verfahren, Möglichkeiten und Produkte der Emulsionspolymerisation sind grundsätzlich bekannt. Diese emulsionspolymerisierten organischen Partikel liegen aufgrund der vorherigen Herstellung üblicherweise in einer stabilen Dispersion vor.

Besonders vorteilhaft ist es in vielen Ausführungsformen, die organischen Partikel zusammen mit dem leitfähigen Polymer herzustellen. Hierbei ist es möglich, Partikel herzustellen mit definierten engen Partikelgrößenverteilungen, mit mono- oder bimodalen Partikelgrößenverteilungen oder/und Partikel, bei denen organisches Polymer und leitfähiges Polymer innig miteinander vermischt oder verwachsen sind. Hierbei können beispielsweise mono- oder bimodale Verteilungen im Bereich von 30 bis 400 nm Größe ausgebildet werden. Es können aber auch erst organische Partikel hergestellt werden, die anschließend oder erst in einer Spätphase mit leitfähigem Polymer beschichtet bzw. im oberflächennahen Bereich vermischt werden.

Bei der Herstellung von organischen Partikeln ist darauf zu achten, dass die Ausbildung der Micellen nicht stärker beeinträchtigt wird, was insbesondere durch ein ungeeignetes Oxidationsmittel, durch zu hohe Gehalte an Ionen oder/und durch zu starkes Rühren möglich ist. Denn die organischen Partikel bilden sich hierbei in vielen Ausführungsformen aus Micellen. Auch hier ist auf die chemische Verträglichkeit der zuzusetzenden Komponenten zu achten. Die Polymerisation kann auch hier chemisch, elektrochemisch oder/und photochemisch erfolgen.

Grundsätzlich ist eine Beschichtung von allen Arten organischer Partikel nach mindestens einem Beschichtungsverfahren mit leitfähigen Polymeren möglich, gegebenenfalls durch Verkapselung schlecht oder nicht dispergierbarer Partikel. Dispergierbar im Sinne dieses Textabschnittes bedeutet dabei die Möglichkeit, eine stabile Dispersion der organischen Partikel in einer Lösung bzw. Dispersion oder/und in einem Sol bzw. Gel zu haben, so dass im Wesentlichen keine Agglomerationen auftreten.

### Anorganische Partikel als Kerne für beschichtete Partikel:

Vorzugsweise bestehen die anorganischen Partikel im Wesentlichen aus mindestens einer anorganischen Substanz, insbesondere im Wesentlichen aus jeweils mindestens einem Borid, Carbid, Carbonat, Cuprat, Ferrat, Fluorid, Fluorosilicat, Niobat, Nitrid, Oxid, Phosphat, Phosphid, Phosphosilicat, Selenid, Silicat, Aluminium-haltigen Silicat, Sulfat, Sulfid, Tellurid, Titanat, Zirkonat, aus mindestens einer Art von Kohlenstoff, aus mindestens einem Gesteinsmehl, aus mindestens einem Pulver von Glas, Fritte, glasartigem Material, amorphem Material oder/und Verbundmaterial, aus mindestens einer Legierung oder/und aus mindestens einem Metall - soweit die Legierung oder/und das Metall nicht bereits bei der Herstellung des leitfähigen Polymers korrodiert und kein Lokalelement bildet - oder/und deren Mischkristallen, deren Verwachsungen oder/und deren Gemischen.

Die anorganischen Partikel können im Wesentlichen aus mindestens einer Substanz, insbesondere im Wesentlichen aus jeweils mindestens einem Erdalkalicarbonat, Erdalkalititanat, Erdalkalizirkonat, SiO₂ Silicat wie z.B. Aluminium-haltigen Silicat, Glimmer, Tonmineral, Zeolith, schwerlöslichen Sulfat wie Bariumsulfat oder Calciumsulfathydrat, aus Flakes z.B. auf Basis von SiO₂ oder/und Silicat(en), aus Oxid(en) mit einem Gehalt an Aluminium, Eisen, Kalzium, Kupfer, Magnesium, Titan, Zink, Zinn oder/und Zirkonium bestehen.

Besonders feinkörnige Partikel können beispielsweise über ein Sol oder/und ein Gel wie z.B. ein Kieselsol hergestellt werden. Der Vorteil der Beschichtung eines Sols liegt in der hohen Beweglichkeit der Komponenten trotz hoher Konzentrationen. Derartige Partikel haben oft eine mittlere Partikelgröße im Bereich von 10 bis 120 nm. Aufgrund der Feinkörnigkeit der dabei gebildeten Partikel ergibt sich insbesondere bei dünner Beschichtung mit einer Hülle eine besonders gleichmäßige Verteilung der leitfähigen Polymere.

Gegebenenfalls kann es auch bei der Präparation derartiger anorganischer Partikel dazu kommen, dass das leitfähige Polymer teilweise, weitgehend oder vollständig im Inneren dieser Partikel eingelagert wird, wobei auch derartige Partikel hier als "beschichtete Partikel" und als Core-Shell-Partikel im Sinne dieser Anmeldung angesehen werden.

In manchen Ausführungsformen sind engere Partikelgrößenverteilungen, als sie oft bei anorganischen Partikeln auftreten, besonders bevorzugt. Diese können z.B. durch Mischen verschiedener Verteilungen, durch Sieben bzw. Sichten oder durch Mahlen erzeugt werden.

Besonders bevorzugt sind anorganische Partikel, die im Wesentlichen plättchenförmig, im Wesentlichen linealförmig oder/und im Wesentlichen nadelförmig ausgebildet sind. Damit können sie auch stärker als Barrierepartikel wirken.

Anorganische Partikel können teilweise auch in einer stabilen Dispersion vorliegen, insbesondere abhängig von Partikelgröße, Konzentration, Dichte, Elektrolytgehalt usw..

### Monomere/Oligomere zur Herstellung von leitfähigem Polymer:

Zur Ausbildung der leitfähigen Polymere ist ein Zusatz von Monomeren oder/und Oligomeren zu dem Edukt-Gemisch erforderlich, die geeignet sind, zu leitfähigen Polymeren umgesetzt werden zu können. Die Monomere oder/und Oligomere werden als "Edukt(e)" bezeichnet. Die Monomere oder/und Oligomere werden vorzugsweise ausgewählt aus Monomeren oder/und Oligomeren anorganischer oder/und organischer Natur ausgewählt aus Aromaten oder/und ungesättigten Kohlenwasserstoff-Verbindungen wie z.B. Alkinen, Heterocyclen, Carbocyclen, deren Derivaten oder/und deren Kombinationen, die geeignet sind, hieraus elektrisch leitfähiges Oligomer/Polymer/Copolymer/Blockcopolymer/Pfropfcopolymer zu bilden, besonders bevorzugt unsubstituierte oder/und substituierte Heterocyclen mit X = N oder/und S.

Besonders bevorzugt ist ein Zusatz von unsubstituierten bzw. substituierten Verbindungen auf Basis von Imidazol, Phenanthren, Pyrrol, Thiophen oder/und Thiophenol.

Generell kann die Substitution der Monomere oder/und Oligomere bzw. der daraus entstehenden/entstandenen Oligomere, Polymere, Copolymere, Blockcopolymere oder/und Pfropfcopolymere insbesondere durch Wasserstoff (H), Hydroxyl (OH), Halogen (Br/Cl/F), Alkoxy (O-Alkyl), Alkyl (CₓH_{y}), Carboxy (COH), Carboxylat (COOH), Amin (NH₂), Amino (NH₃), Amid (CONH₂), primäres Ammonium (NRH₃⁺), lmin (NH), Imid (COHNH), Phosphonat (PO₃H₂), Diphosphonat, Mercapto- (SH), Sulfon (SO₂H), Sulfonat (SO₃H), Aryl ((C₆H₅)ₙ) oder/und unverzweigten bzw. verzweigten Alkylketten ohne oder mit weiteren Substituenten erfolgen bzw. erfolgt sein, wobei die Substituenten vorzugsweise nicht zu groß sein sollten.

Vorzugsweise ist/sind dem Gemisch Edukt(e) zur Herstellung des leitfähigen Polymers zugesetzt, bei dem mindestens ein Edukt eine lockerere Molekülstruktur aufweist oder/und bei dem mindestens eines der gebildeten leitfähigen Polymere eine lockerere Molekülstruktur aufweist, insbesondere so, dass dies zu einer größeren mittleren Porengröße (oft als Molekülkanalgröße) des Porensystems des leitfähigen Polymers führt.

Vorzugsweise wird dies erreicht durch Verwendung mindestens eines Eduktes mit mindestens einer eingebauten Seitenkette wie z.B. einer Alkylkette von mindestens 1 C-Atom wie z.B. beim Einbau einer CH₃-Gruppe oder insbesondere von mindestens 2 oder mindestens 4 C-Atomen oder/und mindestens eines Ringsystems, das insbesondere mit organischen Gruppen gebildet wird wie z.B. durch Ankondensieren einer Brücke eines Ethers, der ein Ringsystem bildet.

Das mindestens eine Edukt kann insbesondere ausgewählt werden aus unsubstituierten oder/und substituierten Verbindungen auf der Basis von Imidazol, Phenanthren, Pyrrol, Thiophen oder/und Thiophenol, unter den unsubstituierten Edukten wird insbesondere Pyrrol bevorzugt. Ganz besonders bevorzugt sind unsubstituierte bzw. substituierte Verbindungen ausgewählt aus Monomeren oder/und Oligomeren auf Basis von Bithiophenen, Terthiophenen, Alkylthiophenen wie z.B. Methylthiophen oder/und Ethylthiophen, Ethylendioxythiophen, Alkylpyrrolen wie z.B. Methylpyrrol oder/und Ethylpyrrol oder/und Polyparaphenylen. Besonders bevorzugt sind Edukte, aus denen substituierte dendritische oder/und leiterartige Polymere hergestellt werden können. Gegebenenfalls wird auch mindestens ein Edukt vorher gesondert hergestellt oder/und der Zusammensetzung zur Beschichtung metallischer Oberflächen in seltenen Fällen zugesetzt. Üblicherweise wird jedoch dieser Zusammensetzung mindestens eine Depotsubstanz zugesetzt, jedoch meistens frei oder im Wesentlichen frei von Edukt(en).

Unter den substituierten Edukten ist besonders bevorzugt mindestens eine Verbindung ausgewählt aus Benzimidazolen, 2-Alkylthiophenolen, 2-Alkoxythiophenolen, 2,5-Dialkylthiophenolen, 2,5-Dialkoxythiophenolen, 1-Alkylpyrrolen insbesondere mit 1 bis 16 C-Atomen, 1-Alkoxypyrrolen insbesondere mit 1 bis 16 C-Atomen, 3-Alkylpyrrolen insbesondere mit 1 bis 16 C-Atomen, 3-Alkoxypyrrolen insbesondere mit 1 bis 16 C-Atomen, 3,4-Dialkylpyrrolen insbesondere mit 1 bis 16 C-Atomen, 3,4-Dialkoxypyrrolen insbesondere mit 1 bis 16 C-Atomen, 1,3,4-Trialkylpyrrolen insbesondere mit 1 bis 16 C-Atomen, 1,3,4-Trialkoxypyrrolen insbesondere mit 1 bis 16 C-Atomen, 1-Arylpyrrolen, 3-Arylpyrrolen, 1-Aryl-3-alkylpyrrolen insbesondere mit 1 bis 16 C-Atomen, 1-Aryl-3-alkoxypyrrolen insbesondere mit 1 bis 16 C-Atomen, 1-Aryl-3,4-Dialkylpyrrolen insbesondere mit 1 bis 16 C-Atomen, 1-Aryl-3,4-Dialkoxypyrrolen insbesondere mit 1 bis 16 C-Atomen, 3-Alkylthiophenen insbesondere mit 1 bis 16 C-Atomen, 3-Alkoxythiophenen insbesondere mit 1 bis 16 C-Atomen, 3,4-Dialkylthiophenen insbesondere mit 1 bis 16 C-Atomen, 3,4-Dialkoxythiophenen insbesondere mit 1 bis 16 C-Atomen, 3,4-Ethylendioxythiophenen und deren Derivaten. Hierbei kann mindestens eine Verbindung ausgewählt werden auf Basis von Pyrrol-1-ylalkylphosphonsäure insbesondere mit 1 bis 16 C-Atomen, Pyrrol-1-ylalkyl-phosphorsäure insbesondere mit 1 bis 16 C-Atomen, Pyrrol-3-ylalkylphosphonsäure insbesondere mit 1 bis 16 C-Atomen, Pyrrol-3-ylalkylphosphorsäure insbesondere mit 1 bis 16 C-Atomen, 5-Alkyl-3,4-ethylendioxythiophen insbesondere mit 1 bis 12 C-Atomen, 5-(ω-Phosphono)alkyl-3,4-ethylendioxythiophen und deren Derivaten, insbesondere mit 1 bis 12 C-Atomen, die hergestellt, als Basis für die Herstellung der Depotsubstanz verwendet bzw. der Zusammensetzung zugesetzt werden. Die Zahl der C-Atome kann jeweils unabhängig voneinander bei 1, 2, 3, 4, 5, 6, 7, 8, 9, 10, 11, 12, 13, 14,15 oder/und 16 liegen.

Unter den substituierten Edukten ist ganz besonders bevorzugt mindestens eine Verbindung ausgewählt aus 2-Methylthiophenol, 2-Methoxythiophenol, 2,5-Dimethylthiophenol, 2,5-Dimethoxythiophenol, 1-Methylpyrrol, 1-Ethylpyrrol, Pyrrol-1-ylalkylphosphonsäure insbesondere mit 10 oder/und 12 C-Atomen, Pyrrol-1-ylalkylphosphat insbesondere mit 12 C-Atomen, 1-Methoxypyrrol, 1-Ethoxypyrrol, Pyrrol-3-ylalkylphosphonsäure insbesondere mit 6, 8 oder/und 11 C-Atomen, 3-Methoxypyrrol, 3-Ethoxypyrrol, 3,4-Dimethylpyrrol, 3,4-Dimethoxypyrrol, 1,3,4-Trimethylpyrrol, 1,3,4-Trimethoxypyrrol, 1-Phenylpyrrol, 3-Phenylpyrrol, 1-Phenyl-3-methylpyrrol, 1-Phenyl-3-methoxypyrrol, 1-Phenyl-3,4-dimethylpyrrol, 1-Phenyl-3,4-dimethoxypyrrol, 3-Methylthiophen, 3-Ethylthiophen, 3-Hexylthiophen, 3-Octylthiophen, 3-Methoxythiophen, 3-Ethoxythiophen, 3-Hexoxythiophen, 3-Octoxythiophen, 3,4-Dimethylthiophen, 3,4-Dimethoxythiophen, 5-(-(ω-Phosphono)methyl-3,4-dioxythiophen und deren Derivaten hergestellt, als Basis für die Herstellung der Depotsubstanz verwendet bzw. der Zusammensetzung zugesetzt.

Hierzu gehören auch die Edukte, die zur Herstellung von leitfähigen Polymeren, die mindestens eine Haftung vermittelnde Gruppe am Molekül aufweisen und daher als "Haftvermittler" bzw. "Haftvermittler-Partikel" bezeichnet werden, verwendet werden können.

Insbesondere wird mindestens eine Verbindung ausgewählt aus Ethylthiophen, Ethylendioxythiophen, Methylthiophen, 3-Ethylpyrrol, 3-Methylpyrrol, N-Ethylpyrrol, N-Methylpyrrol, 3-Phenylpyrrol und deren Derivaten hergestellt, als Basis für die Herstellung der Depotsubstanz verwendet bzw. der Zusammensetzung zugesetzt. Besonders bevorzugt sind auch Heterocyclo-pentadien (HCP), Dioxy-3,4-heterocyclopentadien (ADO-HCP), Di- bis Octoheterocyclopentadien (OHCP) und Benzoeheterocyclopentadien (BHCP).

Durch nukleophilen Angriff können die leitfähigen Polymere der erfindungsgemäß beschichteten Partikel bzw. die Partikel mit einem Anteil an leitfähigem Polymer chemisch angegriffen werden, wenn der pH-Wert für sie nicht geeignet ist. Vorteilhafterweise werden daher Edukte mit mindestens einem Substituenten wie z.B. Alkoxy oder/und Alkyl insbesondere in 3- oder/und 4-Position verwendet, die leitfähige Polymere bilden, die nicht durch nukleophilen Angriff bzw. Deaktivierung beeinträchtigt werden können, was zu einer Beeinträchtigung der elektrischen Leitfähigkeit führen kann. Dies können insbesondere Edukte auf Basis von Heterocyclen mit mindestens einer Alkylkette oder/und mit mindestens einem Ringsystem sein. Weiterhin sind derartige Edukte auch deswegen vorteilhaft, weil die Vernetzbarkeit dadurch in vorteilhafter Weise eingeschränkt ist und weil die hieraus entstehenden leitfähigen Polymere meistens Porensysteme mit besonders großen Porenkanälen aufweisen. Ganz besonders bevorzugt sind Verbindungen, deren Monomere oder/und Oligomere zumindest teilweise in Wasser gelöst oder/und polymerisiert werden können. Insbesondere vorteilhaft sind solche, die zumindest teilweise oder zeitweilig in Wasser oder Wasser enthaltenden Lösemittelgemischen polymerisierbar sind.

Ebenfalls ist es bevorzugt, dem Gemisch zur Herstellung des leitfähigen Polymers mindestens ein Edukt zuzusetzen, das wasserlöslich ist und das vorzugsweise nach seiner Oxidation (= Polymerisation) nicht mehr oder nur noch gering wasserlöslich ist.

Monomere werden u.a. deswegen verwendet, weil sie preisgünstiger sein können bzw. eine höhere Löslichkeit und höhere Diffusionskoeffizienten aufweisen können. Oligomere werden insbesondere dann verwendet, wenn das entsprechende Monomer nicht zu polymerisieren ist und wenn nur das Oligomer polymerisiert werden kann. Oligomere können vielfach reaktiver sein als Monomere.

Edukte in der Form von Copolymeren oder/und Blockcopolymeren können gegebenenfalls bereits im Edukt-Gemisch zusätzlich zu den Monomeren/Oligomeren vorhanden sein, während Pfropfcopolymere üblicherweise erst durch weitere chemische Reaktion(en) mit mindestens einem weiteren organischen Bestandteil wie z.B. mit einer Carboxyl- oder/und Ester-Gruppe insbesondere auf dem Polymergerüst der Beschichtung gebildet werden.

Vorzugsweise ist mindestens ein Edukt zugesetzt, das nach seiner Polymerisation zum leitfähigen Polymer in einem breiten pH-Wertebereich chemisch stabil ist. Vorzugsweise ist dann bei dem gewählten pH-Wert auch das verwendete Oxidationsmittel stabil. Es ist bevorzugt, dass dieser pH-Wertebereich mindestens 1 oder mindestens 2 Einheiten umfasst, also z.B. pH-Werte im Bereich von 3 bis 4,5.

Die leitfähigen Polymere bzw. gegebenenfalls auch die Partikel können dabei in einem Edukt-Gemisch hergestellt worden sein, das gegebenenfalls enthalten hatte:
- Gegebenenfalls mindestens ein Monomer oder/und mindestens ein Oligomer mit einem Gehalt an Edukt(en) im Bereich von 0,001 bis 25 oder bis 20 Gew.-%,
- mindestens ein bewegliches korrosionsschützendes Anion oder/und mindestens ein Salz, einen Ester oder/und mindestens eine Säure als Träger dieses Anions, mit einem Gehalt an beweglichen korrosionsschützenden Anionen im Bereich von 0,05 bis 50 Gew.-%, berechnet als Anion(en),
- gegebenenfalls mindestens ein Oxidationsmittel mit einem Gehalt an Oxidationsmitteln im Bereich von 0,05 bis 50 Gew.-%,
- mindestens eine Art anorganischer oder/und organischer Partikel mit einem Gehalt an Partikeln im Bereich von 1 bis 95 oder bis 96 Gew.-%,
- wobei alle diese Gehalte und gegebenenfalls weitere, hier nicht genannte Zusätze, jedoch ohne Lösemittel, insgesamt 100 Gew.-% ergeben sowie
- mindestens ein Lösemittel für die Edukte, für die Anionen oder/und für die Oxidationsmittel enthält mit Gehalten an Lösemitteln im Bereich von 1 bis 5000 Gew.-%, über 100 Gew.-% hinaus angegeben,
wobei die Summe der Feststoffe 100 Gew.-% ergibt, wenn - gegebenenfalls später - Monomer/Oligomer oder Oxidationsmittel zugesetzt ist.

### Leitfähige Polymere:

Aus dem Zusatz eines Gehalts von Monomeren oder/und Oligomeren (Edukte), die zur Ausbildung von leitfähigen Polymeren geeignet sind, werden durch die Oxidation zumindest teilweise leitfähige Polymere (= Produkte, Depotsubstanz) gebildet. Wenn Oxidationsmittel zugesetzt wird, können aus Edukten oxidierte Edukte werden, die dann polymerisieren und an die sich weitere Gruppen anlagern können. Kleinere Oligomere, z.B. solche mit etwa n = 8, zeigen dabei kaum oder nicht die Wirkungen der leitfähigen Polymere. Die leitfähigen Polymere sind im reduzierten Zustand elektrisch neutral. Bei der Oxidation (= Polymerisation) der leitfähigen Polymere bilden sich Kationen, die entsprechend Anionen aufnehmen können. Der oxidierte Zustand kann chemisch mit mindestens einem Oxidationsmittel, elektrochemisch oder/und photochemisch eingestellt werden. Vorzugsweise wird keine Elektropolymerisation durchgeführt, sondern weitgehend nur chemisch oder/und photochemisch polymerisiert, insbesondere nur chemisch oder/und photochemisch. Besonders bevorzugt wird nur oder weitgehend nur chemisch gearbeitet.

Eine Depotsubstanz kann grundsätzlich chemisch, elektrochemisch oder/und photochemisch polymerisiert sein. Vorzugsweise wird die mindestens eine Depotsubstanz bzw. die sie enthaltende Zusammensetzung chemisch oder/und mechanisch insbesondere auf die Partikel oder auf die metallischen Oberflächen aufgebracht. Bei einer elektrochemischen Aufbringung müssen die vergleichsweise unedleren metallischen Oberflächen vorher passiviert werden, um die starke Auflösung der metallischen Substanzen zu unterbinden. Bei der elektrochemischen Aufbringung müssen daher immer korrosionsinhibierende Anionen der Lösung, aus der mindestens ein Edukt polymerisiert wird, zugesetzt sein oder zugesetzt werden, um zuerst immer eine Passivierungsschicht auszubilden. Das auf diese Weise gebildete leitfähige Polymer enthält damit automatisch korrosionsinhibierende Anionen, aber die Publikationen, die korrosionsinhibierende Anionen beschreiben, deuten offenbar nie eine Freisetzung dieser Anionen aufgrund einer Potenzialabsenkung an.

Bei der elektrochemischen Polymerisation müssen die Partikel oft ein negatives zeta-Potenzial aufweisen. Die Beschichtungen, die durch elektrochemische Polymerisation auf Partikeln hergestellt wurden, haben sich als von vergleichsweise schlechter Qualität erwiesen. Bei der photochemischen Polymerisation sind oft halbleitende Partikel erforderlich, die z.B. bei UV-Bestrahlung Defektelektronen freisetzen. Auch hier haben sich die Beschichtungen, die durch photochemische Polymerisation auf Partikeln hergestellt wurden, als von vergleichsweise schlechter Qualität erwiesen. Außerdem könnte die Polymerhülle bei UV-Bestrahlung beschädigt werden. Die im Vergleich hierzu besten Beschichtungen wurden jetzt durch chemische Polymerisation hergestellt.

Die leitfähigen Polymere haben eine Salz-artige Struktur, sodass bei Anionen-beladenen leitfähigen Polymeren von Salzen gesprochen werden kann.

Das mindestens eine Polymer, Copolymer, Blockcopolymer oder/und Pfropfcopolymer wird im Folgenden vereinfacht als "Polymer" oder als "leitfähiges Polymer" bezeichnet. Bei dem erfindungsgemäßen Verfahren ist die mindestens eine Depotsubstanz vorzugsweise mindestens ein leitfähiges Polymer, insbesondere mindestens ein leitfähiges Polymer auf Basis von Imidazol, Phenanthren, Pyrrol, Thiophen oder/und Thiophenol, vor allem auf Basis von Pyrrol oder/und Thiophen. Vorzugsweise werden leitfähige Polymere gebildet auf Basis von Polyphenylen, Polyfuran, Polyimidazol, Polyphenanthren, Polypyrrol, Polythiophen oder/und Polythiophenylen bzw. solche, die zumindest teilweise oder zeitweilig in Wasser polymerisiert werden. Zu den besonders bevorzugten leitfähigen Polymeren gehören beispielsweise solche auf Basis von Polypyrrol (PPy), Polythiophen (PTH), Poly(paraphenylen) (PPP) oder/und Poly(para-phenylenvinylen) (PPV). Die Depotsubstanz wird entweder getrennt oder in einem Gemisch vorab hergestellt und dann der Zusammensetzung zugesetzt oder/und in seltenen Fällen als Edukt der Zusammensetzung zugesetzt oder/und in der Zusammensetzung oder/und in der Beschichtung zur Depotsubstanz reagiert.

Bei dem erfindungsgemäßen Verfahren werden vorzugsweise mindestens eine Depotsubstanz und mindestens ein Anion ausgewählt, die eine weitgehende oder vollständige Freisetzung der Anionen aus der Depotsubstanz ermöglichen, wodurch die Kationentransportrate der Kationen insbesondere aus dem Elektrolyten oder/und aus dem Defekt deutlich erniedrigt werden kann, wodurch wiederum die Bildung von schädlichen Radikalen im Bereich der Grenzfläche Metall/Beschichtung verringert werden kann.

Vorzugsweise sind die erfindungsgemäß hergestellten bzw. genutzten leitfähigen Polymere im oxidierten (= dotierten) Zustand thermodynamisch so stabil, dass sie sich nicht von alleine - selbst über längere Zeit - entladen können und dass auch ihre Anionen nicht ohne Reduktion freigesetzt werden können. Dadurch unterscheiden sich dann diese chemischen Systeme von manchen anderen Depotsystemen, die keine leitfähigen Polymere sind, wo die Anionen die Depotsubstanz vorzeitig verlassen können.

Besonders bevorzugt ist es, mindestens ein Polymer herzustellen oder/und dem Gemisch zuzusetzen, das ausgewählt ist aus Verbindungen auf Basis von Poly(1-alkylpyrrol) (P1APy) insbesondere mit 1 bis 16 C-Atomen, Poly(1-alkoxypyrrol) (P1AOPy) insbesondere mit 1 bis 16 C-Atomen, Poly(3-alkylpyrrol) (P3APy) insbesondere mit 1 bis 16 C-Atomen, Poly(3-alkoxypyrrol) (P3AOPy) insbesondere mit 1 bis 16 C-Atomen, Poly(1-arylpyrrol) (P1ArPy), Poly(3-arylpyrrol) (P3ArPy), Poly(3-alkylthiophen) (P3ATH) insbesondere mit 1 bis 16 C-Atomen, Poly(3-alkoxythiophen) (P3ATH) insbesondere mit 1 bis 16 C-Atomen, Poly(3-arylthiophen) (P3ArTH), Poly(3-alkylbithiophen) insbesondere mit 1 bis 16 C-Atomen, Poly(3,3'-dialkylbithiophen), Poly(3,3'-dialkoxybithiophen), Poly(alkylterthiophen), Poly(alkoxyterthiophen), Poly(3,4-ethylenedioxythiophen) (PEDOT) und Poly(benzo[b]thiophen (PBTH).

Besonders bevorzugt ist es, mindestens ein Polymer herzustellen oder/und dem Gemisch zuzusetzen, das ausgewählt ist aus Poly(1-methylpyrrol) (P1 MPy), Poly(1-methoxypyrrol) (P1MOPy), Poly(3-methylpyrrol) (P3Mpy), Poly(3-methoxypyrrol) (P3MOPy), Poly(1-phenylpyrrol) (P1PhPy), Poly(3-phenylpyrrol) (P3PhPy), Poly(3-methylthiophen), Poly(3-hexylthiophen), Poly(3-methoxythiophen), Poly(3-hexoxythiophen), Poly(3-phenylthiophen), Poly(3-methylbithiophen), Poly(3-hexylbithiophen), Poly(3,3'-dimethylbithiophen), Poly(3,3'-dihexylbithiophen), Poly(3,3'-dimethoxybithiophen), Poly-(3,3'-dihexoxybithiophen), Poly(3-methylterthiophen), Poly(3-methoxyterthiophen), Poly(5-alkyl-3,4-ethylendioxythiophen) insbesondere mit 1 bis 12 C-Atomen, Poly(isothianaphthen) (PITN), Polyheterocyclopentadien (PHCP), Dioxy-3,4-heterocyclopentadien (ADO-HCP), Di- bis Octoheterocyclopentadien (OHCP), Poly(3-hexylthiophen) (P3HT), substituiertem oder/und leiterartigem Poly(para-phenylen) (PPP bzw. LPPP) und substituiertem oder/und leiterartigem Poly(para-phenylenvinylen) (PPV bzw. LPPV).

Zu den besonders bevorzugten leitfähigen Polymeren gehören unter anderem Polypyrrol (PPy), Poly(N-methylpyrrol) (PMPy), Poly(3-alkylpyrrol) (P3AlPy), Poly(3-arylpyrrol) (P3ArPy), Poly(isothianaphthen) (PITN), Poly(3-alkylthiophen) (P3AlT), Poly(alkylbithiophen), Poly(alkylterthiophen), Poly(ethylendioxythiophen) (PEDOT), Poly(3-arylthiophen) (P3ArT), substituiertes oder/und leiterartiges Poly(para-phenylenvinylen) (PPV), Poly(3-hexylthiophen) (P3HT), Poly(3-hexylthiophen) (P3HT), Polyphenylen (PP), Polyparaphenylenvinylen (PPV), Polyheterocyclopentadien (PHCP), Polydioxy-3,4-heterocyclopentadien (PADO), Polybenzoheterocyclopentadien (PBHCP), Polythiophen (PT), Poly(3-alkylthiophen) mit R = Alkyl wie z.B. Methyl, Butyl usw. (P3AT), Polypyrrol (PPy), Poly(isothianaphthen) (PITN), Poly(ethylendioxythiophen) (PEDOT), Alkoxy-substitituiertes Poly(paraphenylenvinylen) (MEH-PPV), Poly(2,5-dialkoxy-para-phenylenvinylen) (MEH-PPV), leiterartiges Poly(para-phenylen) (LPPP), Poly(paraphenylensulfid) (PPS) sowie Poly(3-hexylthiophen) (P3HT).

Unter den Polymeren können auch Poly(1,3-Dialkylpyrrol), Poly(3,4-Dialkylpyrrol), Poly(3,4-Dialkylthiophen), Poly(1,3,4-Trialkylpyrrol), Poly(3,4-Dialkoxythiophen), Poly(1,3,4-Trialkoxypyrrol), Poly(2-Arylthiophen), jeweils unabhängig voneinander insbesonders mit 1 bis 16 C-Atomen, bzw. entsprechende Edukte gewählt werden. Unter den Aryl-Verbindungen können insbesondere 1-Phenyl-, 3-Phenyl-, 1-Biphenyl-, 3-Biphenyl-, 1-(4-Azobenzol)- oder/und 3-(4-Azobenzol)-Verbindungen ausgewählt werden. Vorzugsweise werden hierbei Verbindungen unabhängig voneinander mit Alkylketten mit 1, 2, 3, 4, 5, 6, 7, 8, 9, 10, 11, 12, 13, 14, 15 oder/und 16 C-Atomen hergestellt bzw. verwendet.

Als Substituenten können bei den Edukten oder/und Polymeren jeweils unabhängig voneinander vorzugsweise H, OH, O, COOH, CH₂OH, OCH₃, CₙH₂ₙ₋₁ insbesondere mit n = 2 bis 12, OCₙH₂ₙ₋₁ insbesondere mit n = 2 bis 12, Alkyl, Alkoxy, Aryl, Amin, Amino, Amid, primäres Ammonium, Imino, Imid, Halogen, Carboxy, Carboxylat, Mercapto, Phosphonat, S, Sulfon oder/und Sulfonat gewählt werden.

Hierzu gehören auch die leitfähigen Polymere, die mindestens eine Haftung vermittelnde Gruppe am Molekül aufweisen und daher als "Haftvermittler" bzw. "Haftvermittler-Partikel" bezeichnet werden.

Die leitfähigen Polymere, die sich hierfür eignen, sind zwar oft grundsätzlich bekannt, aber meistens noch nicht als für mindestens eine Variante des Korrosionsschutzes beschrieben; dort, wo der Korrosionsschutz für dieses Polymer beschrieben ist, funktioniert jedoch der Korrosionsschutz bei unedleren metallischen Oberflächen ohne bereits vorhandene Passivierungsschicht nicht. In einzelnen Ausführungsformen kann auch mindestens eine Depotsubstanz zumindest teilweise eine Matrix in der Zusammensetzung ausbilden, insbesondere nahe der Grenzfläche Metall/Beschichtung. Die wenigsten leitfähigen Polymere sind kommerziell erhältlich.

Es ist vorteilhaft, entweder ein durch Substituenten oder/und durch ein anderes Grundmolekül (Monomer/Oligomer) modifiziertes leitfähiges Polymer oder/und ein leitfähiges Copolymer enthaltend mindestens zwei verschiedene Grundmoleküle (Monomere/Oligomere) mit etwas unterschiedlichen Redoxpotenzialen einzusetzen, um die Redoxeigenschaften der Depotsubstanz von Verbindung zu Verbindung deutlich zu variieren. Alternativ oder zusätzlich können entsprechend unterschiedliche Depotsubstanzen miteinander vermischt werden. Hierdurch kann mindestens eine Verbindung ausgesucht werden, die das richtige Niveau des Redoxpotenzials für das chemische System einschließlich der metallischen Oberfläche aufweist, oder/und ein Gemisch hergestellt werden, das unterschiedliche leitfähige Polymere mit unterschiedlichen Redoxpotenzialen enthält. Das Redoxpotenzial der Depotsubstanz ist insbesondere dann geeignet, wenn es mindestens 75 mV, mindestens 100 mV oder mindestens 150 mV, bevorzugt mindestens 200 mV oder mindestens 250 mV, ganz besonders bevorzugt mindestens 300 mV oder mindestens 350 mV über dem Korrosionspotenzial der metallischen Oberfläche liegt.

Vorzugsweise wird die mittlere Porengröße des auszubildenden leitfähigen Oligomers, Polymers, Copolymers, Blockcopolymers oder/und Pfropfcopolymers vergrößert durch Einstellung einer höheren Temperatur bei der Bildung der Beschichtung oder/und bei der Trocknung des Gemisches, insbesondere auf eine Temperatur im Bereich von 60 bis 200 °C in inerter Atmosphäre, an Luft insbesondere im Bereich von 30 bis 80 °C.

### Lösemittel des Edukt- bzw. Produkt-Gemisches:

Wasser kann in manchen Ausführungsvarianten als einziges Lösemittel im Gemisch zur Herstellung des leitfähigen Polymers eingesetzt werden. Es ist vorteilhaft, Wasser als eines der Lösemittel in einem Lösemittelgemisch einzusetzen, wobei der Wassergehalt des Lösemittelgemisches mindestens 5 Gew.-% ausmacht. Dadurch kann einfacher und umweltfreundlicher gearbeitet werden und kann die überwiegende Zahl der Anionen in Lösung gebracht werden. Vorzugweise wird ein höherer Anteil an Wasser im Lösemittelgemisch oder gänzlich nur Wasser als Lösemittel eingesetzt, zumal viele Anionen nur in Wasser, aber oft nicht in organischen Lösemitteln oder nicht in manchen organischen Lösemitteln löslich sind.

Vorzugsweise wird als Lösemittel nur oder im Wesentlichen nur Wasser zugesetzt oder bei einem Lösemittelgemisch als das mindestens eine weitere Lösemittel mindestens eines zugesetzt, das im Temperaturbereich von - 30 bis 200 °C, besonders bevorzugt im Bereich von - 10 bis 160 °C oder ganz besonders bevorzugt im Bereich von 1 bis 95 °C flüssig ist. Hierbei können die Lösemittel gegebenenfalls im Wesentlichen selektiv wirken und vorwiegend oder nur die Edukte bzw. vorwiegend oder nur die Anionen und Oxidationsmittel lösen. Außerdem ist es vorteilhaft, wenn die Lösemittel nur wenig oder gar nicht mit dem Oxidationsmittel chemisch reagieren können, auch nicht bei erhöhter Temperatur. Die Lösemittel lösen üblicherweise die entstandenen Oligomere, Polymere, Copolymere oder/und Pfropfcopolymere der leitfähigen Polymere nicht oder nur gering an bzw. auf.

Vorzugsweise wird bei einem Lösemittelgemisch als das mindestens eine weitere Lösemittel insbesondere neben Wasser mindestens eines zugesetzt ausgewählt aus mehr oder weniger polaren, dipolar aprotischen und dipolar protischen Flüssigkeiten. Die Polarität und damit die Dielektrizitätskonstante kann dabei in weiten Bereichen variiert werden. Schwach polare Flüssigkeiten wie Chloroform oder/und Dichlormethan bzw. dipolar aprotische Flüssigkeiten wie Acetonitril oder/und Propylencarbonat werden insbesondere für die Edukte eingesetzt, bei denen nicht mit Wasser gearbeitet werden kann - insbesondere für Verbindungen wie z.B. auf Basis von Thiophenen. Polare protische Flüssigkeiten wie Wasser oder/und Alkohole werden meistens für die Oxidationsmittel und Anionen verwendet. Lösemittel mit geringerer Polarität wie z.B. Alkohole werden vorzugsweise zum Lösen der Edukte eingesetzt, während solche mit hoher Polarität wie z.B. Wasser vorzugsweise zum Lösen der Oxidationsmittel und Salze sowie zum Verdünnen der Säuren verwendet werden.

Vorzugsweise wird bei einem Lösemittelgemisch als das mindestens eine weitere Lösemittel mindestens ein Lösemittel zugesetzt ausgewählt aus Acetonitril, Chloroform, Dichlormethan, Ethanol, Isopropanol, Methanol, Propanol, Propylencarbonat und Wasser. Häufig werden Lösemittelgemische aus Wasser mit mindestens einem Alkohol verwendet, die gegebenenfalls auch noch mindestens ein weiteres Lösemittel oder/und noch mindestens eine weitere Flüssigkeit, die wie z.B. ein Öl kein Lösemittel ist, enthalten.

Besonders vorteilhaft ist auch die Verwendung eines Lösemittelgemisches aus Wasser und mindestens einem organischen Lösemittel, da z.B. Molybdat fast nur mit Wasser und da einige Pyrrol-Derivate üblicherweise nur mit zumindest einem geringen Zusatz von mindestens einem mit Wasser mischbaren organischen Lösemittel bei der erforderlichen Konzentration ausreichend löslich sind, wobei der Gehalt des mindestens einen organischen Lösemittels im Lösemittelgemisch insbesondere mindestens 2 Gew.-%, vorzugsweise mindestens 6 Gew.-%, besonders bevorzugt mindestens 12 Gew.-%, ganz besonders bevorzugt mindestens 18 Gew.-%, insbesondere sogar mindestens 24 Gew-% beträgt.

Der Umsetzungsgrad der Edukte zu den leitfähigen Polymeren liegt häufig in der Größenordnung von 85 bis 99 %, meistens im Bereich von 88 bis 96 %.

### Produkt-Gemisch:

Das Produkt-Gemisch, in dem leitfähiges Polymer gebildet wird oder/und gebildet ist, enthält die gleichen oder im Wesentlichen die gleichen Gehalte an Bestandteilen wie das Edukt-Gemisch, wenn von den chemischen Reaktionen abgesehen wird. Es gelten daher die gleichen Mengenangaben entsprechend.

Es kann dem Produkt-Gemisch auch mindestens ein Stabilisator zugesetzt werden oder zugesetzt sein, der gegebenenfalls bei der zuvor angewandten Emulsionspolymerisation verwendet wurde. Vorzugsweise ist der mindestens eine Stabilisator auch mindestens ein ionischer oder nichtionischer Stabilisator - insbesondere mindestens ein polymerisierbares oder/und polymerisiertes Tensid, das gegebenenfalls Emulgator-Eigenschaften aufweist. Besonders bevorzugt wird der Stabilisator ausgewählt aus wasserlöslichen Polymeren auf Basis von Polyvinylalkohol, Polyvinylalkylether, Polystyrolsulfonat, Polyethylenoxid, Polyalkylsulfonat, Polyarylsulfonat, anionischen oder/und kationischen Tensiden, quaternären Ammoniumsalzen und tertiären Aminen. Ganz besonders bevorzugt sind sie ausgewählt aus der Gruppe der anionischen oder/und kationischen Tenside der Alkylsulfate und Alkylsulfonate vorzugsweise von Natrium, insbesondere mit einer Alkylkettenlänge im Bereich von 10 bis 18 C-Atomen. Diese wasserlöslichen Polymere bzw. Tenside sind vorteilhaft, um die Partikel besser zu dispergieren.

Das Produkt-Gemisch kann gegebenenfalls im Wesentlichen keine oder vorzugsweise 0,01 bis 5 Gew.-% an mindestens einem Stabilisator für die anionische, kationische, sterische oder/und neutrale Stabilisierung der Partikel im Edukt-Gemisch und im daraus entstehenden Produkt-Gemisch enthalten, besonders bevorzugt 0,5 bis 4 Gew.-% oder 0,05 bis 3 Gew.-%, ganz besonders bevorzugt 0,1 bis 2 Gew.-%.

### Behandlung der leitfähiges Polymer enthaltenden Partikel:

Vorzugsweise wird das Produkt-Gemisch mit beschichteten Partikeln durch Dekantieren, Filtrieren oder/und Gefriertrocknen, insbesondere durch Schleudern oder Zentrifugieren beim Filtrieren, oder/und durch Gaszirkulation oder/und Wärme insbesondere bei Temperaturen von bis zu 200 °C in inerter Atmosphäre oder vorzugsweise von bis zu 150 °C oder von bis zu 120 °C getrocknet. Dies ist üblicherweise bei beschichteten anorganischen Partikeln nötig. Hierdurch wird das Flüssigkeit(en) enthaltende Gemisch weitgehend oder gänzlich getrocknet. Soweit die beschichteten anorganischen Partikel z.B. durch Dekantieren, Filtrieren oder/und Trocknen weitgehend von Flüssigkeiten getrennt wurden, wird der Gehalt an Lösemitteln oft im Bereich von etwa 1, 2, 3, 4, 5 Gew.-% oder oft nur bei Gehalten von bis zu 10 Gew.-% liegen. Das getrocknete "Gemisch" wird im Folgenden als "leitfähiges Pulver" bezeichnet. In dieser Form ist die Beschichtung auf den Partikeln stabil, auf Dauer elektrisch leitfähig und auch chemisch und in weiterer Weise physikalisch auf Dauer haltbar, solange nicht ein nukleophiler Angriff erfolgt z.B. bei Verwendung in einem ungeeigneten Lacksystem, bei übermäßiger thermischer Belastung wie z.B. oberhalb von 300 °C oder durch photochemischen Abbau z.B. bei Gegenwart von photoaktiven Partikeln wie z.B. TiO₂ (Anatas) oder/und bei starker Bewitterung. Die hierbei entstandene Beschichtung ist oft besonders haftfest oder/und weitgehend oder vollständig geschlossen.

Vorzugsweise wird bei der Trocknung nicht die gesamte Menge an Flüssigkeit(en) entfernt, sondern es ist vorteilhaft, wenn beispielsweise ein Flüssigkeitsgehalt im Bereich von 0,1 bis 12 Gew.-% bezogen auf den Gehalt an insbesondere anorganischen unbeschichteten Partikeln im Pulverhaufwerk erhalten bleibt. Das ist vorteilhaft, weil die Poren dann (noch) nicht durch die Rückquellung des leitfähigen Polymers kleiner werden können.

Bei Bedarf können die beschichteten anorganischen Partikel kurz gemahlen oder/und mit schwacher Wirkung gemahlen werden, um sogenannte Kuchen, Agglomerate oder/und gegebenenfalls auch Aggregate aufzubrechen oder/und schüttfähig zu machen. Gegebenenfalls werden die leitfähigen Pulver auch klassiert.

Vorzugsweise werden die beschichteten anorganischen Partikel zuerst dekantiert, filtriert oder/und getrocknet. Anschließend kann eine Extraktion der herauslösbaren Bestandteile aus der leitfähigen Beschichtung in der Art erfolgen, dass im Wesentlichen keine eingebauten Anionen und im Wesentlichen kein für das leitfähige Polymer zur Stabilisierung erforderliches Oxidationsmittel herausgelöst wird. Hierdurch wird die leitfähige stabile Struktur der leitfähigen Polymere und ihr Leitfähigkeitszustand im Wesentlichen unverändert gelassen. Überschüssiges Oxidationsmittel, das z.B. mit einem Lack reagieren könnte, nicht-eingebaute Anionen, nicht umgesetzte Monomere und Oligomere und sonstige Verunreinigungen sowie sonstige nicht erforderliche Bestandteile können bei der Extraktion entfernt werden. Die Extraktion kann insbesondere mit einer sauren wässerigen Lösung wie z.B. mit Schwefelsäure, Salzsäure oder/und mit mindestens einem organischen Lösemittel wie z.B. Acetonitril, Chloroform oder/und Methanol erfolgen. Dieser Schritt kann die Qualität der Beschichtung deutlich verbessern.

Es hat sich gezeigt, dass nach der Herstellung der Core-Shell-Partikel manchmal ein Stabilisator vorteilhaft zugesetzt werden kann, aber auch oft nicht erforderlich ist. Der Zusatz eines Stabilisators zu einem bereits stabilen Produkt-Gemisch ist in manchen Ausführungsvarianten jedoch eher nachteilig. Andererseits kann ein instabiles Produkt-Gemisch, z.B. wenn die Konzentrationen zu hoch gewählt wurden, insbesondere an leitfähigem Polymer, durch Zusatz eines Stabilisators stabilisiert werden.

### Leitfähiges Polymer enthaltende Partikel:

Grundsätzlich sind viele Aussagen, die spezifisch auf die leitfähiges Polymer enthaltenden Partikel mit anorganischen bzw. organischen Partikeln bezogen sind, vielfach auch auf die weiteren der sechs Arten von leitfähiges Polymer enthaltenden Partikeln zu übertragen.

Bei den anorganischen oder/und organischen Partikel, die mit leitfähigem Polymer beschichtet sind, liegt das leitfähige Polymer vorzugsweise im Wesentlichen in oxidiertem, elektrisch leitfähigen Zustand vor, wobei in dem leitfähigen Polymer zumindest ein erhöhter Gehalt an beweglichen korrosionsschützenden Anionen und gegebenenfalls auch ein Gehalt an haftvermittelnden Anionen eingebaut ist.

Die Gehalte der Bestandteile in der leitfähigen Beschichtung der Partikel können in weiten Grenzen variieren. Die Variation ist insbesondere von der Dicke der Beschichtung abhängig: Es können ultradünne, dünne, dicke oder sehr dicke Beschichtungen aufgebracht sein, die eine Schichtdicke im Bereich von 0,1 bis 10 nm, von > 10 bis 100 nm, von > 100 nm bis 1 µm oder von > 1 µm bis 20 µm aufweisen. Es können auch Bestandteile mit geringer oder hoher Dichte ausgewählt sein. Ferner kann auch die spezifische Oberfläche der anorganischen Partikel sehr stark eingehen, wie z.B. bei SiO₂-Pulvern, die durch Flammenhydrolyse hergestellt wurden.

Vorzugsweise liegt der Gehalt an leitfähigen Polymeren in der leitfähigen Beschichtung der Partikel bei Werten von etwa 50, 52, 54, 56, 58, 60, 62, 64, 66, 68, 70, 72, 74, 76, 78, 80, 82, 84, 86, 88, 90, 92, 94, 96, 98 bzw. 100 Gew.-% bezogen auf die Beschichtung. Insbesondere liegt der Gehalt an leitfähigen Polymeren in der leitfähigen Beschichtung der Partikel im Bereich von 48 bis 100 Gew.%, besonders bevorzugt im Bereich von 61 bis 97 Gew.-%, ganz besonders bevorzugt im Bereich von 69 bis 95 Gew.-%.

Vorzugsweise liegt der Gehalt an Anionen bei Werten von etwa 10, 12, 14, 16, 18, 20, 22, 24, 26, 28, 30 bzw. 32 mol% bezogen auf das leitfähige Polymer der Beschichtung. Vorzugsweise liegt der Gehalt an Oxidationsmitteln bezogen auf die Beschichtung bei Werten von 0 und möglichst nicht darüber. Insbesondere liegt der Gehalt an Anionen in der leitfähigen Beschichtung im Bereich von 8 bis 35 mol%, besonders bevorzugt im Bereich von 15 bis 33 mol%, oft im Bereich von 19 bis 32 mol%.

Vorzugsweise liegt der Gehalt an Partikeln am Gehalt an Partikeln einschließlich ihrer Beschichtungen und Einlagerungen auf Basis von leitfähigem Polymer bei Werten von etwa 6, 8, 10, 12, 14, 16, 18, 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, 90, 92, 94, 96 bzw. 98 Gew.-%. Insbesondere liegt der Gehalt an Partikeln einschließlich ihrer Beschichtungen und Einlagerungen auf Basis von leitfähigem Polymer in der bindemittel-reichen leitfähigen Beschichtung im Bereich von 5 bis 100 Gew.-%, besonders bevorzugt im Bereich von 55 bis 99 Gew.-%, ganz besonders bevorzugt im Bereich von 75 bis 98 Gew.-%, vor allem im Bereich von 85 bis 97 Gew.-%.

Vorzugsweise wird die mittlere Porengröße des auszubildenden leitfähigen Polymers vergrößert durch Erhöhung der Quellung des auszubildenden elektrisch leitfähigen Polymers durch Zusatz einer leicht verdampfbaren organischen Flüssigkeit wie z.B. Chloroform bei Polythiophen oder wie z.B. Alkohol bei Polypyrrol und bei manchen Polypyrrol-Derivaten.

Die Beschichtungen auf den Partikeln sind trotz ihrer geringen Dicke oft deutlich gefärbt. Sie sind vielfach hellgrün bis dunkelgrün, blassblau bis dunkelblau, hellgrau bis dunkelgrau, hellrot bis dunkelrot, violett, braun oder schwarz gefärbt. Die leitfähigen Polymere sind oft hydrophob, können aber je nach Anionengehalt, Oxidationszustand, pH-Wert und Substitution der Seitengruppen nach Art und Menge hydrophiler oder hydrophober gestaltet werden.

Die elektrische Leitfähigkeit der Beschichtung auf Partikeln, die mit einer leitfähiges Polymer enthaltenden Beschichtung umhüllt sind, kann in Abhängigkeit vom Oxidationsgrad, von der Art der Ladungsträger oder/und der Ladungsträgermobilität im Bereich von 10⁻⁸ bis 10⁰ S/cm liegen, vorzugsweise im Bereich von 10⁻⁶ bis 10⁻¹ S/cm, besonders bevorzugt im Bereich von 10⁻⁵ bis 10⁻² S/cm.

Der Dotierungsgrad kann mit Elementaranalyse oder XPS (Röntgenspektroskopie) ermittelt werden. Er liegt üblicherweise im Bereich von 5 bis 33 %, wobei ein Dotierungsgrad höher als 28 % in der Praxis nur teilweise erreicht wird. Oft werden Dotierungsgrade im Bereich von 20 % bis 33 % erreicht.

Die Qualität der leitfähigen Beschichtung kann grundsätzlich erhöht sein durch Einstellen des maximal möglichen Dotierungsgrades der leitfähigen Polymere mit beweglichen korrosionsschützenden Anionen, was zu einem hohen Depot-Effekt und oft auch zu einer ausreichenden elektrischen Leitfähigkeit der auszubildenden Beschichtung führt. Es genügt in vielen Anwendungen eine ausreichende elektrische Leitfähigkeit, weil eine zu hohe elektrische Leitfähigkeit evtl. dazu führt, dass der Potenzialgradient schnell abgebaut wird und die Triebkraft für die Anionenwanderung u.U. zu schnell abnimmt bzw. beendet ist (Kurzschlusseffekt), als dass die Anionen ihre korrosionsschützende Wirkung entfalten können.

Die leitfähiges Polymer enthaltende Beschichtung auf den Partikeln sollte vorzugsweise kein Oxidationsmittel oder nahezu kein Oxidationsmittel enthalten, da dieses für die korrosionsschützende Wirkung der beschichtete Partikel enthaltenden organischen Beschichtung schädlich sein kann. Es ist daher anzuraten, überschüssige(s) Oxidationsmittel oder/und andere, gegebenenfalls störende Substanzen aus dem Produkt-Gemisch bzw. aus den im trockenen oder feuchten Zustand oder als Dispersion gelagerten Partikeln, die leitfähiges Polymer enthalten, zu entfernen, z.B. durch Dialyse, Extraktion oder/und Filtration.

Die Schichtdicke der Schicht des leitfähigen Polymers auf den Partikeln kann in breiten Bereichen variiert werden. Vorzugsweise sind die Schichtdicken im Bereich von 1 bis 200 nm, besonders bevorzugt im Bereich von 2 bis 100 nm, vor allem im Bereich von 3 bis 80 nm. Diese Schichten sind u.U. bei anorganischen Partikeln dünner als bei organischen Partikeln. Dickere Schichten sind zwar grundsätzlich denkbar und möglich, könnten aber ihre Grenzen finden, wenn die beschichteten Partikel nicht mehr dispergiert werden können.

### Herstellung und Zusatz von sogenannten "Haftvermittler-Partikeln" aus leitfähigem Polymer:

Es kann dem Bindemittel-reichen Gemisch auch mindestens ein sogenannter "Haftvermittler" auf Basis von leitfähigem Polymer zugesetzt werden, der insbesondere durch Emulsionspolymerisation hergestellt werden kann. Das ist mindestens eine Depotsubstanz mit jeweils mindestens einem Substituenten pro Molekül, der die Haftung zur metallischen Oberfläche verbessert. Insbesondere kann dadurch die Haftung an der Grenzfläche Metall und Bindemittel-Matrix verbessert werden und der Korrosionsschutz erhöht werden. Da der "Haftvermittler" auch immer mindestens ein bewegliches korrosionsschützendes Anion enthält, ist bei einem Potenzialgradienten infolge einer Beschädigung der Beschichtung eine schnelle kurze Wanderung derartiger Anionen zu dem beschädigten Bereich möglich, da die "Haftvermittler" nach dem Aufbringen der Bindemittel-reichen und noch Wasser-haltigen Beschichtung auf die metallische Oberfläche gezielt bevorzugt an die Grenzfläche zwischen Metall und Bindemittel-Matrix diffundieren und somit besonders nahe an der Grenzfläche adsorbiert werden (Grenzflächen-nahes Depot). Dadurch können die "Haftvermittler" nahe der Grenzfläche stärker angereichert werden, während die leitfähig beschichteten Partikel meistens mehr oder minder gleichmäßig über die Schichtdicke der Beschichtung verteilt liegen.

Der mindestens eine "Haftvermittler" kann hergestellt werden bei der gezielten Copolymerisation von Monomer(en)/Oligomer(en) mit Haftgruppen-substituierten Monomer-/Oligomer-Bausteinen, die aus den gleichen Monomer(en)/Oligomer(en) aufgebaut sind. Das/die Monomer(e)/Oligomer(e) können ausgewählt werden aus solchen auf Basis von Benzol, Furan, Imidazol, Naphthalen, Phenanthren, Phenol, Pyrrol, Thiophen oder/und Thiophenol. Die Substituenten können ausgewählt werden aus Alkansäuren wie z.B. Carbonsäuren, aus Phosphonsäuren, Phosphorsäuren, Sulfonsäuren und deren Salzen mit mindestens einer unverzweigten Alkylkette von unabhängig voneinander mindestens jeweils 6 bis 20 C-Atomen, wobei gegebenenfalls auch mindestens eine Doppelkette gebildet werden kann. Besonders bevorzugt sind substituierte Monomere oder/und substituierte Oligomere auf Basis von Benzol, Bipyrrol, Furan, Imidazol, Naphthalen, Phenanthren, Phenol, Pyrrol, Thiophen oder/und Thiophenol mit mindestens einer Substitution unabhängig voneinander durch mindestens eine Phosphonsäure.

Der "Haftvermittler" kann gesondert von den Verfahren zur Präparation und Beschichtung von Partikeln in einem gegebenenfalls Partikel-freien Gemisch durch Emulsionspolymerisation hergestellt werden, das meistens eine Wasser-Alkohol-Mischung, mindestens ein Oxidationsmittel - vorzugsweise solche mit mindestens einem beweglichen korrosionsschützenden Anion mit Oxidationsmittelwirkung zumindest teilweise anstelle des gesonderten Oxidationsmittels, mindestens ein bewegliches korrosionsschützendes Anion, mindestens ein Monomer/Oligomer und mindestens ein mit Haftgruppensubstituiertes Monomer/Oligomer, das aus dem/den gleichen Monomer(en)/Oligomer(en) aufgebaut ist/sind, enthält. Die Emulsionspolymerisation findet vorzugsweise bei Raumtemperatur oder bei geringfügig höherer Temperatur statt bzw. bei einem pH-Wert vorzugsweise im Bereich von 2 bis 4. Hierdurch werden meistens in der Größe einstellbare, im Wesentlichen kugelförmige Partikel gebildet, die weitgehend oder gänzlich aus dotiertem leitfähigen Polymer bestehen. Diese Partikel sind üblicherweise gut dispergierbar. Die damit hergestellten Dispersionen sind in der Regel stabil, so dass sie nicht bewegt werden müssen und die Partikel auch nicht redispergiert werden müssen.

Diese "Haftvermittler-Partikel" können zusätzlich oder alternativ zu den beschichteten anorganischen oder/und organischen Partikeln in die Bindemittel-haltige Matrix eingebracht werden. Die Zugabemenge der "Haftvermittler-Partikel" kann in weiten Grenzen variiert werden, z.B. vorzugsweise in Mengen von 0,01 bis 20 Gew.-% der Bindemittel-reichen Zusammensetzung bezogen auf Feststoffgehalte zugesetzt werden, besonders bevorzugt in Mengen von 0,1 bis 10 Gew.-%, ganz besonders bevorzugt von 1 bis 5 Gew.-%.

### Herstellung einer Bindemittel-reichen Beschichtung mit leitfähig beschichteten Partikeln und Eigenschaften dieser Beschichtung:

Vorzugsweise enthält die ein Bindersystem enthaltende erfindungsgemäße Zusammensetzung im Wesentlichen gegebenenfalls neben den leitfähiges Polymer enthaltenden Partikeln und neben Wasser oder/und mindestens einem anderen Lösemittel ein Bindemittel-reiches System (= Bindersystem) auf der Basis von organischem Polymer.

Die chemische Zusammensetzung des Bindersystems, das für die Herstellung der Bindemittel-reichen Zusammensetzung verwendet wird, kann in weiten Bereichen variiert werden. Die verwendbaren Bindemittel können grundsätzlich sehr unterschiedlich zusammengesetzt sein. Aber auch die Ausprägung des Bindersystems für den speziellen Einsatz der erfindungsgemäßen Beschichtung kann sehr unterschiedlich sein, so dass insbesondere Primer, Lacke, lackähnliche organische Zusammensetzungen und Klebstoffgemische möglich sind. Die Bindersysteme können grundsätzlich vernetzbare oder nicht-vernetzbare Systeme sein. Hierbei können die verschiedensten Vernetzungsarten einzeln oder in Kombination oder/und wiederholt genutzt werden, aber es kann auch ohne Vernetzung gearbeitet werden.

Die daraus entstehenden Beschichtungen weisen auch ein Bindersystem auf, das dem Bindersystem der Ausgangszusammensetzung entsprechend ähnlich ist, aber oft eine im Vergleich zur Ausgangszusammensetzung stärker vernetzte Zusammensetzung aufweist. Die organischen Beschichtungen können nach dem Applizieren auf der metallischen Oberfläche durch Verfilmen homogen hergestellt werden oder/und durch chemische Aushärtung, chemische oder/und chemisch-thermische Aushärtung oder/und durch radikalische Vernetzung polymerisiert werden.

In vielen Ausführungsvarianten wird als Bindersystem eines ausgewählt, das anionisch oder kationisch stabilisiert ist oder wird oder mit jeweils mindestens einem Emulgator oder/und Schutzkolloid stabilisiert ist oder wird und das gegebenenfalls auch verfilmbar ist. Besonders bevorzugt ist, dass als Bindersystem eines ausgewählt wird, bei dem mindestens ein organisches Polymer, das in der Zusammensetzung enthalten ist, beim Trocknen der Zusammensetzung verfilmt. In manchen Ausführungsvarianten wird als Bindersystem eines ausgewählt, das über mindestens einen thermischen Vernetzer oder/und über mindestens einen Photoinitiator chemisch, chemisch-thermisch oder/und radikalisch vernetzt werden kann oder vernetzt wird.

Es kann für manche Anwendungen wichtig sein, dass die leitfähigen Polymere, die gebildet werden, mit den Bestandteilen z.B. eines Bindemittel-reichen Systems (= Bindersystems) wie z.B. eines Lack-Systems kompatibel sind und nicht z.B. durch den pH-Wert des Bindersystems beeinträchtigt werden, wenn die Partikel in ein Bindersystem eingebracht werden. In manchen Ausführungsvarianten kann es vorteilhaft sein, chemische Bedingungen eines Puffersystems auszuwählen, was helfen kann, eine Überoxidation des leitfähigen Polymers zu vermeiden.

Kationisch stabilisierte Bindersysteme weisen häufig einen pH-Wert im Bereich von 1 bis 7, oft im Bereich von 2 bis 6, vielfach im Bereich von 3,5 bis 4,5 auf. Anionisch stabilisierte Bindersysteme weisen häufig einen pH-Wert im Bereich von 6 bis 11, oft im Bereich von 7 bis 11, vielfach im Bereich von 7,5 bis 8,5 auf. Daneben gibt es eine Reihe von Bindersystemen, die sterisch (nicht-ionisch) stabilisiert sind und daher oft sowohl im sauren, als auch im basischen Bereich, vielfach im pH-Wert-Bereich von 1 bis 11, eingesetzt werden können, aber oft auch mindestens einen Emulgator oder/und mindestens ein Schutzkolloid enthalten.

In manchen Ausführungsvarianten erscheint es vorteilhaft, ein anionisch stabilisiertes Bindersystem einzusetzen, das nicht vollständig neutralisiert ist, beispielsweise durch unzureichenden Zusatz von Neutralisationsmittel. Hierdurch kann vielfach eine starke Quellung der organischen Polymere und ein stärkerer Anstieg der Viskosität der Zusammensetzung vermindert oder vermieden werden. Dadurch lässt sich oft auch eine bessere und feinere Verteilung der Komponenten in der daraus entstehenden Beschichtung erzielen. Außerdem ist es teilweise dadurch möglich, die erfindungsgemäße Zusammensetzung in höherer Konzentration als bei anderen Arten der Filmbildung einzusetzen.

Vorzugsweise besteht das Bindersystem vorwiegend, im Wesentlichen oder gänzlich aus Bindemitteln, die Kunstharze sind. Neben den Kunstharzen kann das Bindersystem auch gegebenenfalls geringe Anteile an Monomeren, Weichmachern wie z.B. auf Basis Adipin, Citrat bzw. Phthalat, chemischen bzw. chemisch-thermischen Härtern oder/und Photoinitiatoren enthalten. Der Gehalt an Bindemitteln (= Bindersystem), insbesondere vorwiegend oder gänzlich bestehend aus Kunstharzen einschließlich gegebenenfalls auch zugesetzter Monomere, chemischer bzw. chemisch-thermischer Härter, Photoinitiatoren oder/und Weichmacher, in der Bindemittel-reichen Beschichtung, die nicht aus den beschichteten organischen Partikeln stammen oder zu diesen gehören, liegt vorzugsweise im Bereich von 40 bis 99 Gew.-% oder von 50 bis 98 Gew.-%, besonders bevorzugt im Bereich von 55 bis 92 Gew.-%, ganz besonders bevorzugt im Bereich von 60 bis 90 Gew.-%. Der Begriff "Kunstharze" umfasst hierbei Monomere, Oligomere, Polymere, Copolymere, Blockcopolymere, Pfropfcopolymere und deren Mischungen, wobei Monomere in der Regel nur den chemisch bzw. chemisch-thermisch oder/und radikalisch vernetzenden Bindersystemen zugesetzt werden. Vielfach werden der ein Bindersystem enthaltenden Zusammensetzung als Bindemittel im wesentlichen nur organische Oligomere, organische Polymere oder/und organische Copolymere zugesetzt.

Das Bindersystem enthält vorzugsweise mindestens ein Kunstharz wie mindestens ein organisches Oligomer, mindestens ein organisches Polymer, mindestens ein organisches Copolymer oder/und deren Mischungen, insbesondere mindestens ein Kunstharz auf der Basis von Acrylat, Ethylen, Ionomer, Polyester, Polyurethan, Siliconpolyester, Epoxid, Phenol, Styrol, Melamin-Formaldehyd, Harnstoff-Formaldehyd oder/und Vinyl. Das Bindersystem kann vorzugsweise im Wesentlichen ein Kunstharzgemisch aus mindestens einem Polymer oder/und mindestens einem Copolymer sein, das jeweils unabhängig voneinander einen Gehalt an Kunstharzen auf der Basis von Acrylat, Epoxid, Ethylen, Harnstoff-Formaldehyd, Ionomer, Phenol, Polyester, Polyurethan, Styrol, Styrolbutadien oder/und Vinyl enthält. Hierbei kann es sich unter anderem auch um jeweils mindestens ein kationisch, anionisch oder/und sterisch stabilisiertes Kunstharz bzw. deren Dispersion oder/und sogar deren Lösung bzw. Emulsion handeln. Der Begriff Acrylat im Sinne dieser Anmeldung schließt Acrylsäureester, Polyacrylsäure, Methacrylsäureester, Methacrylat und deren weitere Derivate ein. Ein Teil oder alle Bindemittel können gegebenenfalls auch jeweils mindestens eine SilylGruppe aufweisen oder/und bei Zusatz von Silan/Siloxan/Polysiloxan zu der Zusammensetzung auch silyliert werden.

Das Bindersystem kann vorzugsweise jeweils mindestens eine Komponente auf der Basis von
Acryl-Polyester-Polyurethan-Copolymerisat,
Acryl-Polyester-Polyurethan-Styrol-Copolymerisat,
Acrylsäureester,
Acrylsäureester-Methacrylsäureester, ggf. mit freien Säuren
oder/und Acrylnitril,
Ethylen-Acryl-Gemisch,
Ethylen-Acryl-Copolymerisat,
Ethylen-Acryl-Polyester-Copolymerisat,
Ethylen-Acryl-Polyurethan-Copolymerisat,
Ethylen-Acryl-Polyester-Polyurethan-Copolymerisat,
Ethylen-Acryl-Polyester-Polyurethan-Styrol-Copolymerisat,
Ethylen-Acryl-Styrol-Copolymerisat,
Polyesterharzen mit freien Carboxylgruppen kombiniert mit Melamin-Formaldehydharzen,
einem Kunstharzgemisch oder/und Copolymerisat auf der Basis von Acrylat und Styrol,
einem Kunstharzgemisch oder/und Copolymerisat auf der Basis von Styrolbutadien,
einem Kunstharzgemisch oder/und Copolymerisat von Acrylat und Epoxid,
auf der Basis von einem Acryl-modifizierten Carboxylgruppenhaltigen Polyester zusammen mit Melamin-Formaldehyd und Ethylen-Acryl-Copolymerisat,
Polycarbonat-Polyurethan,
Polyester-Polyurethan,
Styrol,
Styrol-Vinylacetat,
Vinylacetat,
Vinylester oder/und
Vinylether enthalten.

Das Bindersystem kann aber auch vorzugsweise als Kunstharz(e) einen Gehalt an organischem Polymer, organischem Copolymer oder/und deren Mischungen auf der Basis von Carbodiimin, Polyethylenimin, Polyvinylalkohol, Polyvinylphenol, Polyvinylpyrrolidon oder/und Polyasparaginsäure, insbesondere auch deren Copolymere mit einer Phosphor enthaltenden Vinylverbindung, enthalten.

Ganz besonders bevorzugt ist auch ein Gehalt an Kunstharz auf der Basis von Acrylat, Methacrylat, Ionomer oder/und Ethylen-Acrylsäure insbesondere mit einem Schmelzpunkt im Bereich von 60 bis 95 °C oder mit einem Schmelzpunkt im Bereich von 20 bis 160 °C, vor allem im Bereich von 60 bis 120 °C.

Vorzugsweise kann mindestens 30 Gew.-% des zugesetzten Bindersystems aus verfilmbaren thermoplastischen Kunstharzen bestehen, besonders bevorzugt zu mindestens 50 Gew.-%, ganz besonders bevorzugt zu mindestens 70 Gew.-%, vor allem zu mindestens 90 oder zu mindestens 95 Gew.-%. Daneben kann die Zusammensetzung auch Gehalte, unter Umständen Restgehalte, an jeweils mindestens einem Monomer, Oligomer, Emulgator, weiteren Additivarten insbesondere für die Stabilisierung der Dispersion des Bindersystems oder/und der leitfähiges Polymer enthaltenden Partikel, Härter, Photoinitiator oder/und kationisch polymerisierbare Substanz enthalten. Der Gehalt an Monomer, Oligomer, Emulgator und weiteren Additiven für Dispersionen beträgt - ohne Filmbildungshilfsmittel - meistens weniger als 8 oder weniger als 5 Gew.-%, oft weniger als 2 Gew.-%, evtl. weniger als 1 Gew.-%. Die Zusammensetzung von Härtern und entsprechend dann gegebenenfalls auch zugesetzten vernetzbaren Stoffen sowie die entsprechenden Maßnahmen hierzu sind grundsätzlich bekannt.

Vorzugsweise können die Molekulargewichte der zugesetzten Kunstharze im Bereich von mindestens 1000 u, besonders bevorzugt von mindestens 5000 u, ganz besonders bevorzugt von 20.000 bis 200.000 u liegen. Vorzugsweise weisen die einzelnen thermoplastischen Komponenten des Bindersystems, die der Zusammensetzung zugesetzt werden oder enthalten sind, Molekulargewichte im Bereich von 20.000 bis 200.000 u auf, insbesondere im Bereich von 50.000 bis 150.000 u.

Vorzugsweise kann das Bindersystem aus mindestens 40 Gew.-% hochmolekularen Polymeren bestehen, besonders bevorzugt aus mindestens 55 Gew.-%, ganz besonders bevorzugt aus mindestens 70 Gew.-%, vor allem aus mindestens 85 Gew.-%, insbesondere aus mindestens 95 Gew.-%, bezogen auf Feststoffgehalte. Insbesonders wenn mindestens 85 Gew.-% des Bindersystems aus hochmolekularen Polymeren besteht, ist es oft nicht erforderlich, Härter wie Isocyanate oder Photoinitiatoren wie Benzophenone zur chemischen, chemisch-thermischen oder radikalischen Vernetzung sowie entsprechend vernetzbare Kunstharze zuzusetzen, damit die erfindungsgemäße Beschichtung gute Eigenschaften erzielt. Denn es gelingt dann oft, durch das Verfilmen einen geschlossenen, festen, hochwertigen Film auszubilden, ohne eine Vernetzung auszuführen.

Das Bindersystem enthält vorzugsweise mindestens einen Anteil an mindestens einem Polymer oder/und mindestens einem Copolymer mit einer Säurezahl im Bereich von 2 bis 200, oft im Bereich von 3 bis 120, teilweise im Bereich von 4 bis 60.

Das Bindersystem enthält vorzugsweise mindestens einen Anteil an mindestens einem Polymer oder/und mindestens einem Copolymer mit einer Mindestfilmbildungstemperatur MFT im Bereich von - 10 bis + 99 °C, besonders bevorzugt im Bereich von 0 bis 90 °C, insbesondere ab 5 °C; ganz besonders vorteilhaft ist es, wenn der organische Filmbildner mindestens zwei insbesonders thermoplastische Polymere oder/und Copolymere zumindest im Anfangsstadium - denn die thermoplastischen Bestandteile können bei der weiteren Behandlung und Reaktion zumindest teilweise ihre thermoplastischen Eigenschaften verlieren oder verringern - enthält, die - soweit eine Mindestfilmbildungstemperatur angegeben werden kann - eine Mindestfilmbildungstemperatur im Bereich von 5 bis 95 °C aufweisen, insbesondere von mindestens 10 °C, wobei mindestens eines dieser Polymere oder/und Copolymere im Vergleich zu mindestens einem zweiten dieser Polymere oder/und Copolymere A) eine Mindestfilmbildungstemperatur aufweist, die um mindestens 20 °C unterschiedlich von der der anderen Komponente ist, B) eine Glasübergangstemperatur aufweist, die um mindestens 20 °C unterschiedlich von der der anderen Komponente ist, oder/und C) einen Schmelzpunkt aufweist, der um mindestens 20 °C unterschiedlich von der der anderen Komponente ist. Vorzugsweise weist die eine dieser mindestens zwei Komponenten eine Filmbildungstemperatur im Bereich von 10 bis 40 °C und die andere eine Filmbildungstemperatur im Bereich von 45 bis 85 °C auf. Der Zusatz von langkettigen Alkoholen und deren Derivaten als Filmbildungshilfsmittel kann dabei helfen, die Mindestfilmbildungstemperatur zeitweilig abzusenken und gegebenenfalls auch etwas aneinander anzugleichen. Nach der Applikation der Zusammensetzung auf der metallischen Oberfläche können die Filmbildungshilfsmittel - insbesonders während des Trocknens - entweichen und hinterlassen dann eine Beschichtung mit einer höheren Filmbildungstemperatur als sie anfänglich während des Trocknens vorliegt. Vorzugsweise liegt die Filmbildungstemperatur der organischen Filmbildner ab dem Zusatz von Filmbildungshilfsmittel(n) bis zum Trocknen im Bereich von 0 bis 40 °C, oft im Bereich von 5 bis 25 °C. Nur wenn die Filmbildungstemperatur während des Trocknens und Verfilmens überschritten wird, ergeben sich homogene Filme. Diese getrockneten Beschichtungen sind dann nicht zu weich und nicht zu klebrig, da die Mindestfilmbildungstemperatur der danach vorliegenden Kunstharze wieder ähnlich hoch wie ursprünglich ohne Zusatz von Filmbildungshilfsmittel ist. Oft liegen die Glasübergangstemperaturen bzw. die Schmelzpunkte dieser Bindemittel in etwa im Bereich der Filmbildungstemperatur, also meistens im Bereich von 0 bis 110 °C.

In einer anderen bevorzugten Ausführungsform kann eine Mischung von organischen Bindemitteln eingesetzt werden, bei denen zumindest ein Teil der Bindemittel eine Glasübergangstemperatur T_{g} von im Wesentlichen gleichen oder/und ähnlichem T_{g} aufweist. Besonders bevorzugt ist es dabei, dass mindestens ein Teil der Bindemittel eine Glasübergangstemperatur T_{g} im Bereich von 10 bis 70 °C, ganz besonders bevorzugt im Bereich von 15 bis 65 °C, insbesonders im Bereich von 20 bis 60 °C aufweist. Das Bindersystem enthält dann vorzugsweise mindestens einen Anteil an mindestens einem Polymer oder/und mindestens einem Copolymer mit einer Mindestfilmbildungstemperatur MFT im Bereich von - 10 bis + 99 °C, besonders bevorzugt im Bereich von 0 bis 90 °C, insbesondere ab 5 °C oder ab 10 °C. Hierbei ist es besonders bevorzugt, dass mindestens zwei, wenn nicht sogar alle Bestandteile des Bindersystems eine Mindestfilmbildungstemperatur in einem dieser Temperaturbereiche aufweisen - soweit eine Mindestfilmbildungstemperatur angegeben werden kann.

Besonders vorteilhaft ist es, wenn das Bindersystem bei der Trocknung verfilmt. Besonders bevorzugt ist es, wenn der Zusammensetzung Bindemittel zugesetzt werden, die zu mindestens 80 Gew.-% thermoplastische Eigenschaften aufweisen, insbesondere zu mindestens 90 Gew.%.

Häufig liegen die Gehalte an Bindersystem oder/und an Kunstharzen bezogen auf den Feststoffgehalt der ein Bindersystem enthaltenden Zusammensetzung im Bereich von 10 bis 95 Gew.-% oder von 20 bis 92 Gew.-%, besonders bevorzugt im Bereich von 30 bis 90 Gew.-%, insbesondere etwa bei 35, 40, 45, 50, 55, 60, 63, 66, 69, 72, 75, 78, 81, 84 oder 87 Gew.-%.

Daneben können insbesondere Gehalte an Additiven wie zum Beispiel Biozide, Chelate, Entschäumer, Filmbildungshilfsmittel wie z.B. langkettige Alkohole, Emulgatoren, Gleitmittel, Haftvermittler z.B. auf Basis von Silanen bzw. Polysiloxanen, Komplexbildner, anorganische oder/und organische Korrosionsinhibitoren, Netzmittel wie zum Beispiel Tenside, Pigmente wie z.B. Korrosionsschutzpigmente, Säurefänger, Schutzkolloide, Schwermetallverbindungen als basische Vernetzungsmittel, Silane/Siloxane/Polysiloxane zum Beispiel zur Silylierung der organischen Verbindungen, Stabilisatoren zum Beispiel für die Kunstharze, für die Komponenten des Bindersystems oder/und für die leitfähiges Polymer enthaltenden Partikel oder/und Wachse wie zum Beispiel Polyethylenwachse, Verbindungen auf Basis von Al, Ce, La, Mn, SE, Mo, Ti, W, Y, Zn und Zr - vorzugsweise solche mit korrosionsschützenden Eigenschaften, Weichmacher sowie Lösemittel bzw. entsprechende Reaktionsprodukte in der Zusammensetzung enthalten sein. Insbesondere wird der erfindungsgemäßen Zusammensetzung mindestens ein Additiv zugesetzt ausgewählt aus der Gruppe bestehend aus Bioziden, Chelaten, Emulgatoren, Entschäumern, Filmbildungshilfsmitteln, Gleitmittels, Haftvermittlern, Komplexbildnern, anorganischen oder/und organischen Korrosionsinhibitoren, Netzmitteln, Pigmenten, Säurefängern, Schutzkolloiden, Silanen/Siloxanen/Polysiloxanen, Stabilisatoren, Tensiden, Vernetzungsmitteln, Weichmachern, Aluminium-Verbindungen, Cer-Verbindungen, Lanthan-Verbindungen, Mangan-Verbindungen, Selten-Erd-Verbindungen, MolybdänVerbindungen, Titan-Verbindungen, Wolfram-Verbindungen, Yttrium-Verbindungen, Zink-Verbindungen und Zirkonium-Verbindungen. Die Summe aller zugesetzten Additive ohne die Filmbildungshilfsmittel in der Zusammensetzung beträgt oft im Wesentlichen 0 Gew.-% oder 0,05 bis 10 Gew.-%, häufig 0,1 bis 6 Gew.-%, manchmal 0,15 bis 4 Gew.-%, manchmal 0,2 bis 2 Gew.-%.

Hierbei kann bei Bedarf das Schutzkolloid ein Polyvinylalkohol, der Säurefänger Ammoniak bzw. ein Acetat bzw. der Komplexbildner Ammoniak, Citronensäure, EDTA bzw. Milchsäure sein; der Stabilisator kann ausgewählt werden aus wasserlöslichen Polymeren auf Basis von Polyvinylalkohol, Polyvinylalkylether, Polystyrolsulfonat, Polyethylenoxid, Polyalkylsulfonat, Polyarylsulfonat, anionischen oder/und kationischen Tensiden, quaternären Ammoniumsalzen und tertiären Aminen.

Vorzugsweise werden der Zusammensetzung leitfähiges Polymer enthaltende Partikel zugesetzt - insbesondere in einem Partikelgemisch oder auch getrennt zugesetzt -, bei dem mindestens zwei Partikelarten eingesetzt werden, die deutlich unterschiedliche Partikelgrößenverteilungen aufweisen oder/und bei dem mindestens zwei unterschiedlich hergestellte Partikelarten eingesetzt werden. Die Partikelarten können deutlich unterschiedliche Partikel nur einer der sechs Arten derartiger Partikel sein oder aus mindestens zwei der Arten 1.) bis 6.) ausgewählt sein.

Vor der Zugabe der leitfähiges Polymer enthaltenden Partikel, insbesondere der beschichteten anorganischen Partikel, müssen diese in manchen Ausführungsformen vor Zugabe in eine Flüssigkeit oder in eine Zusammensetzung durch Bewegen wie z.B. längeres Rühren oder/und durch Scheren wie z.B. bei der Mahlung redispergiert werden, um sie homogen zu verteilen bzw. homogen verteilt zu halten. Hierbei sollen diese und möglicherweise auch weitere Partikel mit der Flüssigkeit gut benetzt, gegebenenfalls auch im Wesentlichen in ihre Einzeiteilchen (Primärpartikel) überführt und homogen verteilt werden.

Leitfähige Polymere: In der erfindungsgemäßen Bindemittel-reichen Zusammensetzung kann die Konzentration der leitfähiges Polymer enthaltenden Partikel in weiten Bereichen variiert werden, vorzugsweise im Bereich von 0,1 bis 40 Gew.-%, besonders bevorzugt im Bereich von 0,5 bis 30 Gew.-%, insbesondere im Bereich von 1 bis 20, von 2 bis 15 oder von 3 bis 10 Gew.-%.

Bei manchen Ausführungsvarianten liegt der Gehalt an leitfähigen Polymeren in der Beschichtung zum Schutz metallischer Oberflächen jedoch bei Werten von etwa 0,5, 1, 1,5, 2, 2,5, 3, 3,5, 4, 4,5, 5, 5,5 6, 7 bzw. 8 Gew.-%. Insbesondere liegt der Gehalt an leitfähigen Polymeren in dieser leitfähigen Beschichtung häufig im Bereich von 0,3 bis 10 Gew.-%, besonders bevorzugt im Bereich von 0,6 bis 8 Gew.-%, ganz besonders bevorzugt im Bereich von 0,9 bis 6 Gew.-%, vor allem im Bereich von 1,2 bis 4 Gew.-%.

Vorzugsweise liegt der Gehalt an leitfähiges Polymer enthaltenden Partikeln ohne Berücksichtigung des Gehalts an leitfähigem Polymer oder/und mit Berücksichtigung des Gehalts an leitfähigem Polymer in der Bindemittel-reichen Beschichtung bei Werten von etwa 1, 2, 3, 4, 5, 6, 7, 8, 9, 10, 12, 14, 16, 18, 20, 22, 24, 26, 28, 30, 32, 34, 36 bzw. 38 Gew.-%. Insbesondere liegt der Gehalt an Partikeln einschließlich ihrer Gehalte an leitfähigem Polymer oder nur an Partikelkernen in der Beschichtung der metallischen Oberfläche im Bereich von 0,8 bis 40 Gew.-%, besonders bevorzugt im Bereich von 1,4 bis 33 Gew.-%, ganz besonders bevorzugt im Bereich von 2 bis 25 Gew.-%, vor allem im Bereich von 2,5 bis 18 Gew.-%.

Die leitfähiges Polymer enthaltenden Partikel können in vielen Ausführungsvarianten auf einfache Weise in die Zusammensetzung eingemischt werden. Vorzugsweise wird darauf geachtet, dass in der gebildeten Dispersion keine oder nahezu keine Agglomeration und Koagulation auftritt. Diese kann insbesondere bei hohen Konzentrationen und bei stärker ionischen Komponenten auftreten.

Die chemischen Systeme sind häufig entsprechend dem pH-Wert abzustimmen. Bei sauren Bindersystemen werden teilweise eher leitfähige Polymere auf Basis von Polypyrrol, bei basischen Systemen teilweise eher solche auf Basis von Polythiophen eingesetzt.

Wenn sich die Depotsubstanz(en) nicht mit Bindemittel(n) insbesondere bei für die Depotsubstanz(en) zu hohem pH-Wert vertragen, kann es zur Deaktivierung ("Überoxidation") der Depotsubstanz(en) kommen. Bei der Deaktivierung verliert z.B. das leitfähige Polymer die elektrische Leitfähigkeit, so dass die eingebauten Anionen nicht mehr freigesetzt werden können. Daher ist darauf zu achten, dass ein für alle Komponenten der Beschichtung verträglicher pH-Wert eingestellt wird und dass die Komponenten der Zusammensetzung entsprechend ausgewählt werden.

Die Perkolationsschwelle ist der Grenzwert, ab dem ein elektrisch leitfähiger Pfad aufgebaut ist. Der Aufbau eines Leitfähigkeitspfades kann die zusammenhängende Kontaktierung einer Vielzahl von leitfähigen oder/und leitfähig beschichteten Partikeln bedingen. Insbesondere bei einer vergleichsweise dünnen Hülle an leitfähigem Polymer auf Partikeln, aber auch generell kann ein Volumenanteil am Volumen der entstehenden Beschichtung oder ein Gewichtsanteil der Feststoffe der Zusammensetzung bzw. der Beschichtung jeweils vorzugsweise im Bereich von 10 bis 90 % oder von 15 bis 85 % erforderlich oder förderlich sein, um ausreichende viele Leitfähigkeitspfade aufzubauen bzw. vorzuliegen zu haben. Besonders bevorzugt ist ein Prozentsatz im Bereich von 20 bis 78 % oder von 25 bis 70 %, ganz besonders im Bereich von 30 bis 60 %. Diese besonders bevorzugten Bereiche können jedoch auch deutlich verschoben sein, wenn deutlich kleinere oder größere Partikel eingesetzt werden.

Besonders bevorzugt ist die Verwendung von leitfähiges Polymer enthaltenden Partikeln mit einer mittleren Partikelgröße im Bereich von 50 bis 1500 nm, ganz besonders bevorzugt von 100 bis 1000 nm. Durch die Verwendung von leitfähigen Polymeren als Hüllmaterial auf Partikeln ist eine bessere und gleichmäßigere Verteilung des leitfähigen Polymers in der Zusammensetzung und in der Beschichtung erzielbar. Die Art der Verteilung kann insbesondere durch die Partikelgrößenverteilung und die Dickenverteilung der Hüllen gesteuert werden. Eine elektrochemische Behandlung wie z.B. eine vorausgehende Passivierung mit Oxalat wird in der Regel nicht genutzt. Vorzugsweise ist die mindestens eine Schicht, die zur Vorbehandlung bzw. Passivierung der metallischen Oberfläche dienen soll/kann, nicht mit den gleichen Anionen passiviert, die auch im leitfähigen Polymer eingelagert sind.

Besonders bevorzugt enthalten die leitfähige Polymere bewegliche korrosionsschützende Anionen, die für eine zu schützende metallische Oberfläche, die mit einer organischen Beschichtung beschichtet wird, in der leitfähiges Polymer enthaltenden Partikel z.B. in Form von Pulver verteilt vorliegt, auf der metallischen Oberfläche zusätzlich eine delaminationshindernde oder/und haftvermittelnde Wirkung ermöglichen.

Bei der Einbringung von leitfähiges Polymer enthaltenden Partikeln erscheint es besonders interessant, die Vorteile der Verfilmung organischer Partikel zu nutzen, weil dadurch oft homogenere und nahezu oder vollständig verdichtete Filme während der Trocknung und somit oft besser geschlossene Filme als ohne Verfilmung erzeugt werden. Besonders bevorzugt ist es, wenn leitfähig beschichtete organische Partikel in dieser Bindemittel-reichen Beschichtung so eingesetzt werden, dass auch die Kerne der organischen beschichteten Partikel zumindest teilweise verfilmen. Zur Optimierung des Verfilmens ist zu beachten, dass möglichst viele oder alle organischen polymeren Bestandteile der Bindemittel-reichen Beschichtung einschließlich der organischen Kerne eine ähnliche oder aufeinander angepasste oder zielstrebig abgestufte Glasübergangstemperatur T_{g} oder/und Mindestfilmbildungstemperatur MFT aufweisen, um eine möglichst weitgehende bzw. homogene Verfilmung zu ermöglichen. Falls die Glasübergangstemperatur T_{g} oder/und die Mindestfilmbildungstemperatur MFT der verschiedenen verfilmbaren organischen Komponenten hierbei nicht ausreichend nahe beieinander liegen oder/und weiter abgesenkt werden sollen, wird vorzugsweise mindestens ein Filmbildungshilfsmittel wie z.B. ein langkettiger Alkohol oder/und deren Derivate zugesetzt, insbesondere solche Alkohole oder/und deren Derivate mit 4 bis 20 C-Atomen wie ein Butandiol, ein Ethylenglykolether wie Ethylenglykolmonobutylether, Ethylenglykolmonoethylether, Ethylenglykolmonomethylether, Ethylglykolpropylether, Ethylenglykolhexylether, Diethylenglykolmethylether, Diethylenglykolethylether, Diethylenglykolbutylether, Diethylenglykolhexylether oder ein Polypropylenglykolether wie Propylenglykolmonomethylether, Dipropylenglykolmonomethylether, Tripropylenglykolmonomethylether, Propylenglykolmonobutylether, Dipropylenglykolmonobutylether, Tripropylenglykolmonobutylether, Propylenglykolmonopropylether, Dipropylenglykolmonopropylether, Tripropylenglykolmonopropylether, Propylenglykolphenylether, Trimethylpentandioldiisobutyrat oder/und ein Polytetrahydrofuran.

Mit dem Zusatz mindestens eines Filmbildungshilfsmittels kann die Mindestfilmbildungstemperatur MFT abgesenkt werden. Damit ist eine temporäre Absenkung dieser Eigenschaften insbesondere für kurze Zeit während des Trocknens möglich. Dies ist für eine optimale Filmbildung durch Verfilmen erforderlich. Schließlich können die Filmbildungshilfsmittel verdampfen, insbesondere beim Trocknen des Nassfilms bzw. des daraus entstehenden Trockenfilms. Danach ist die Oberfläche der Beschichtung nicht mehr klebrig, wie das bei Beschichtungen von niedriger Glasübergangstemperatur T_{g} bzw. Mindestfilmbildungstemperatur MFT ohne Filmbildungshilfsmittel sonst auf Dauer wäre, da die Mindestfilmbildungstemperatur MFT beim oder/und nach dem Verfilmen aufgrund des Entweichens der Filmbildungshilfsmittel wieder ansteigt und da sich dann wieder eine ähnliche Härte und eine ähnliche Flexibilität der Kunstharze nach der Trocknung und nach dem Verfilmen einstellt wie sie ursprünglich bei diesen Kunstharzen gewesen sind.

Bei der Verfilmung verlieren auch die organischen Kerne (Partikel) ihre partikuläre Struktur, wenn ihre Glasübergangstemperaturen T_{g} bzw. Mindestfilmbildungstemperatur MFT ausreichend nahe beieinander liegen und wenn entsprechende Temperaturen erreicht oder/und überschritten werden. Hierbei wurde jetzt gefunden, dass die verfilmten organischen Filme besonders homogen verdichtet sind und darin die Bestandteile des leitfähigen Polymers mikrodispers und besonders fein und homogen verteilt werden können. Die verschiedenen Arten leitfähiges Polymer enthaltenden Partikel, insbesondere die typischen Core-Shell-Partikel, die feinen Partikel im Wesentlichen bestehend aus leitfähigem Polymer oder/und die sogenannten "Haftvermittler-Partikel", die sich gegebenenfalls in einer Partikelmischung befinden, können bei der Filmherstellung unter geeigneten Bedingungen - z.B. wenn sie in Form von Micellen vorliegen oder dazu überführt werden - aufgeteilt bzw. insbesondere bei der Auflösung dieser Micellen in der verfilmenden bzw. verfilmten Beschichtung mikrodispers und oft homogen verteilt werden. Die mikrodispersen Teilchen der leitfähigen Polymere, die dann z.B. aus den Partikelhüllen bei der Verfilmung entstehen, weisen oft eine Größe im Bereich von 5 bis 100 nm auf. Wenn jedoch die Glasübergangstemperatur T_{g} bzw. Mindestfilmbildungstemperatur MFT der organischen Partikel deutlich höher war als die Glasübergangstemperatur T_{g} bzw. Mindestfilmbildungstemperatur MFT der organischen Bindemittel, in der die organischen Partikel verteilt vorliegen, dann können die organischen Partikel im Wesentlichen unverändert erhalten bleiben und ihre Hülle aus leitfähigem Polymer bleibt ebenfalls im Wesentlichen unverändert erhalten.

Für das erfindungsgemäße Verfahren zur Herstellung einer Bindemittel-reichen, leitfähige Polymere enthaltenden Beschichtung besonders bevorzugt sind vorwiegend oder vollständig beim Trocknen verfilmende/verfilmte oder/und (gegebenenfalls nachträglich) chemisch oder/und chemisch-thermisch gehärtete oder/und radikalisch vernetzte Beschichtungen. Unter Verfilmung im Sinne dieser Anmeldung wird die Bildung eines homogenen Filmes aus der Bindemittel-reichen Zusammensetzung und den darin enthaltenen beschichteten organischen Partikeln unter Einfluss thermischer Energie insbesondere auf der Metalloberfläche verstanden. Hierbei bildet sich aus den vorzugsweise elastischen und weichen Bindemittelteilchen ein zusammenhängender homogener Film. Der Beginn des Verfilmungsprozesses ist von der Glasübergangstemperatur der verwendeten organischen Polymerpartikel oder/und der Bindemittel abhängig. Vorzugsweise ist die Glasübergangstemperatur der organischen Polymerpartikel oder/und der Bindemittel nahe beieinander, so dass beide bei gleicher Temperatur homogen verfilmt werden können. Hierbei ist darauf zu achten, dass die Verfilmbarkeit einer verfilmbaren Zusammensetzung durch die eingebrachten Partikel nicht beeinträchtigt wird.

Häufig liegen die Gehalte an Filmbildungshilfsmitteln bezogen auf den Feststoffgehalt der ein Bindersystem enthaltenden Zusammensetzung im Bereich von 0,01 bis 50 Gew.-%, besonders bevorzugt im Bereich von 0,1 bis 30 Gew.-%, oft im Bereich von 0,1 bis 10 Gew.-%, von 0,1 bis 5 Gew.-% oder von 0,1 bis 2 Gew.-%, insbesondere etwa bei 0,15, 0,21, 0,27, 0,33, 0,39, 0,45, 0,51, 0,57, 0,63 0,70, 0,76, 0,82, 0,88, 0,94, 1, 1,1, 1,2, 1,3, 1,4, 1,5, 1,6, 1,7, 1,8, 1,9, 2, 2,2, 2,4 oder 2,7 Gew.-%. Je weicher und elastischer die eingesetzten Kunstharze sind, desto geringer kann der Gehalt an Filmbildungshilfsmitteln gehalten werden; umgekehrt, je härter und fester die eingesetzten Kunstharze sind, desto höher wird der Gehalt an Filmbildungshilfsmitteln oft gewählt werden.

Die wässerige, organisches Polymer enthaltende Zusammensetzung kann insbesondere mit einem pH-Wert im Bereich von 0,5 bis 12 eingesetzt werden. Besonders bevorzugt ist bei Verwendung eines Bindersystems von kationisch stabilisierten Polymeren ein pH-Wert im Bereich von 1 bis 7, insbesondere im Bereich von 2 bis 6 oder von 3,5 bis 4,5, bei Verwendung eines Bindersystems von anionisch stabilisierten Polymeren ein pH-Wert im Bereich von 6 bis 11, insbesondere im Bereich von 7 bis 10 oder von 7,5 bis 8,5, bzw. bei Verwendung eines ionisch nicht-stabilisierten Bindersystems ein pH-Wert im Bereich von 1 bis 11.

Vorzugsweise wird die erfindungsgemäße Zusammensetzung durch Aufwalzen, Fluten, Aufrakeln, Spritzen, Sprühen, Streichen oder/und Tauchen und gegebenenfalls durch nachfolgendes Abquetschen mit einer Rolle aufgetragen.

Vorzugsweise wird die wässerige Zusammensetzung bei einer Temperatur im Bereich von 5 bis 50 °C auf die metallische Oberfläche aufgebracht, wird die metallische Oberfläche bei der Applikation der Beschichtung auf Temperaturen im Bereich von 5 bis 120 °C gehalten oder/und wird die beschichtete metallische Oberfläche bei einer Temperatur im Bereich von 20 bis 400 °C PMT (peak-metal-temperature) getrocknet.

In manchen Ausführungsvarianten werden Bänder mit einer erfindungsgemäßen Zusammensetzung beschichtet und zu einem Coil aufgewickelt, gegebenenfalls nach einer Abkühlung auf eine Temperatur insbesondere im Bereich von 20 bis 70 °C.

Vorzugsweise wird die zu beschichtende metallische Oberfläche vor der Beschichtung mit mindestens einer Zusammensetzung nach Anspruch 1 oder 2 gereinigt, gebeizt, gespült, mit einer Passivierungsschicht, Behandlungsschicht, Vorbehandlungsschicht, Ölschicht oder/und mit einer dünnen oder sehr dünnen Beschichtung, die vorwiegend leitfähiges Polymer enthält und nur begrenzt oder vollständig geschlossen ist, versehen und gegebenenfalls von dieser Schicht später zumindest teilweise befreit.

Vorzugsweise wird die beschichtete metallische Oberfläche nach der Beschichtung mit einer Zusammensetzung nach Anspruch 1 oder 2 mit mindestens einer weiteren Beschichtung auf Basis von einer Nachspüllösung, von organischem Polymer, Lack, farbgebendem Lack, Klebstoff, Klebstoffträger oder/und Öl versehen. Nachspüllösungen haben oft die Aufgabe, eine bereits aufgebrachte Beschichtung abzudichten, zu passivieren oder/und zu modifizieren.

Vorzugsweise werden die beschichteten Metallteile, Bänder, Bandabschnitte, Drähte oder Profile umgeformt, lackiert, mit Polymeren wie z.B. PVC beschichtet, bedruckt, beklebt, heißgelötet, geschweißt oder/und durch Clinchen oder andere Fügetechniken miteinander oder mit anderen Elementen verbunden.

Die getrocknete und gegebenenfalls auch ausgehärtete Beschichtung zum Schutz einer metallischen Oberfläche weist vielfach eine Pendelhärte im Bereich von 30 bis 190 s auf, gemessen mit einem Pendelhärteprüfer nach König nach DIN 53157. Vielfach weist diese Beschichtung eine derartige Flexibilität auf, dass beim Biegen über einen konischen Dorn bei einem Dornbiegetest weitestgehend nach DIN ISO 6860 für einen Dorn von 3.2 mm bis 38 mm Durchmesser - jedoch ohne die Testfläche anzureißen - keine Risse länger als 2 mm entstehen, die bei der anschließenden Benetzung mit Kupfersulfat durch Farbumschlag infolge Kupferabscheidung auf der aufgerissenen metallischen Oberfläche erkennbar werden.

Die Schichtdicke der Bindemittel-reichen, verfilmten oder/und auch gehärteten Beschichtung, die mit der erfindungsgemäßen Bindemittel-reichen Zusammensetzung hergestellt wird, kann grundsätzlich im Bereich von 0,2 bis 120 µm eingestellt werden. Je nach Applikation werden sich jedoch Schwerpunkte der Schichtdicke dieser Beschichtung zeigen, z.B. im Bereich von 0,1 bis 3 µm, von 0,3 bis 5 µm, von 0,5 bis 10 µm, von 2 bis 20 µm bzw. von 5 bis 50 µm. Diese Beschichtung kann gegebenenfalls auch aus mehreren, nacheinander aufgetragenen Einzelschichten bestehen. Ein Schichtsystem aus z.B. 2, 3, 4 oder 5 Schichten kann dann oft eine Gesamtdicke im Bereich von 10 bis 200 µm, vielfach im Bereich von 20 bis 150 µm aufweisen.

Die elektrische Leitfähigkeit der erfindungsgemäßen, leitfähige Polymere enthaltenden Beschichtungen auf metallischen Oberflächen kann insbesondere im Bereich von 10⁻⁸ bis 0,1 S/cm liegen, insbesondere im Bereich von 10⁻⁶ bis 10⁻¹ S/cm, oft im Bereich von 10⁻⁵ bis 10⁻¹ S/cm, gegebenenfalls im Bereich von 10⁻⁴ bis 10⁻² S/cm.

Wenn Pulver aus leitfähigem Polymer in eine organische Zusammensetzung wie z.B. in einen Lack oder in eine lackähnliche, vorwiegend oder gänzlich organische Beschichtung eingebracht wird, ist die Farbe der Pulverteilchen ohne hellen Kern deutlich intensiver und kann als Zusatz zu einer organischen Beschichtungszusammensetzung der daraus gebildeten Beschichtung einen unerwünschten Farbeindruck bzw. eine Fleckigkeit oder ein Changieren verleihen. Die elektrische Leitfähigkeit der derart hergestellten Beschichtungen kann ungleichmäßig sein und daher u.U. einen unvollständigen, nämlich lokal unterschiedlich guten bzw. schlechten Korrosionsschutz bieten: Die Perkolationsschwelle, ab der ein Leitfähigkeitspfad vorliegt, ist hierbei höher.

In ersten Versuchen haben sich Partikel auf Basis von Siliciumdioxidnanopartikeln in einer Beschichtung für metallische Oberflächen als besonders korrosionsschützend bewährt, die mit Zusammensetzungen auf Basis von Salicylat, Titan- oder/und Zirkonkomplexfluorid mit Fe³⁺, H₂O₂, Molybdat oder/und Phosphomolybdat als Oxidationsmittel sowie leitfähigem Polymer auf Basis von Polypyrrol beschichtet wurden und mit diesen Partikeln in eine Matrix auf Basis von saurem Polymer enthaltend Styrolacrylat eingebracht sind. Hierbei wurde auf feuerzinkbeschichteten Stahlblechen sogar fast das Korrosionsschutzniveau kommerzieller Chromatbeschichtungen erreicht.

Derartige chemische Systeme mit leitfähigem Polymer sind für die flächige Beschichtung von metallischen Untergründen von besonderem Interesse, z.B. als Bestandteil einer Zusammensetzung, die insbesondere als Passivierung, als Vorbehandlung, als Pretreatmentprimer (= Primer, der anders als praktisch immer üblich ohne jede Vorbehandlungsschicht auf die metallische Oberfläche aufgebracht wird) oder als Primer auf mindestens einer Vorbehandlungsschicht dienen kann.

Als Passivierung wird im Sinne dieser Anmeldung einerseits eine Beschichtung verstanden, die auf eine metallische Oberfläche aufgebracht ist/wird und die längere Zeit nicht oder nie mit mindestens einer nachfolgenden z.B. organischen Beschichtung wie z.B. einem Primer, einem Lack oder einem Lacksystem beschichtet wird und daher oft eine erhöhte Korrosionsbeständigkeit aufweisen sollte, andererseits wird im Rahmen der Beschreibung der chemischen Effekte die Korrosionsschutzwirkung als Passivierung bezeichnet. Als Vorbehandlung wird im Sinne dieser Anmeldung eine Beschichtung verstanden, die auf eine metallische Oberfläche aufgebracht ist/wird, auf die anschließend mindestens eine organische Beschichtung wie z.B. ein Lacksystem aufgebracht wird. Als Pretreatmentprimer wird im Sinne dieser Anmeldung eine Beschichtung verstanden, die auf eine metallische Oberfläche aufgebracht ist/wird und die gleichzeitig die Funktionen einer Vorbehandlung und eines Primers in einer einzigen Beschichtung aufweist. Als Primer wird hierbei eine erste organische Beschichtung wie z.B. ein erster Lack verstanden.

### Verwendung der leitfähig beschichteten Partikel bzw. der organischen Beschichtungen:

Die leitfähiges Polymer enthaltenden Partikel können verwendet werden zur Beschichtung von Oberflächen von metallischen Bändern, Drähten, Profilen und Teilen zum Zwecke des Korrosionsschutzes, zur Beschichtung von Oberflächen zur Vermeidung einer antistatischen Aufladung oder/und einer Verschmutzung, als Elektrodenmaterial in Sensoren, in Batterien, als Elektrodenmaterial mit katalytischen Eigenschaften, als dielektrischer Zusatz für leitfähige Beschichtungen und Massen, als Füllmaterial in der elektrischen Isoliertechnik, als Farbstoff oder für Leiterglättungsschichten.

Der nach dem erfindungsgemäßen Verfahren beschichtete Gegenstand wie z.B. ein Band, ein Draht, ein Profil oder ein Teil kann verwendet werden als Drahtwicklung, Drahtgeflecht, Stahlband, Blech, Verkleidung, Abschirmung, Karosserie oder Teil einer Karosserie, Teil eines Fahrzeugs, Anhängers, Wohnmobils oder Flugkörpers, Abdeckung, Gehäuse, Lampe, Leuchte, Ampelelement, Möbelstück oder Möbelelement, Element eines Haushaltsgeräts, Gestell, Profil, Formteil komplizierter Geometrie, Leitplanken-, Heizkörper- oder Zaunelement, Stoßstange, Teil aus oder mit mindestens einem Rohr oder/und einem Profil, Fenster-, Tür- oder Fahrradrahmen oder Kleinteil wie z.B. eine Schraube, Mutter, Flansch, Feder oder Brillengestell.

### Vorteile und Überraschungseffekte der Partikel und Systeme:

Die erfindungsgemäßen Verfahren zur Herstellung einer leitfähigen Beschichtung sind für die technische Anwendung besonders geeignet, da mit bereits sehr geringen Mengen an den vergleichsweise teuren Edukten große Partikelmengen bei im Vergleich zu anderen Beschichtungsverfahren sehr einfachen Prozessschritten und geringem apparativen Aufwand beschichtet werden können. Bei den Verfahren des Standes der Technik, die zu ähnlichen Beschichtungen führen, ist jedoch der Zusatz eines Haftvermittlers wie z.B. eines Silanes, der Einbau eines sogenannten Spacers (Abstandshalter) wie z.B. einer Alkylkette in das Edukt, der Zusatz von Stabilisatoren auf Basis von wasserlöslichen Polymeren wie z.B. Hydroxymethylcellulose oder/und der Zusatz von Tensid(en) vor der Oxidation zu der Zusammensetzung anders als bei den erfindungsgemäßen Verfahren vorteilhaft, um eine bessere Haftung der Beschichtung auf der metallischen Oberfläche zu bewirken. Der Eintrag eines Haftvermittlers in ein Gemisch gestaltet sich nach dem Stand der Technik manchmal problematisch, da für jede Partikelart ein besonderer Haftvermittler entwickelt werden muss: Ein Zusatz z.B. von Tensid(en) vor der Oxidation zu der Zusammensetzung ist jedoch bei dem erfindungsgemäßen Verfahren üblicherweise nicht erforderlich.

Überraschenderweise gelang es, das Freisetzen und Wandern der Anionen vom leitfähigen Polymer zum korrodierenden Bereich und die erhoffte korrosionsschützende Wirkung der erfindungsgemäßen Beschichtungen nicht nur in sehr spezifischen Versuchen wie z.B. mit einer Raster-Kelvin-Sonde (SKP), sondern die Anreicherung der freigesetzten korrosionsschützenden Anionen im korrodierenden Bereich und eine signifikante Steigerung des Korrosionsschutzes von metallischen Unterlagen mit einer organischen Beschichtung, die leitfähiges Polymer enthält, auch im makroskopischen Bereich mit Praxis-relevanten Proben und Versuchen wie z.B. im Salzsprühtest nachzuweisen.

Überraschenderweise konnte das Verfahren zur Beschichtung von metallischen Oberflächen mit einer Beschichtung, die leitfähiges Polymer enthaltende Partikel bzw. ein Bindersystem enthält, einfach und effizient gestaltet werden. Hierbei gelang es, mit relativ geringen Mengen an leitfähigen Polymeren relativ große Oberflächen an metallischen Substraten zu beschichten.

Überraschenderweise gelang es, das leitfähige Polymer in einer Bindemittel-reichen Zusammensetzung mit Hilfe der leitfähiges Polymer enthaltenden Partikel besonders einfach, stabil und gleichmäßig zu verteilen, insbesondere beim Verfilmen.

Überraschenderweise war die Auswahl der einbaubaren Anionen bei der chemischen Polymerisation der leitfähigen Polymere fast nicht eingeschränkt.

Überraschenderweise waren die mit leitfähigem Polymer beschichteten Partikel bei der Lagerung in flüssigem Medium in breiten pH-Wert-Bereichen stabil und in diesen auch stabiler als erwartet, so dass keine Deaktivierung des leitfähigen Polymers beobachtet wurde.

Überraschenderweise sind die leitfähiges Polymer enthaltenden Partikel mechanisch außerordentlich stabil, und ihre Hüllen haften sehr gut auf den Partikeln, so dass auch bei Ultraschallbehandlungen keine Beschädigungen wahrgenommen wurden bzw. keine oder keine wesentlichen Beschädigungen sogar bei länger anhaltender Abscheidung der leitfähigen Polymere auf Partikeln im Gemisch unter Ultraschalleinwirkung beobachtet wurden.

Ferner war es überraschend, dass beschichtete Partikel, die sich während einer langen Lagerzeit aus der anfänglich stabilen Dispersion am Boden des Gefäßes ablagerten oder gelierten, wieder redispergiert werden konnten und dann ohne Nachteile in eine im Wesentlichen organische Dispersion einer lackähnlichen Zusammensetzung eingebracht und später in eine im Wesentlichen organische Beschichtung eingebaut werden konnten.

### Beispiele und Vergleichsbeispiele:

Die im Folgenden beschriebenen Beispiele sollen den Gegenstand der Erfindung beispielhaft näher erläutern.

### 1. Präparationsgang der leitfähigen Polymere und Beschichtung von anorganischen Partikeln unter Variation der Zusammensetzung des Gemisches:

Es wurde die Präparation der leitfähigen Polymere und gleichzeitig die Beschichtung der anorganischen Partikel in einem Eintopfverfahren bei einer über die Reaktionen konstant gehaltenen Temperatur jeweils im Bereich von 50 bis 60 °C gearbeitet.

Das Edukt-Gemisch wurde hergestellt, indem zu 100 ml destilliertem Wasser zuerst Isopropanol und jeweils 10 bis 15 g eines Pulvers ausgewählt aus Al₂O₃, BaSO₄, CaCO₃, CuO, SiO₂, SnO₂, TiO₂ als Anatas bzw. Rutil, ZnO, grobkristalliner Biotit-Glimmer, aufbereitetem Montmorillonit, Quarz-reichem Seesand, Töpferton bzw. daneben auch vorbehandeltes Cellulosepulver geeignet für Säulenchromatographie unter Rühren zugesetzt wurde. Anschliessend wurden 0,1 bis 0,5 ml konzentrierte Schwefelsäure zugegeben, um den pH-Wert auf Werte im Bereich von 4 bis 6 einzustellen, wobei diese Säure zugleich als Lösungsvermittler für Molybdänsäure und Monomer/Oligomer diente. Danach erfolgte der Zusatz von 0,3 ml des Monomers/Oligomers gelöst in 20 bis 50 ml Isopropanol von Raumtemperatur. Als Edukt wurde jeweils eines ausgewählt aus Pyrrol, N-Methylpyrrol und Ethylendioxythiophen. Nach einer Rührzeit von 15 bis 20 Minuten wurde eine auf die Gemisch-Temperatur vorgewärmte wässerige Molybdänsäurelösung (H₂MoO₄) von 1,5 bis 3 g/L mit einem Gehalt von etwa 20 % Isopropanol zugesetzt. Während der gesamten Reaktionszeit wurde das Gemisch gerührt. Nach einer weiteren Rührzeit im Bereich von 30 bis 150 Minuten wurden die beschichteten anorganischen Partikel und die in der Dispersion gebildeten Partikel aus leitfähigem Polymer durch Filtrieren von überschüssigem Lösemittelgemisch und Oxidationsmittel abgetrennt. Danach wurden die Partikel bei 60 bis 80 °C über 20 bis 30 Minuten im Trockenschrank getrocknet, wodurch ein trockener Filterkuchen entstand. Der Filterkuchen wurde im Mörser zerstampft und über 10 bis 15 Minuten weitestgehend homogen zermahlen. Alternativ wurde teilweise eine Kugelmühle eingesetzt. Das Mahlgut enthielt vollständig und teilweise beschichtete anorganische Partikel, isolierte Reste der Beschichtungshülle, Partikel aus leitfähigem Polymer und nicht beschichtete anorganische Partikel (Partikelmischung). Es wurde lichtmikroskopisch abgeschätzt, dass jeweils etwa 85 bis 95 % der sichtbaren Partikel leitfähig beschichtete Partikel waren. Grundsätzlich konnten hierbei anorganische Partikel mit einer mittleren Partikelgröße im Bereich von 5 nm bis 5 mm hierbei eingesetzt werden. Die anorganischen Partikel wurden beim Mahlen je nach Beschaffenheit nicht oder in geringem Umfang heruntergemahlen. Bei Partikeln größer etwa 100 bis 200 nm lagen die Partikelverteilungen der anorganischen Partikel in großer Breite der Partikelverteilung vor, unterhalb nahezu monodispers. Nur die Partikel etwa unter 100 nm waren im Wesentlichen kugelförmig. Die Beschichtung der Partikel wies eine Schichtdicke im Bereich von 2 bis 10 nm auf, beobachtet im Transmissionselektronenmikroskop. Die Gehalte an leitfähigem Polymer wurden durch Thermogravimetrie bestimmt und lagen im Bereich von 3 bis 10 Gew.- % der trockenen Partikelmischung. Bei jedem Versuch wurde eine elektrische Leitfähigkeit und somit eine erhöhte Dotierung erzielt. Die Beschichtung der leitfähigen Polymere auf den Partikeln (Core-Shell-Partikel) haftete gut, so dass die Beschichtung auch nicht schnell abgerieben oder abgemahlen wurde, auch nicht im Ultraschallbad. Es wurde eine große Zahl von Versuchen durchgeführt, von denen ein kleiner Teil mit den Angaben in Tabelle 1 wiedergegeben wird.

Zusätzlich wurde die Partikelmischung in ergänzenden Versuchen in eine gänzlich wasserfreie ethanolische Lösung oder in eine Ethylacetat-Lösung eingebracht und im Ultraschallbad dispergiert, um dann zwei Bleche in dieses Dispersion zu hängen und um die beschichteten leitfähigen Partikel über eine Kataphorese wie bei einer kathodischen Elektrotauchlackierung unter einer Spannung im Bereich von 10 und 100 V bei einer Stromstärke im Bereich von 2 bis 20 mA über eine Zeit von 1 bis 5 Minuten auf dem Kathoden-Blech niederzuschlagen. Die Kataphorese stellte für die zu beschichtenden metallischen Körper aufgrund der Kataphorese keine Korrosionsgefährdung dar - anders als bei einer Anaphorese oder bei einer Elektropolarisation. Dadurch ergab sich eine sehr gleichmäßige, dünne, haftfeste, z.T. beidseitig vollständige Beschichtung der Bleche mit der Partikelmischung. Danach wurden die beschichteten Bleche getrocknet. Die Schichtdicken wurden auf Werte im Bereich von 2 bis 15 µm abgeschätzt. Diese Beschichtung auf den Blechen war deutlich besser als wenn die Partikelmischung z.B. als Dispersion aufgestrichen worden wäre. Die Gefügestruktur der Beschichtung auf den Blechen wird im Wesentlichen durch die Morphologie der eingebauten beschichteten Partikel bestimmt. Dabei war es überraschend, dass das leitfähige Polymer bei allen Stadien der z.T. etwas drastischen Behandlung seine Eigenschaften - insbesondere seine elektrische Leitfähigkeit, seine chemische und thermische Stabilität sowie seine Korrosionsschutzeigenschaften - nicht verschlechterte.

**Tabelle 1: Zusammensetzungen der Gemische mit anorganischen Partikeln und Eigenschaften der Beschichtungen**

| Gehalte in µL, ml bzw. g | B 1 | B 2 | B 3 | B 4 | B 5 | B 6 | B 7 | B 8 | VB 9 | VB 10 | VB 11 |
|---|---|---|---|---|---|---|---|---|---|---|---|
| Pyrrol in µL | 300 | 300 | 300 | 300 | 300 | 300 | 300 | 300 | | | |
| Ethylendioxythiophen in µL | | | | | | | | | 300 | 300 | 300 |
| Benzoat in g | 6 | | | | | | | | | | |
| Nitrosalicylat in g | | 6 | | | | | | 3 | | | |
| Hexafluorotitanat in g | | | 6 | | | | | | | | |
| Salicylat in g | | | | 6 | | 6 | | | | | |
| Tartrat in g | | | | | 6 | | 6 | | | | |
| Molybdat^{*} in g | | | | 3 | 3 | | | 2 | 3 | 3 | 3 |
| Wolframat^{*} in g | | | | | | 3 | 3 | | | | |
| Ce⁴⁺-Sulfat in g | 3 | | | | | | | | | | |
| Fe³⁺-Nitrat in g | | 3 | | | | | | | | | |
| Fe³⁺-Sulfat in g | | | 3 | | | | | | | | |
| Al₂O₃ C, Degussa, 12 nm, in g | 15 | 15 | 15 | 15 | 15 | 15 | 15 | 15 | 15 | 15 | 15 |
| Isopropanol in ml | 100 | 100 | 100 | 100 | 100 | 100 | 100 | 100 | 100 | | 100 |
| dest. Wasser in ml | 150 | 150 | 150 | 150 | 150 | 150 | 150 | 150 | 150 | 250 | 200 |
| pH-Wert | 4-6 | 4-6 | 4-6 | 4-6 | 4-6 | 4-6 | 4-6 | 4-6 | 4-6 | 4-6 | 4-6 |
| Temperatur in °C | 40-60 | 40-60 | 40-60 | 40 -60 | 40 -60 | 40-60 | 40-60 | 40-60 | 40-60 | 40-60 | 40-60 |
| elektrische Leitfähigkeit in S/cm | n.b. | 10⁻² | n.b. | n.b. | n.b. | n.b. | n.b. | n.b. | n.b. | n.b. | n.b. |
| Farbe | blau | blau | grau | grau | graublau | grau | graublau | graublau | graublau | graublau | graublau |

| | | | | | | | | | | | |
|---|---|---|---|---|---|---|---|---|---|---|---|
| ^{*}Anionen mit Oxidationsmittelwirkung | | | | | | | | | | | |

### 2. Präparationsgang und Beschichtung von organischen Partikeln unter Variation der Zusammensetzung des Gemisches:

Es wurde zuerst bei Raumtemperatur ein wässeriges Edukt-Gemisch mit allen Bestandteilen einschließlich der organischen Partikel und gegebenenfalls eines Salzes, das keine oxidierenden Eigenschaften aufweist, dessen Anion aber korrosionsschützende Eigenschaften hat, gegebenenfalls auch unter Zusatz von 1 bis 10 Gew.-% Ethanol, zur Herstellung des leitfähigen Polymers angesetzt - mit Ausnahme des Oxidationsmittels. Die jeweiligen Zusammensetzungen werden in Tabelle 2 angeführt. Falls das Salz oxidierende Eigenschaften und das Anion des Salzes korrosionsschützende Eigenschaften aufwies, wurde das Salz stattdessen erst nach dem Homogenisieren zugegeben. Bei Verwendung von Molybdat bzw. Wolframat als Oxidationsmittel wurde das Edukt-Gemisch vor der Zugabe des Molybdats bzw. Wolframats auf eine Temperatur von 50 °C erwärmt, falls der pH-Wert oberhalb 3 lag. Der pH-Wert wurde mit Phosphorsäure eingestellt. Das Edukt-Gemisch wurde ca. 20 Minuten bei dieser Temperatur gerührt, um eine intensive Vermischung der Bestandteile zu ermöglichen, da sonst eine Phasentrennung hätte auftreten können. Es musste bereits bei der Zugabe des Oxidationsmittels eine gute Homogenität der Lösung (Edukt-Gemisch) bestehen.

Als organische Partikel wurde Polystyrol, Polystyrol-Butylacrylat bzw. Polybutylacrylat mit definierten Zusammensetzungen und Glasübergangstemperaturen T_{g} eingesetzt, die als wässerige Dispersionen zugesetzt wurden. Die organischen Partikel hatten fast monodisperse Partikelgrößenverteilungen und waren weitgehend kugelförmig. Die mittlere Partikelgrößenverteilung konnte zwischen 150 und 500 nm gewählt werden, wobei zu jeder dieser Verteilungen sowohl die Glasübergangstemperatur T_{g}, als auch die chemische Zusammensetzung variiert wurden.

Während des weiteren Rührens bei der gewählten Temperatur wurde Oxidationsmittel in deutlichem Überschuss zugegeben, wodurch die Polymerisation des Eduktes z.B. auf Basis von Pyrrol einsetzte. Die ursprünglich weiße Dispersion färbte sich nach einiger Zeit grau und später schwarz. Wenn die Konzentrationen geeignet gewählt wurden, traten keine Flockulationen und keine Agglomerate auf. Das Reaktionsgemisch wurde dabei mindestens 4 Stunden gerührt, um eine möglichst vollständige Reaktion zu ermöglichen. Das bewegliche korrosionsschützende Anion des Oxidationsmittels bzw. des Salzes wurde dabei als Dotierion in das aus Monomer/Oligomer gebildete leitfähige Polymer eingebaut. Die beschichteten Partikel ließen sich danach einfach z.B. durch Zentrifugieren von der übrigen Lösung bzw. Dispersion abtrennen. Dabei wurde auch der Überschuss an Oxidationsmittel und an nicht reagierten Pyrrol-Molekülen abgetrennt, weil diese Substanzen sonst z.B. durch Salzausscheidung beim Trocknen hätten stören könnten. Alternativ wurde eine Ultrazentrifugation (Dialyse) gewählt, bei der gegen destilliertes Wasser gearbeitet wurde. Das Ultrazentrifugieren ist effektiver als das Zentrifugieren. Die Dialyse wurde über 48 Stunden mit einer Cellulosemembran (10.000 MWCO) angewandt. Danach konnten die beschichteten Partikel bei Bedarf getrocknet werden, um ein Pulver z.B. für analytische Untersuchungen zu gewinnen oder um organische Lösemittel wie Alkohol zu entfernen. Eine Redispergierung in Wasser war anders als bei den beschichteten anorganischen Partikeln nicht erforderlich. Da eine nachfolgende Vermischung mit Basispolymeren vorgesehen war, war eine Trocknung nicht erforderlich. Die fertig hergestellte Dispersion (Produkt-Gemisch) erwies sich sogar über ein Jahr stabil.

Das Basispolymer wurde den angereicherten beschichteten organischen Partikeln zugesetzt. Dieser Zusammensetzung wurde dann 10 Minuten lang gerührt, bis eine gute Durchmischung erreicht war. Diese Zusammensetzung war als organisches Beschichtungsgemisch - insbesondere als chromfreier Primer - sofort einsatzbereit und konnte entsprechend den Applikationsbedingungen der Basispolymere auf metallische Oberflächen aufgebracht und danach verfilmt werden.

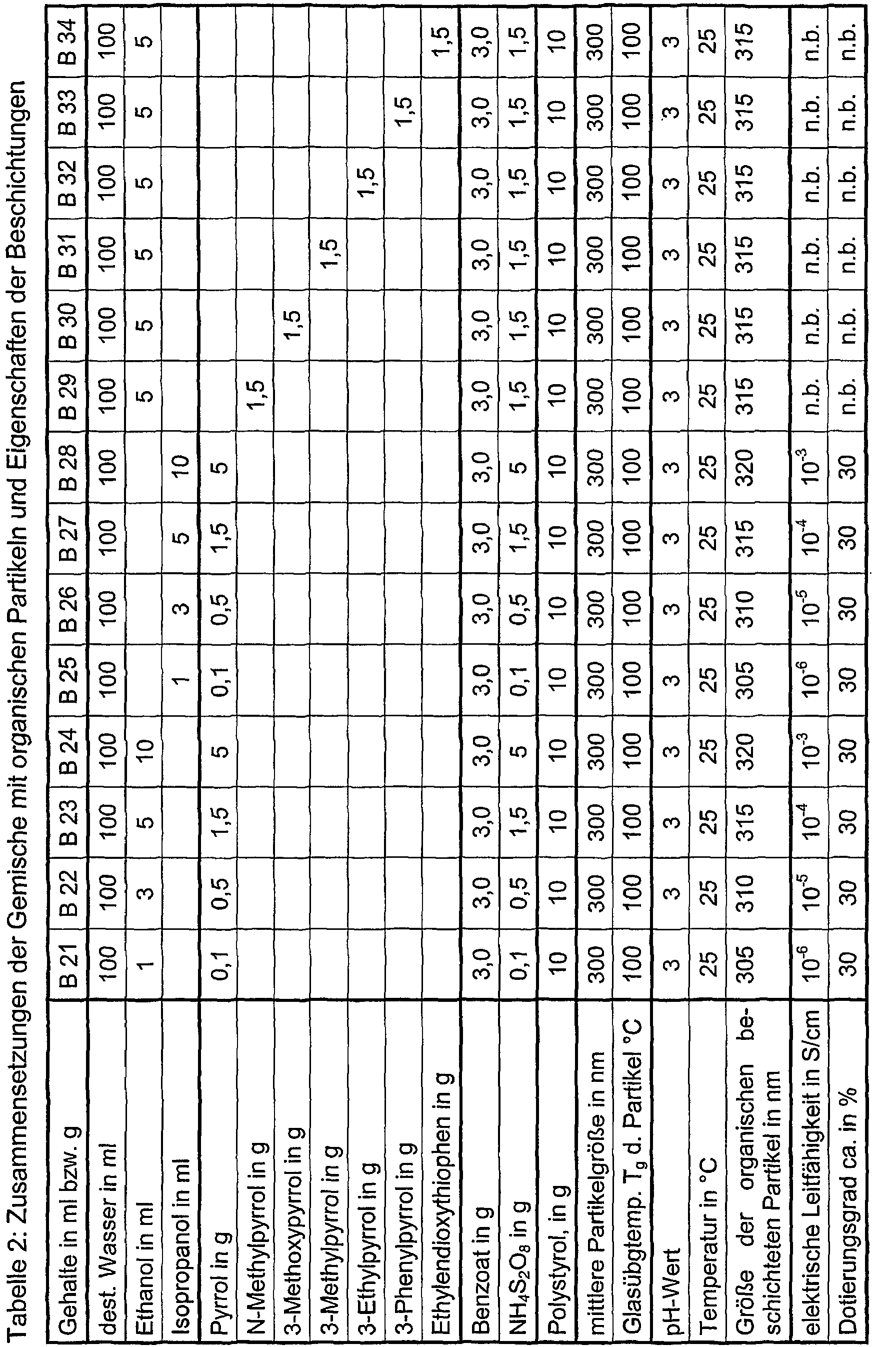

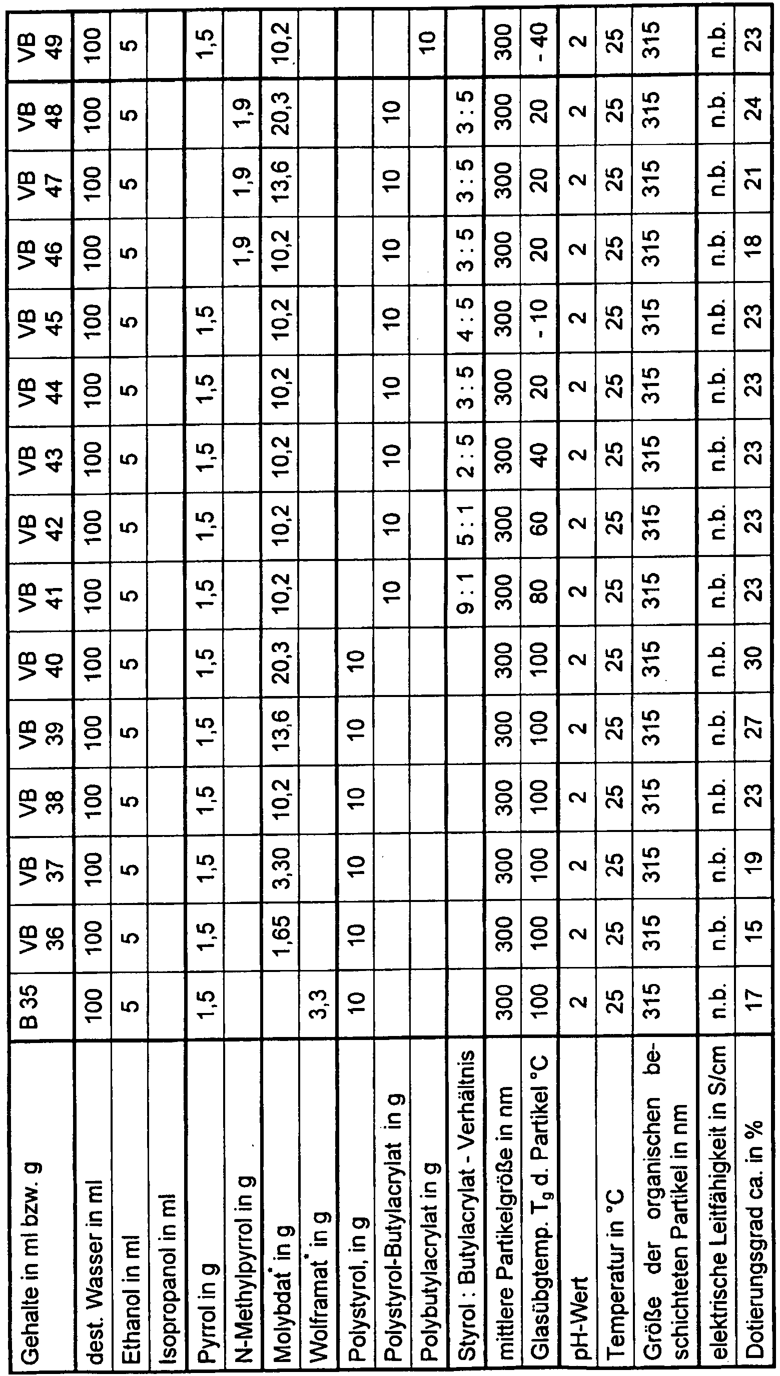

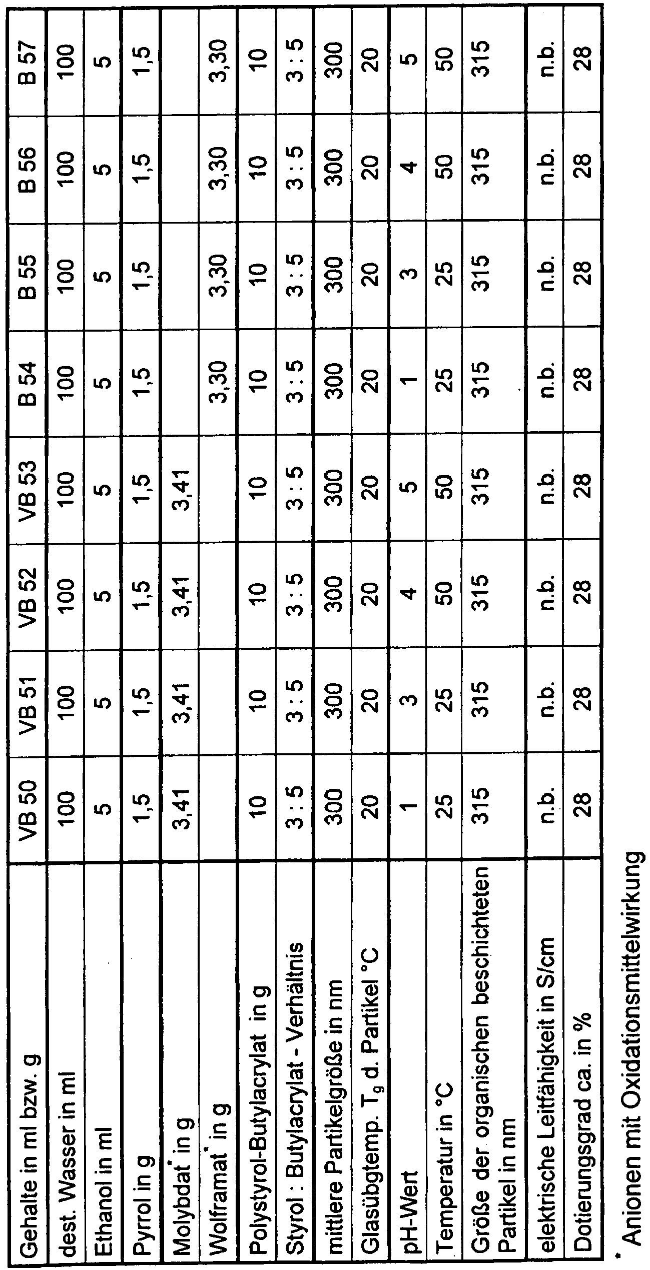

Die mittlere Partikelgröße der unbeschichteten und beschichteten organischen Partikel wurde unter dem Rasterelektronenmikroskop ermittelt. Die elektrische Leitfähigkeit wurde auf den Interdigitalstrukturen (kammartigen Elektroden) mit Hilfe der Zweipunktmethode an Presslingen von dotiertem leitfähigen Pulver bestimmt. Alle leitfähig beschichteten organischen Partikel waren schwarz.

Unter den Edukt-Lösungen hatten sich insbesondere solche mit Pyrrol und N-Methylpyrrol bewährt, wobei diese besonders vorteilhaft auf organischen Partikeln auf Basis von Polystyrol-Butylacrylat im Verhältnis von 50 bis 90 Gew.-% Styrol-Anteil aufgebracht wurden. Als Oxidationsmittel und gleichzeitig als Anionen hatten sich insbesondere Molybdat oder Wolframat vorteilhaft verhalten. Beim Molybdat und Wolframat hatte sich als wichtig ergeben, dass eine fast maximale Dotierung des leitfähigen Polymers bei bis zu etwa 28 % bezogen auf die Polymereinheit möglich und vorteilhaft ist.

Bei den Beispielen B 21 bis B 28 wurde mit dem zunehmenden Gehalt an Pyrrol auch die Schichtdicke der Beschichtung aus leitfähigem Polymer erhöht, etwa von 5 nm bis 10 nm. Beim Beispiel B 34 wurde ein Thiophen anstelle von Pyrrol verwendet. Beim Beispiel B 35 wurde im Vergleich zu B 23 Wolframat zugesetzt. Bei den Beispielen B 36 bis B 40 wurde im Vergleich zu B 23 und B 35 Molybdat eingesetzt. Die Konzentration der beweglichen korrosionsschützenden Anionen ist hier höher und dadurch die DepotWirkung besser. Bei den Beispielen B 41 bis B 48 wurde aufgrund der Variation der Zusammensetzung der organischen Partikel die Verfilmbarkeit der Partikel verändert: Bei B 43 und B 44 ist die Verfilmbarkeit am besten, während die Verfilmbarkeit bei Glasübergangstemperaturen T_{g} kleiner 20 °C nicht mehr so gut kontrollierbar war, wenn nicht bei Temperaturen unter Raumtemperatur gearbeitet wurde. Bei den Beispielen B 50 bis B 57 wurde der pH-Wert bzw. das Oxidationsmittel variiert, wobei bessere Ergebnisse bei pH-Werten von 4 und 5 für Molybdat und beim pH-Wert 5 für Wolframat erreicht wurden. Bezüglich der Beweglichkeit der beweglichen korrosionsschützenden Anionen sollten die Beispiele B 52, B 53 und B 57 die beste Beweglichkeit der Anionen zeigen, da diese Anionen besonders klein sind und bei höheren pH-Werten die Neigung zur Bildung großer Polyanionen geringer ist.

### 3. Präparationsgang und Beschichtung von organischen Partikeln unter Variation des Oxidationsmittels

Bei diesen Beispielen wurde im Wesentlichen wie beim 2. Präparationsgang gearbeitet.

Die Edukt-Lösung wurde in ersten Arbeitsschritten hergestellt, indem zu 50 ml destilliertem Wasser zunächst insgesamt 50 g einer wässerigen Dispersion von Polystyrol oder/und Polybutylacrylat mit einem Gehalt von 20 Gew.-% an derartigen organischen Partikeln von etwa 350 nm mittlerer Größe und 1,4 g frisch destilliertes Pyrrol zugesetzt wurden. In weiteren Versuchen, wurde Pyrrol durch N-Methylpyrrol ausgetauscht. Die Lösung wurde über 20 Minuten gerührt, um das Gemisch bei Raumtemperatur zu homogenisieren.

Es wurde dann eine Oxidationsmittellösung vorbereitet, indem in 50 ml Wasser 0,1 bis 1 Mol Oxidationsmittel wie a) Phosphomolybdat oder b) H₂O₂ mit ≤ 10⁻⁴ molarem Fe³⁺-Chlorid mit H₂O₂ im Überschuss gelöst wurde. Diese Lösung wurde dann nach dem Homogenisieren der Edukt-Lösung tropfenweise zugegeben. Das entstandene Gemisch wurde dann bei Raumtemperatur 4 bis 6 Stunden gerührt. Hierbei wurden in der Dispersion auf den organischen Partikeln ca. 10 nm dicke Beschichtungen aus Polypyrrol gebildet. Außerdem wurde vor Zugabe des Oxidationsmittels bei a) das Anion des Oxidationsmittels als Dotierion in das Polypyrrol bzw. in ein entsprechendes Derivat eingelagert, während bei b) vor Zugabe des Oxidationsmittels jeweils ein beliebiges korrosionsschützendes bewegliches Anion (Molybdat, Hexafluorotitanat, Hexafluorozirkonat, Wolframat) dem Edukt-Gemisch zusätzlich zugesetzt wurde.

Anschließend wurde das Reaktionsgemisch 48 Stunden lang über eine Cellulosemembran mit 10.000 MWCO gegen bidestilliertes Wasser dialysiert, um nicht-abreagierte Edukte, Oxidationsmittel und Anionen abzutrennen. Die Partikel waren mit Beschichtungen im Bereich von 5 bis 20 nm Dicke versehen. Die so erhaltenen Dispersionen waren länger als ein halbes Jahr stabil und verwendbar.

### 4. Präparationsgang unter Herstellung von "Haftvermittler-Partikeln" auf Basis leitfähiger Polymere:

Es wurde bei Raumtemperatur ein wässeriges, 5 % Ethanol enthaltendes Edukt-Gemisch auf Basis von Haftgruppen-substituiertem Monomer/Oligomer mit Monomer/Oligomer, das aus dem gleichen Monomer/Oligomer, nämlich Pyrrol, aufgebaut ist, in der wässerigen Lösung hergestellt. Als Haftgruppen wurde eine unverzweigte Alkylphosphonsäure mit 10 oder mit 12 C-Atomen verwendet. Hierzu wurde ein Salz des beweglichen korrosionsschützenden Anions, Ammoniummolybdat, der Lösung zugesetzt. Das Molybdat diente gleichzeitig als Oxidationsmittel. Während der ganzen Zeit wurde das Gemisch gerührt. Es wurde bei pH-Werten im Bereich von 2,5 bis 4 gearbeitet, wobei der pH-Wert über den Gehalt der Alkylphosphonsäure eingestellt wurde. Der pKₛ-Wert der haftvermittelnden Gruppen bestimmt den pH-Wert des Edukt-Gemisches und ermöglicht eine Micellbildung des Haftgruppen-substituierten Monomers/Oligomers im Gemisch. Unter Rühren erfolgte die Emulsionspolymerisation über 10 bis 24 Stunden. Die Reinigung der Dispersion erfolgte durch Dialyse, um eine Alkohol-haltige wässerige Dispersion der "Haftvermittler-Partikel" weitgehend frei von überschüssigen Anionen und gänzlich frei von Oxidationsmittel und nicht abreagiertem Monomer/Oligomer zu erhalten. Die Dispersion enthielt im Wesentlichen kugelförmige "Haftvermittler-Partikel" , deren Partikelgrößenverteilung nahezu monodispers war und deren mittlere Partikelgröße beliebig im Bereich von 50 bis 400 nm eingestellt werden konnte.

### 5. Herstellung von organischen Beschichtungen unter Verwendung von leitfähigem Polymer enthaltenden Partikeln:

Die angegebenen Konzentrationen und Zusammensetzungen beziehen sich auf die Behandlungslösung selbst und nicht auf ggf. verwendete Ansatzlösungen höherer Konzentration. Alle Konzentrationsanangaben sind als Festkörperanteile zu verstehen, d.h., die Konzentrationen beziehen sich auf die Gewichtsanteile der wirksamen Komponenten unabhängig davon, ob die eingesetzten Rohstoffe in verdünnter oder konzentrierter Form z.B. als wässerige Lösungen vorlagen. Zusätzlich zu den im Folgenden aufgeführten Zusammensetzungen kann es in der kommerziellen Praxis erforderlich oder erwünscht sein, weitere Additive zuzusetzen oder die Mengen entsprechend anzupassen, beispielsweise entweder die Gesamtmenge an Zusätzen heraufzusetzen oder z.B. die Menge des Entschäumers oder/und des Verlaufmittels wie z.B. ein Polysiloxan heraufzusetzen.

Als Kunstharze wurde ein Styrolacrylat mit einer Glasübergangstemperatur im Bereich von 15 bis 25 °C und mit einer mittleren Partikelgröße im Bereich von 120 bis 180 nm, ein Acryl-Polyester-Polyurethan-Mischpolymerisat mit einem Blockpunkt im Bereich von 140 bis 180 °C und einer Glasübergangstemperatur im Bereich von 20 bis 60 °C, ein Ethylen-Acryl-Mischpolymerisat mit einem Schmelzpunkt im Bereich von 70 bis 90 °C, und mit einem Acryl-modifizierten Carboxyl-Gruppen-haltigen Polyester insbesondere mit einer Zahl an OH-Gruppen im Bereich von 80 bis 120 und mit einer Säurezahl im Bereich von 50 bis 90, berechnet auf das Festharz, sowie mit einer Abhärtung z.B. durch Zusatz von Hexamethoxymethylmelamin mit einer Säurezahl kleiner 5 eingesetzt. Das Styrol-Butadien-Copolymerisat weist eine Glasübergangstemperatur im Bereich von - 20 bis + 20 °C auf und eine Säurezahl im Bereich von 5 bis 30; aufgrund des Gehalts an Carboxylgruppen ist dieses Copolymerisat z.B. mit Melaminharzen oder mit Isocyanat-haltigen Polymeren zusätzlich vernetzbar. Das Mischpolymerisat auf der Basis von Epoxid-Acrylat hat eine Säurezahl im Bereich von 10 bis 18 und eine Glasübergangstemperatur zwischen 25 und 40 °C. Dieses Mischpolymerisat für die Beschichtung insbesondere von Stahl gibt dem erfindungsgemäßen Überzug eine höhere chemische Beständigkeit, insbesondere im basischen Bereich, und verbessert die Hafteigenschaften zum metallischen Untergrund.

Die pyrogene Kieselsäure weist einen BET-Wert im Bereich von 90 bis 130 m²/g auf, das kolloidale Siliciumdioxid eine mittlere Partikelgröße im Bereich von 10 bis 20 nm. Das Melamin-Formaldehyd diente als Vernetzungspartner für das carboxylgruppenhaltige Polyesterharz. Das oxidierte Polyethylen diente als Gleit- und Umformmittel (Wachs) und wies einen Schmelzpunkt im Bereich von 125 bis 165 °C auf. Das eingesetzte Polysiloxan war ein polyethermodifiziertes Dimethylpolysiloxan und diente als Benetzungs- und Verlaufsmittel des Nassfilms während der Applikation. Der Entschäumer war ein Gemisch aus Kohlenwasserstoffen, hydrophober Kieselsäure, oxalierten Verbindungen und nichtionogenen Emulgatoren. Als langkettiger Alkohol wurde ein Tripropylenglykol-mono-n-Butylether zur Filmbildung verwendet.

### Erfindungsgemäße Beispiele 61 bis 71:

Stahlbleche, die aus handelsüblichem kaltgewalzten und anschließend legierungsverzinktem Stahlband z. B. mit 55 % AlZn (Galvalume^{®}) erhalten wurden, die zum Zwecke des Schutzes bei der Lagerung beölt waren, wurden zunächst in einem alkalischen Spritzreiniger entfettet, mit Wasser gespült, bei erhöhter Temperatur getrocknet und anschließend mit der erfindungsgemäßen wässerigen Zusammensetzung behandelt. Dabei wurde eine definierte Menge der wässerigen Zusammensetzung (Badlösung) mit Hilfe eines Rollcoaters so aufgetragen, dass sich eine Nassfilmdicke von ca. 10 ml/m² ergab. Anschließend wurde der Nassfilm bei Temperaturen im Bereich von 80 bis 100 °C PMT aufgetrocknet, verfilmt und ausgehärtet. Die Badlösung bestand aus den Komponenten der Tabelle 3, wobei außer bei den sogenannten Nullproben, die nur die in der Tabelle 3 aufgezeigten Zusammensetzungen zeigen, zusätzlich noch jeweils eine Sorte der in den vorherigen Beispielen angeführten beschichteten anorganischen Partikel, beschichteten organischen Partikel oder der Haftvermittlerpartikel jeweils in Mengen von 0,05, 0,3 bzw. 1,5 Gewichtsteilen, die auch über 100 hinaus berechnet werden, zugesetzt sind.

Die Bestandteile wurden in der angegebenen Reihenfolge gemischt, wobei die zusätzlichen Partikel als vorletzte oder letzte Komponente zugesetzt wurden. Der pH-Wert der Lösung wurde anschließend mit einer Ammoniaklösung auf 8,2 eingestellt. Die Lösung wurde nach dem Auftrag in einem Umluftofen bei ca. 90 °C PMT (peak-metal-temperature) getrocknet. Die in dieser Weise behandelten Stahlbleche wurden danach auf ihren Korrosionsschutz und ihre mechanischen Eigenschaften geprüft.

**Tabelle 3: Zusammensetzung der Badflüssigkeiten aller Beispiele und Vergleichsbeispiele:**

| Gehalt in Gew.-Teilen / Beispiel | B 61 | B 62 | B 63 | B 64 | B 65 | B 66 | B 67 | B 68 | B 69 | B 70 | B 71 |
|---|---|---|---|---|---|---|---|---|---|---|---|
| Wasser | 100 | 100 | 100 | 100 | 100 | 100 | 100 | 100 | 100 | 100 | 100 |
| Styrolacrylat | 6,40 | | | 1,80 | | 4,40 | | 1,82 | 1,70 | | |
| Acryl-Polyester-Polyurethan-Mischpolymerisat | | 6,40 | 3,00 | 2,60 | | | 4,40 | 2,56 | 2,53 | | |
| Ethylen-Acryl-Mischpolymerisat | | | 3,00 | 2,60 | 1,00 | 2,60 | 2,60 | 2,56 | 2,53 | 2,65 | 2,65 |
| carboxylgruppenhaltiger Polyester | | | | | 5,70 | | | | | | |
| Melamin-Formaldehyd | | | | | 0,60 | | | | | | |
| kolloidales SiO₂10 - 20 nm | | 2,50 | 2,50 | 1,40 | 1,60 | 1,40 | 1,40 | 1,46 | 1,40 | 1,32 | 1,32 |
| pyrogene Kieselsäure | 2,50 | | | | | | | | | | |
| oxidiertes Polyethylen | 0,50 | 0,50 | 0,50 | 0,50 | 0,50 | 0,50 | 0,50 | 0,50 | 0,50 | 0,50 | 0,50 |
| Polysiloxan | 0,10 | 0,10 | 0,10 | 0,10 | 0,10 | 0,10 | 0,10 | 0,10 | 0,10 | 0,10 | 0,10 |
| Kombination aus Silanen | | | 0,40 | | | | | | | | |
| Entschäumer | 0,10 | 0,10 | 0,10 | 0,10 | 0,10 | 0,10 | 0,10 | 0,10 | 0,10 | 0,10 | 0,10 |
| langkettiger Alkohol | 0,40 | 0,40 | 0,40 | 0,40 | 0,40 | 0,40 | 0,40 | 0,40 | 0,40 | 0,40 | 0,40 |
| Ammonium-Zr-Carbonat | | | | 0,40 | | 0,40 | 0,40 | 0,40 | 0,40 | | |
| TPA-Amin-Komplex | | | | 0,10 | | 0,10 | 0,10 | 0,10 | 0,10 | 0,48 | 0,48 |
| carboxylgruppenhaltiges StyrolButadien-Copolymerisat | | | | | | | | | | 4,25 | 2,15 |
| Epoxid-Acrylat-Mischpolymerisat | | | | | | | | | | | 2,10 |
| Mit leitfähigem Polymer beschichtete anorganische Partikel | | | | | | | | | | | |
| Mit leitfähigem Polymer beschichtete organische Partikel | | | | | | | | | | | |
| Ammoniumbichromat | | | | | | | | | 0,24 | | |

### 6. Herstellung von organischen Beschichtungen unter Verwendung von leitfähigem Polymer enthaltenden Partikeln auf Basis von Polyacrylat:

Stahlbleche, die aus handelsüblichem kaltgewalzten und anschließend feuerverzinktem Stahlband erhalten wurden, die zum Zwecke des Schutzes bei der Lagerung beölt waren, wurden zunächst in einem alkalischen Spritzreiniger entfettet, mit Wasser gespült, bei erhöhter Temperatur getrocknet und anschließend mit der erfindungsgemäßen wässerigen Zusammensetzung behandelt. Dabei wurde eine definierte Menge der wässerigen Zusammensetzung (Badlösung) mit Hilfe eines Rollcoaters so aufgetragen, dass sich eine Nassfilmdicke von ca. 10 ml/m² ergab. Anschließend wurde der Nassfilm bei Temperaturen im Bereich von ca. 70 bis 90 °C PMT aufgetrocknet, verfilmt und ausgehärtet. Die Badlösung bestand aus den Komponenten der Tabelle 4.

Für die Versuche in einem sauren Bindersystem (VB 81 bis B 91) wurde eine Wasser und wenig Alkohol enthaltende Dispersion auf Basis von Styrolacrylat von pH 4,2 mit einer Wasser und wenig Isopropanol enthaltenden Dispersion auf Basis von nanopartikulärem Siliciumdioxid aus einem Kieselsol beschichtet mit Polypyrrol sowie mit Additiven unter starkem Rühren vermischt. Die Nanopartikel hatten vor der Beschichtung mit dem Polypyrrol Partikelgrößen vorwiegend im Bereich von 10 bis 30 nm, wobei die Beschichtung eine Schichtdicke etwa im Bereich von 2 bis 6 nm aufwies. Die Lösung wurde nach dem Auftrag in einem Umluftofen bei ca. 70 bis 90 °C PMT (peak-metal-temperature) getrocknet. Die in dieser Weise behandelten Stahlbleche wurden danach auf ihren Korrosionsschutz und ihre mechanischen Eigenschaften geprüft. Im Vergleichsbeispiel VB 81 wurden die Bleche ohne SiO₂-Partikel und ohne leitfähiges Polymer beschichtet. Alle Beschichtungen zeigten eine sehr gute Haftung auf der metallischen Oberfläche. Die erfindungsgemäßen Beispiele B 82 bis B 91 verdeutlichen einen hohen Korrosionsschutz, der weitgehend auf den Release-Effekt der korrosionsschützenden beweglichen Anionen und wahrscheinlich auch auf ein Stoppen der Delamination der korrodierenden Bereiche zurückzuführen ist.

Parallel hierzu wurde in einem basischen Kunstharzsystem in entsprechender Weise gearbeitet (VB 92, B 93, B 94, VB 95), wobei dieses Bindersystem auch mit einem Chromat-Zusatz geprüft wurde.

Bei diesen ersten und vergleichsweise wenigen Versuchen hat sich die Korrosionsbeständigkeit der erfindungsgemäßen Beschichtungen, die leitfähiges Polymer enthaltende Partikel anstelle von Chromat enthalten, der Korrosionsbeständigkeit der typischen Chromat-haltigen Beschichtungen des Standes der Technik deutlich angenähert.

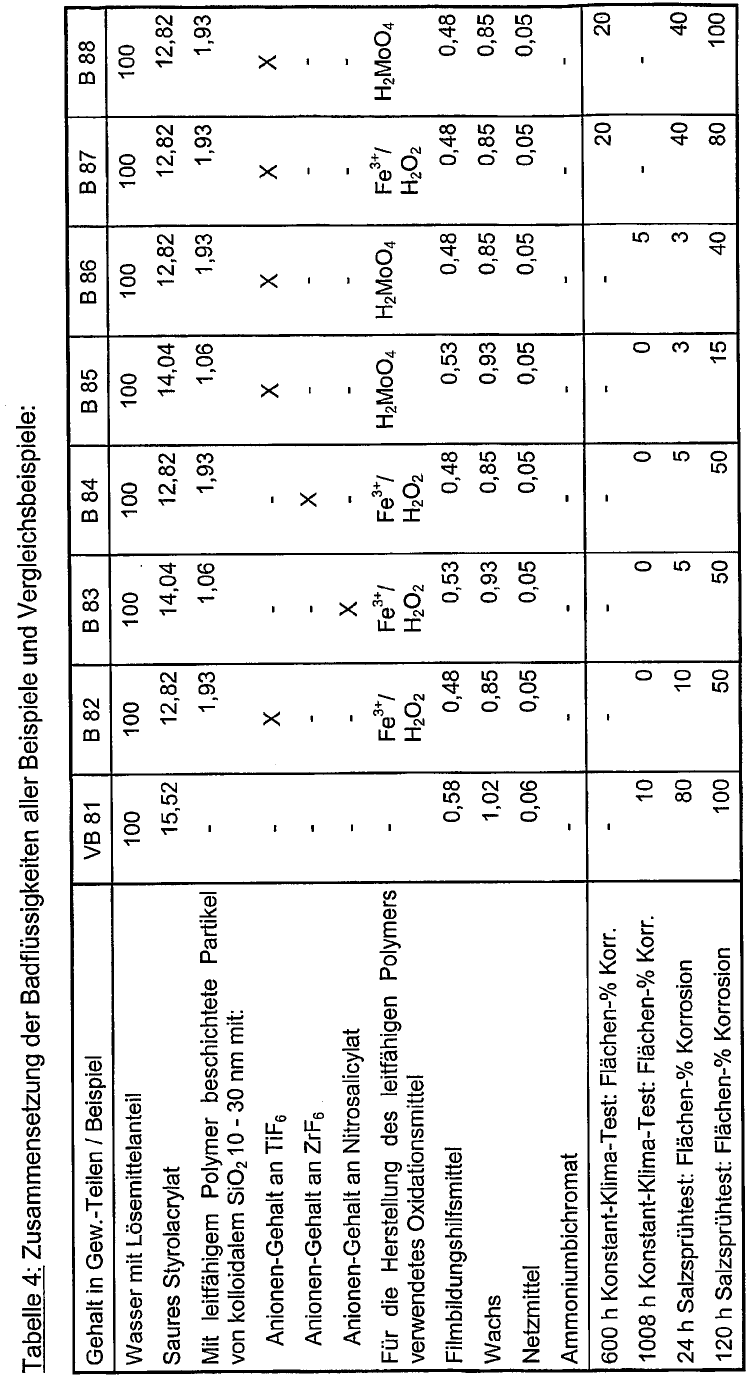

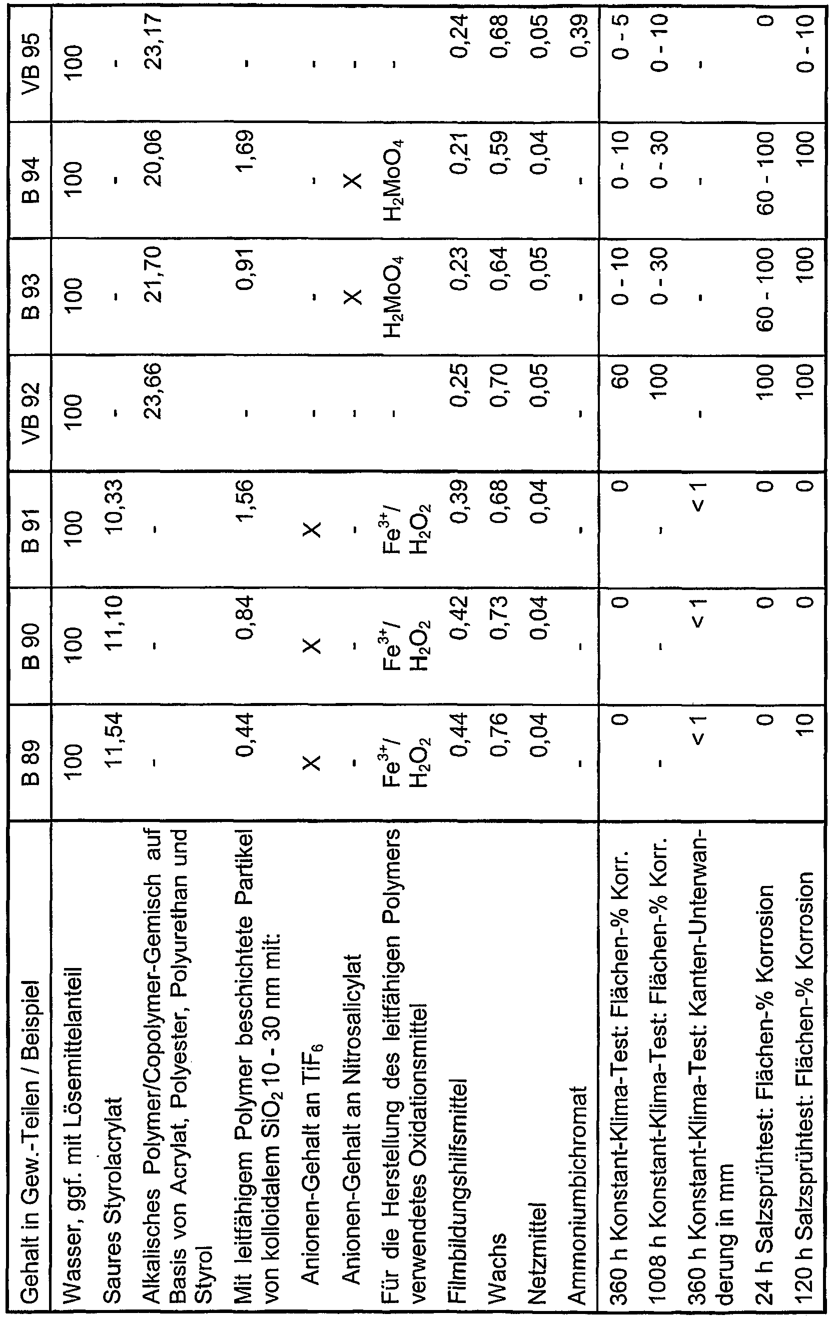

## Patentansprüche

1. Verfahren zum Beschichten von metallischen Oberflächen mit einer korrosionsschützenden Zusammensetzung, die leitfähiges Polymer enthält, **dadurch gekennzeichnet, dass** die Zusammensetzung eine Dispersion ist, die leitfähiges Polymer enthaltende Partikel 1.) als typische Core-Shell-Partikel (beschichtete Partikel), die teilweise oder vollständig mit leitfähigem Polymer beschichtet sind, oder/und 2.) als organische Partikel, die teilweise im Inneren leitfähiges Polymer enthalten, sowie ein Bindersystem enthält, und dass das leitfähige Polymer mindestens eines ist auf der Basis von Polyphenylen, Polyfuran, Polyimidazol, Polyphenanthren, Polypyrrol, Polythiophen oder/und Polythiophenylen, das mit korrosionsschützenden beweglichen Anionen von Benzoat, Nitrosalicylat, Salicylat, Tartrat, Hexafluorotitanat, Hexafluorozirkonat oder/und Wolframat beladen ist.

2. Verfahren zum Beschichten von metallischen Oberflächen mit einer korrosionsschützenden Zusammensetzung, die leitfähiges Polymer enthält, **dadurch gekennzeichnet, dass** auf die metallische Oberfläche zuerst eine erste Zusammensetzung, die eine Dispersion ist, die leitfähiges Polymer enthaltende Partikel enthält 1.) als typische Core-Shell-Partikel (beschichtete Partikel), die teilweise oder vollständig mit leitfähigem Polymer beschichtet sind, oder/und 2.) als organische Partikel, die teilweise im Inneren leitfähiges Polymer enthalten, aufgebracht sowie getrocknet wird und dass danach eine zweite, ein Bindersystem enthaltende Zusammensetzung als Dispersion auf die vorbeschichtete metallische Oberfläche aufgebracht, getrocknet und gegebenenfalls auch polymerisiert wird, wobei das leitfähige Polymer mindestens eines ist auf der Basis von Polyphenylen, Polyfuran, Polyimidazol, Polyphenanthren, Polypyrrol, Polythiophen oder/und Polythiophenylen, das mit korrosionsschützenden beweglichen Anionen von Benzoat, Nitrosalicylat, Salicylat, Tartrat, Hexafluorotitanat, Hexafluorozirkonat oder/und Wolframat beladen ist.

3. Verfahren nach Anspruch 1 oder 2, **dadurch gekennzeichnet, dass** die mittlere Partikelgröße der leitfähiges Polymer enthaltenden Partikel einschließlich deren Ansammlungen wie Agglomeraten oder/und Aggregaten im Bereich von 10 nm bis 20 µm liegt oder/und dass die mittlere Partikelgröße der leitfähiges Polymer enthaltenden Partikel ohne Agglomerate und ohne Aggregate im Bereich von 10 nm bis 10 µm liegt.

4. Verfahren nach einem der vorstehenden Ansprüche, **dadurch gekennzeichnet, dass** die leitfähiges Polymer enthaltenden Partikel ausgewählt werden aus der Gruppe bestehend aus Clustern, Nanopartikeln, Nanoröhrchen, faserigen, knäuelartigen oder/und porösen Strukturen und massiven Partikeln.

5. Verfahren nach einem der vorstehenden Ansprüche, **dadurch gekennzeichnet, dass** die leitfähiges Polymer enthaltenden anorganischen Partikel ausgewählt sind aus der Gruppe von Partikeln, die aus mindestens einer Substanz im Wesentlichen aus jeweils mindestens einem Borid, Carbid, Carbonat, Cuprat, Ferrat, Fluorid, Fluorosilicat, Niobat, Nitrid, Oxid, Phosphat, Phosphid, Phosphosilicat, Selenid, Silicat, Sulfat, Sulfid, Tellurid, Titanat, Zirkonat, aus mindestens einer Art von Kohlenstoff, aus mindestens einer Legierung, aus mindestens einem Metall oder/und deren Mischkristallen, aus Gemischen oder/und Verwachsungen bestehen.

6. Verfahren nach einem der vorstehenden Ansprüche, **dadurch gekennzeichnet, dass** die leitfähiges Polymer enthaltenden organischen Partikel vorwiegend oder gänzlich solche sind ausgewählt aus der Gruppe bestehend aus Polymeren auf der Basis von Styrol, Acrylat, Methacrylat, Polycarbonat, Cellulose, Polyepoxid, Polyimid, Polyether, Polyurethan, Siloxan, Polysiloxan, Polysilan und Polysilazan.

7. Verfahren nach einem der vorstehenden Ansprüche, **dadurch gekennzeichnet, dass** mindestens ein Anion ausgewählt wird aus der Gruppe bestehend aus Anionen auf Basis von Komplexfluorid.

8. Verfahren nach einem der vorstehenden Ansprüche, **dadurch gekennzeichnet, dass** Anionen zugesetzt werden oder/und im leitfähigen Polymer eingebaut sind, die auf der metallischen Oberfläche zusätzlich delaminationshindernd oder/und haftvermittelnd wirken.

9. Verfahren nach einem der vorstehenden Ansprüche, **dadurch gekennzeichnet, dass** die leitfähiges Polymer enthaltenden Partikel vor dem Versetzen mit einer Flüssigkeit oder vor dem Zusetzen zu der Zusammensetzung gemahlen, getrocknet, geglüht oder/und redispergiert werden.

10. Verfahren nach einem der vorstehenden Ansprüche, **dadurch gekennzeichnet, dass** die Zusammensetzung im Wesentlichen gegebenenfalls neben den leitfähiges Polymer enthaltenden Partikeln und neben Wasser oder/und mindestens einem anderen Lösemittel ein Bindersystem auf Basis von organischem Polymer oder/und Siliciumdioxid/Silicat enthält.

11. Verfahren nach einem der vorstehenden Ansprüche, **dadurch gekennzeichnet, dass** leitfähiges Polymer enthaltende Partikel verwendet werden, bei dem mindestens zwei Partikelarten eingesetzt werden, die deutlich unterschiedliche Partikelgrößenverteilungen aufweisen oder/und bei dem mindestens zwei unterschiedlich hergestellte Partikelarten eingesetzt werden.

12. Verfahren nach einem der vorstehenden Ansprüche, **dadurch gekennzeichnet, dass** als Bindersystem mindestens ein organisches Polymer ausgewählt wird, das anionisch oder kationisch stabilisiert ist oder wird und das gegebenenfalls auch verfilmbar ist.

13. Verfahren nach einem der vorstehenden Ansprüche, **dadurch gekennzeichnet, dass** als Bindersystem eines ausgewählt wird, bei dem mindestens ein organisches Polymer, das in der Zusammensetzung enthalten ist, beim Trocknen der Zusammensetzung verfilmt.

14. Verfahren nach einem der vorstehenden Ansprüche, **dadurch gekennzeichnet, dass** als Bindersystem eines ausgewählt wird, das über mindestens einen thermischen Vernetzer oder/und über mindestens einen Photoinitiator chemisch oder/und radikalisch vernetzt wird.

15. Verfahren nach einem der vorstehenden Ansprüche, **dadurch gekennzeichnet, dass** der ein Bindersystem enthaltenden Zusammensetzung mindestens ein Additiv zugesetzt wird ausgewählt aus der Gruppe bestehend aus Bioziden, Chelaten, Emulgatoren, Entschäumern, Filmbildungshilfsmitteln, Gleitmitteln, Haftvermittlern, Komplexbildnern, anorganischen oder/und organischen Korrosionsinhibitoren, Netzmitteln, Pigmenten, Säurefängern, Schutzkolloiden, Silanen/Siloxanen/Polysiloxanen, Stabilisatoren, Tensiden, Vernetzungsmitteln, Weichmachern, Aluminium-Verbindungen, Cer-Verbindungen, Lanthan-Verbindungen, Mangan-Verbindungen, Selten-Erd-Verbindungen, Molybdän-Verbindungen, Titan-Verbindungen, Wolfram-Verbindungen, Yttrium-Verbindungen, Zink-Verbindungen und Zirkonium-Verbindungen.

16. Verfahren nach einem der vorstehenden Ansprüche, **dadurch gekennzeichnet, dass** die Zusammensetzung durch Aufwalzen, Fluten, Aufrakeln, Spritzen, Sprühen, Streichen oder/und Tauchen und gegebenenfalls durch nachfolgendes Abquetschen mit einer Rolle aufgetragen wird.

17. Verfahren nach einem der vorstehenden Ansprüche, **dadurch gekennzeichnet, dass** die wässerige Zusammensetzung bei einer Temperatur im Bereich von 5 bis 50 °C auf die metallische Oberfläche aufgebracht wird, dass die metallische Oberfläche bei der Applikation der Beschichtung auf Temperaturen im Bereich von 5 bis 120 °C gehalten wird oder/und dass die beschichtete metallische Oberfläche bei einer Temperatur im Bereich von 20 bis 400 °C PMT (peak-metal-temperature) getrocknet wird.

18. Verfahren nach einem der vorstehenden Ansprüche, **dadurch gekennzeichnet, dass** die zu beschichtende metallische Oberfläche vor der Beschichtung mit mindestens einer Zusammensetzung nach Anspruch 1 oder 2 gereinigt, gebeizt, gespült, mit einer Passivierungsschicht, Behandlungsschicht, Vorbehandlungsschicht, mit einer Ölschicht oder/und mit einer dünnen oder sehr dünnen Beschichtung, die vorwiegend leitfähiges Polymer enthält und nur begrenzt oder vollständig geschlossen ist, versehen wird und gegebenenfalls von dieser Schicht später zumindest teilweise befreit werden.

19. Verfahren nach einem der vorstehenden Ansprüche, **dadurch gekennzeichnet, dass** Bänder mit der Zusammensetzung nach einem der vorstehenden Ansprüche beschichtet und zu einem Coil aufgewickelt werden, gegebenenfalls nach einer Abkühlung auf eine Temperatur im Bereich von 20 bis 70 °C.

20. Verfahren nach einem der vorstehenden Ansprüche, **dadurch gekennzeichnet, dass** die beschichtete metallische Oberfläche nach der Beschichtung mit einer Zusammensetzung nach Anspruch 1 oder mit den Zusammensetzungen nach Anspruch 2 mit mindestens einer weiteren Beschichtung auf Basis von einer Nachspüllösung, von organischem Polymer, Lack, Klebstoff, Klebstoffträger oder/und Öl versehen wird.

21. Verfahren nach einem der vorstehenden Ansprüche, **dadurch gekennzeichnet, dass** die beschichteten Metallteile, Bänder, Bandabschnitte, Drähte oder Profile umgeformt, lackiert, mit Polymeren wie z.B. PVC beschichtet, bedruckt, beklebt, heißgelötet, geschweißt oder/und durch Clinchen oder andere Fügetechniken miteinander oder mit anderen Elementen verbunden werden.

22. Zusammensetzung zur Beschichtung einer metallischen Oberfläche, **dadurch gekennzeichnet, dass** die Zusammensetzung enthält:
Mindestens ein wasserlösliches oder wasserdispergiertes organisches Polymer,
mindestens eine Art von leitfähigem Polymer enthaltende Partikel 1.) als typische Core-Shell-Partikel (beschichtete Partikel), die teilweise oder vollständig mit leitfähigem Polymer beschichtet sind, oder/und 2.) als organische Partikel, die teilweise im Inneren leitfähiges Polymer enthalten,
Wasser,
gegebenenfalls mindestens ein organisches Lösemittel und
gegebenenfalls mindestens ein Additiv,
wobei das leitfähige Polymer mindestens eines ist auf der Basis von Polyphenylen, Polyfuran, Polyimidazol, Polyphenanthren, Polypyrrol, Polythiophen oder/und Polythiophenylen, das mit korrosionsschützenden beweglichen Anionen von Benzoat, Nitrosalicylat, Salicylat, Tartrat, Hexafluorotitanat, Hexafluorozirkonat oder/und Wolframat beladen ist.

23. Zusammensetzung nach Anspruch 22, **dadurch gekennzeichnet, dass** sie leitfähiges Polymer enthält, in das Anionen auf Basis von Titan oder/und Zirkonium eingebaut sind oder/und dass sie mindestens eine Verbindung von Titan oder/und Zirkonium enthält.

24. Mit einer Beschichtung auf Basis von Bindersystem, Partikeln und leitfähigem Polymer auf einer metallischen Oberfläche versehene Gegenstände, bei der die Beschichtung nach einem der Ansprüche 1 bis 21 hergestellt ist.

25. Beschichtete Gegenstände mit einer Beschichtung nach Anspruch 24, **dadurch gekennzeichnet, dass** die Beschichtung leitfähiges Polymer enthält, das Titan- oder/und Zirkonium enthaltende Anionen aufweist, oder/und dass die Beschichtung mindestens eine Verbindung von Titan oder/und Zirkonium enthält.

26. Verwendung des nach dem Verfahren nach mindestens einem der Ansprüche 1 bis 21 beschichteten Gegenstandes wie z.B. ein Band, ein Draht, ein Profil oder ein Teil als Drahtwicklung, ein Drahtgeflecht, Stahlband, Blech, Verkleidung, Abschirmung, Karosserie oder Teil einer Karosserie, Teil eines Fahrzeugs, Anhängers, Wohnmobils oder Flugkörpers, Abdeckung, Gehäuse, Lampe, Leuchte, Ampelelement, Möbelstück oder Möbelelement, Element eines Haushaltsgeräts, Gestell, Profil, Formteil komplizierter Geometrie, Leitplanken-, Heizkörper- oder Zaunelement, Stoßstange, Teil aus oder mit mindestens einem Rohr oder/und einem Profil, Fenster-, Tür- oder Fahrradrahmen oder Kleinteil wie z.B. eine Schraube, Mutter, Flansch, Feder oder Brillengestell.

## Claims

1. A process for coating metallic surfaces with an anti-corrosive composition that contains conductive polymer, **characterised in that** the composition is a dispersion that contains particles containing conductive polymer 1.) as typical core-shell particles (coated particles) that are partially or completely coated with conductive polymer, and/or 2.) as organic particles that in part contain conductive polymer in their interior, as well as a binder system, and that the conductive polymer is at least one polymer based on polyphenylene, polyfuran, polyimidazole, polyphenanthrene, polypyrrole, polythiophene and/or polythiophenylene, which is charged with anti-corrosive mobile anions of benzoate, nitrosalicylate, salicylate, tartrate, hexafluorotitanate, hexafluorozirconate and/or tungstate.

2. A process for coating metallic surfaces with an anti-corrosive composition that contains conductive polymer, **characterised in that** first of all a first composition that is a dispersion that contains particles containing conductive polymer 1.) as typical core-shell particles (coated particles) that are partially or completely coated with conductive polymer, and/or 2.) as organic particles that in part contain conductive polymer in their interior, is applied to the metallic surface and also dried, and that a second composition containing a binder system is then applied as a dispersion to the precoated metallic surface, dried and optionally also polymerised, wherein the conductive polymer is at least one polymer based on polyphenylene, polyfuran, polyimidazole, polyphenanthrene, polypyrrole, polythiophene and/or polythiophenylene, which is charged with anti-corrosive mobile anions of benzoate, nitrosalicylate, salicylate, tartrate, hexafluorotitanate, hexafluorozirconate and/or tungstate.

3. A process according to claim 1 or 2, **characterised in that** the mean particle size of the conductive-polymer-containing particles including their accumulations such as agglomerates and/or aggregates lies in the range from 10 nm to 20 *µ*m and/or that the mean particle size of the conductive-polymer-containing particles without agglomerates and without aggregates lies in the range from 10 nm to 10 *µ*m.

4. A process according to one of the preceding claims, **characterised in that** the conductive-polymer-containing particles are selected from the group consisting of clusters, nanoparticles, nanotubes, fibre-like, coiled and/or porous structures and solid particles.

5. A process according to one of the preceding claims, **characterised in that** the conductive-polymer-containing inorganic particles are selected from the group of particles that consist of at least one substance substantially of in each case at least one boride, carbide, carbonate, cuprate, ferrate, fluoride, fluorosilicate, niobate, nitride, oxide, phosphate, phosphide, phosphosilicate, selenide, silicate, sulphate, sulphide, telluride, titanate, zirconate, of at least one type of carbon, of at least one alloy, of at least one metal and/or mixed crystals thereof, of mixtures and/or intergrowths.

6. A process according to one of the preceding claims, **characterised in that** the conductive-polymer-containing organic particles are predominantly or wholly those that are selected from the group consisting of polymers based on styrene, acrylate, methacrylate, polycarbonate, cellulose, polyepoxide, polyimide, polyether, polyurethane, siloxane, polysiloxane, polysilane and polysilazane.

7. A process according to one of the preceding claims, **characterised in that** at least one anion is selected from the group consisting of anions based on complex fluoride.

8. A process according to one of the preceding claims, **characterised in that** anions are added to and/or are incorporated in the conductive polymer, which additionally have a delamination-inhibiting effect and/or coupling effect on the metallic surface.

9. A process according to one of the preceding claims, **characterised in that** the conductive-polymer-containing particles are ground, dried, annealed and/or redispersed before the addition of a liquid or before they are added to the composition.

10. A process according to one of the preceding claims, **characterised in that** the composition substantially optionally contains, apart from the conductive-polymer-containing particles and apart from water and/or at least one other solvent, also a binder system based on organic polymer and/or silicon dioxide/silicate.

11. A process according to one of the preceding claims, **characterised in that** conductive-polymer-containing particles are used, in which at least two types of particles are employed that have significantly different particle size distributions, and/or in which at least two differently produced types of particles are employed.

12. A process according to one of the preceding claims, **characterised in that** at least one organic polymer is selected as the binder system that is or becomes anionically or cationically stabilised and that can optionally also undergo film-forming.

13. A process according to one of the preceding claims, **characterised in that** a binder system is selected as the binder system in which at least one organic polymer which is contained in the composition undergoes film-forming when the composition is dried.

14. A process according to one of the preceding claims, **characterised in that** a binder system is selected as the binder system which is chemically and/or free-radically cross-linked via at least one thermal crosslinking agent and/or via at least one photoinitiator.

15. A process according to one of the preceding claims, **characterised in that** to the composition containing a binder system there is added at least one additive selected from the group consisting of biocides, chelates, emulsifiers, antifoaming agents, film-forming auxiliary substances, lubricants, coupling agents, complex-forming agents, inorganic and/or organic corrosion inhibitors, wetting agents, pigments, acid traps, protective colloids, silanes/siloxanes/polysiloxanes, stabilisers, surfactants, cross-linking agents, plasticisers, aluminium compounds, cerium compounds, lanthanum compounds, manganese compounds, rare earth compounds, molybdenum compounds, titanium compounds, tungsten compounds, yttrium compounds, zinc compounds and zirconium compounds.

16. A process according to one of the preceding claims, **characterised in that** the composition is applied by roller application, flow coating, knife coating, sprinkling, spray coating, brushing and/or dipping, and if necessary by subsequently squeezing off with a roller.

17. A process according to one of the preceding claims, **characterised in that** the aqueous composition is applied to the metallic surface at a temperature in the range from 5° to 50°C, that the metallic surface is maintained at temperatures in the range from 5° to 120°C during the application of the coating, and/or that the coated metallic surface is dried at a temperature in the range from 20° to 400°C PMT (peak metal temperature).

18. A process according to one of the preceding claims, **characterised in that** the metallic surface to be coated, before the coating with at least one composition according to claim 1 or 2, is cleaned, pickled, rinsed, is provided with a passivation layer, treatment layer, pre-treatment layer, with an oil layer and/or with a thin or very thin coating that largely contains conductive polymer and is only limitedly or completely sealed, and if necessary is subsequently at least partially freed from this layer.

19. A process according to one of the preceding claims, **characterised in that** strips are coated with the composition according to one of the preceding claims and are wound into a coil, optionally after cooling to a temperature in the range from 20° to 70°C.

20. A process according to one of the preceding claims, **characterised in that** the coated metallic surface after the coating with a composition according to claim 1 or with the compositions according to claim 2 is provided with at least one further coating based on a post-rinse solution, on organic polymer, paint, adhesive, adhesive carrier and/or oil.

21. A process according to one of the preceding claims, **characterised in that** the coated metal parts, strips, strip sections, wires or profiled sections are formed, painted, coated with polymers such as, for example, PVC, printed, bonded, hot-soldered, welded and/or joined to one another or to other elements by clinching or other joining techniques.

22. A composition for coating a metallic surface, **characterised in that** the composition contains:
at least one water-soluble or water-dispersed organic polymer,
particles containing at least one type of conductive polymer 1.) as typical core-shell particles (coated particles) that are partially or completely coated with conductive polymer, and/or 2.) as organic particles that in part contain conductive polymer in their interior,
water,
optionally at least one organic solvent, and
optionally at least one additive,
wherein the conductive polymer is at least one based on polyphenylene, polyfuran, polyimidazole, polyphenanthrene, polypyrrole, polythiophene and/or polythiophenylene, which is charged with anti-corrosive mobile anions of benzoate, nitrosalicylate, salicylate, tartrate, hexafluorotitanate, hexafluorozirconate and/or tungstate.

23. A composition according to claim 22, **characterised in that** it contains conductive polymer in which anions based on titanium and/or zirconium are incorporated, and/or that it contains at least one compound of titanium and/or zirconium.

24. Articles provided on a metallic surface with a coating based on binder system, particles and conductive polymer, in which the coating is produced according to one of claims 1 to 21.

25. Coated articles with a coating according to claim 24, **characterised in that** the coating contains conductive polymer that has anions containing titanium and/or zirconium, and/or that the coating contains at least one compound of titanium and/or zirconium.

26. Use of the article coated by the process according to at least one of claims 1 to 21, such as, for example, a strip, a wire, a profiled section or a part, as a wire coil, wire mesh, steel strip, metal sheet, lining, screening, car body or car body part, part of a vehicle, trailer, mobile home or flying object, as a covering, housing, lamp, light, traffic light element, piece of furniture or furniture element, element of domestic equipment, frame, profiled section, moulded part of complicated geometry, guardrail element, heating body element or fence element, vehicle bumper, part of or together with at least one tube and/or a profiled section, window, door or bicycle frame, or a small part such as, for example, a screw, nut, flange, spring or spectacles frame.

## Revendications

1. Procédé de revêtement de surfaces métalliques avec une composition anticorrosion qui contient du polymère conducteur, **caractérisé en ce que** la composition est une dispersion qui contient des particules contenant du polymère conducteur 1.) en tant que particules coeur-écorce typiques (particules revêtues), qui sont revêtues en partie ou en totalité avec du polymère conducteur, ou/et 2.) en tant que particules organiques, qui contiennent en partie à l'intérieur du polymère conducteur, ainsi qu'un système de liant, et **en ce que** le polymère conducteur est au moins un polymère à base de polyphénylène, polyfurane, polyimidazole, polyphénanthrène, polypyrrole, polythiophène ou/et polythiophénylène, qui est chargé en anions anticorrosion mobiles de benzoate, nitrosalicylate, salicylate, tartrate, hexafluorotitanate, hexafluorozirconate ou/et tungstate.

2. Procédé de revêtement de surfaces métalliques avec une composition anticorrosion qui contient du polymère conducteur, **caractérisé en ce que** l'on applique sur la surface métallique d'abord une première composition qui est une dispersion qui contient des particules contenant du polymère conducteur 1.) en tant que particules coeur-écorce typiques (particules revêtues), qui sont revêtues en partie ou en totalité avec du polymère conducteur, ou/et 2.) en tant que particules organiques, qui contiennent en partie à l'intérieur du polymère conducteur, et on la fait sécher, et **en ce que** l'on applique ensuite une deuxième composition, contenant un système de liant, en tant que dispersion sur la surface métallique prérevêtue, on la fait sécher et, le cas échéant, on la polymérise, sachant que le polymère conducteur est au moins un polymère à base de polyphénylène, polyfurane, polyimidazole, polyphénanthrène, polypyrrole, polythiophène ou/et polythiophénylène, qui est chargé en anions anticorrosion mobiles de benzoate, nitrosalicylate, salicylate, tartrate, hexafluorotitanate, hexafluorozirconate ou/et tungstate.

3. Procédé selon la revendication 1 ou 2, **caractérisé en ce que** la dimension de particule moyenne des particules contenant du polymère conducteur, y compris leurs accumulations telles que des agglomérats ou/et des agrégats, se situe dans la plage allant de 10 nm à 20 µm ou/et **en ce que** la dimension de particule moyenne des particules contenant du polymère conducteur, sans agglomérats et sans agrégats, est comprise dans la plage allant de 10 nm à 10 µm.

4. Procédé selon l'une des revendications précédentes, **caractérisé en ce que** les particules contenant du polymère conducteur sont sélectionnées dans le groupe constitué de grappes, de nanoparticules, de nanotubes, de structures fibreuses, en forme de pelote ou/et poreuses et de particules massives.

5. Procédé selon l'une des revendications précédentes, **caractérisé en ce que** les particules inorganiques contenant du polymère conducteur sont sélectionnées dans le groupe de particules qui sont constituées d'au moins une substance, essentiellement respectivement d'au moins un borure, carbure, carbonate, cuprate, ferrate, fluorure, fluorosilicate, niobate, nitrure, oxyde, phosphate, phosphure, phosphosilicate, séléniure, silicate, sulfate, sulfure, tellurure, titanate, zirconate, d'au moins un type de carbone, d'au moins un alliage, d'au moins un métal ou/et leur cristaux mixtes, de mélanges ou/et de coalescences.

6. Procédé selon l'une des revendications précédentes, **caractérisé en ce que** les particules organiques contenant du polymère conducteur sont en majeure partie ou en totalité celles qui sont sélectionnées dans le groupe constitué de polymères à base de styrène, acrylate, méthacrylate, polycarbonate, cellulose, polyépoxyde, polyimide, polyéther, polyuréthane, siloxane, polysiloxane, polysilane et polysilazane.

7. Procédé selon l'une des revendications précédentes, **caractérisé en ce que** l'on choisit au moins un anion dans le groupe constitué d'anions à base de fluorure complexe.

8. Procédé selon l'une des revendications précédentes, **caractérisé en ce que** des anions sont ajoutés ou/et intégrés dans le polymère conducteur, qui ont sur la surface métallique en plus une action empêchant la délamination ou/et favorisant l'adhérence.

9. Procédé selon l'une des revendications précédentes, **caractérisé en ce que**, avant d'être mélangées avec un liquide ou avant d'être ajoutées à la composition, les particules contenant du polymère conducteur sont broyées, séchées et soumises à un recuit ou/et à une redispersion.

10. Procédé selon l'une des revendications précédentes, **caractérisé en ce que**, en plus des particules contenant du polymère conducteur et en plus de l'eau ou/et d'au moins un autre solvant, la composition contient essentiellement le cas échéant un système de liant à base de polymère organique ou/et de dioxyde de silicium/silicate.

11. Procédé selon l'une des revendications précédentes, **caractérisé en ce que** l'on utilise des particules contenant du polymère conducteur, où l'on emploie au moins deux types de particules qui présentent des distributions de tailles de particules sensiblement différentes ou/et où l'on emploie au moins deux types de particules fabriquées de façon différente.

12. Procédé selon l'une des revendications précédentes, **caractérisé en ce que** l'on sélectionne comme système de liant au moins un polymère organique qui est anioniquement ou cationiquement stabilisé ou que l'on stabilise anioniquement ou cationiquement et qui peut le cas échéant être réalisé sous forme de film.

13. Procédé selon l'une des revendications précédentes, **caractérisé en ce que** l'on sélectionne comme système de liant un système dans lequel au moins un polymère organique, qui est contenu dans la composition, forme un film lors du séchage de la composition.

14. Procédé selon l'une des revendications précédentes, **caractérisé en ce que** l'on sélectionne comme système de liant un système qui est soumis à une réticulation chimique ou/et radicalaire par l'intermédiaire d'au moins un agent réticulant thermique ou/et par l'intermédiaire d'au moins un photoamorceur.

15. Procédé selon l'une des revendications précédentes, **caractérisé en ce que** l'on ajoute à la composition contenant un système de liant, au moins un additif qui est sélectionné dans le groupe constitué de biocides, chélates, émulsifiants, antimoussants, adjuvants filmogènes, lubrifiants, agents d'adhérence, agents complexants, inhibiteurs de corrosion inorganiques ou/et organiques, agents mouillants, pigments, capteurs d'acides, colloïdes de protection, silanes/siloxanes/polysiloxanes, stabilisants, agents tensio-actifs, agents réticulants, plastifiants, composés d'aluminium, composés de cérium, composés de lanthane, composés de manganèse, composés de terres rares, composés de molybdène, composés de titane, composés de tungstène, composés d'yttrium, composés de zinc et composés de zirconium.

16. Procédé selon l'une des revendications précédentes, **caractérisé en ce que** la composition est appliquée par laminage, inondation, raclage, projection, pulvérisation, enduction ou/et immersion et, le cas échéant, par écrasement ultérieur avec un rouleau.

17. Procédé selon l'une des revendications précédentes, **caractérisé en ce que** la composition aqueuse est appliquée sur la surface métallique à une température située dans la plage allant de 5 à 50 °C, **en ce que**, lors de l'application du revêtement, la surface métallique est maintenue à des températures situées dans la plage allant de 5 à 120 °C ou/et **en ce que** la surface métallique revêtue est séchée à une température située dans la plage allant de 20 à 400 °C PMT (peak-metal-temperature).

18. Procédé selon l'une des revendications précédentes, **caractérisé en ce que**, avant le revêtement avec au moins une composition selon la revendication 1 ou 2, la surface métallique à revêtir est nettoyée, décapée, rincée, pourvue d'une couche de passivation, d'une couche de traitement, d'une couche de prétraitement, d'une couche d'huile ou/et d'un revêtement mince ou très mince, qui contient principalement du polymère conducteur et est fermé seulement de façon limitée ou en totalité, et est le cas échéant débarrassée ultérieurement au moins en partie de cette couche.

19. Procédé selon l'une des revendications précédentes, **caractérisé en ce que** des rubans sont revêtus avec la composition selon l'une des revendications précédentes et sont enroulés pour former une bobine, le cas échéant après un refroidissement jusqu'à une température située dans la plage allant de 20 à 70 °C.

20. Procédé selon l'une des revendications précédentes, **caractérisé en ce que**, après le revêtement avec une composition selon la revendication 1 ou avec les compositions selon la revendication 2, la surface métallique revêtue est pourvue d'au moins un revêtement supplémentaire à base de solution de deuxième rinçage, de polymère organique, de vernis, d'adhésif, de support d'adhésif ou/et d'huile.

21. Procédé selon l'une des revendications précédentes, **caractérisé en ce que** les éléments métalliques, rubans, tronçons de rubans, fils métalliques ou profilés revêtus sont formés, peints, revêtus ou imprimés, collés, brasés à chaud ou soudés avec des polymères tels que du PVC, ou/et sont reliés entre eux ou à d'autres éléments par sertissage ou d'autres techniques d'assemblage.

22. Composition destinée au revêtement d'une surface métallique, **caractérisée en ce que** la composition contient :
au moins un polymère organique soluble dans l'eau ou dispersé dans l'eau,
au moins un type de particules contenant du polymère conducteur 1.) en tant que particules coeur-écorce typiques (particules revêtues), qui sont revêtues en partie ou en totalité avec du polymère conducteur, ou/et 2.) en tant que particules organiques, qui contiennent en partie à l'intérieur du polymère conducteur,
de l'eau,
le cas échéant au moins un solvant organique et
le cas échéant au moins un additif,
le polymère conducteur étant au moins un polymère à base de polyphénylène, polyfurane, polyimidazole, polyphénanthrène, polypyrrole, polythiophène ou/et polythiophénylène, qui est chargé en anions anticorrosion mobiles de benzoate, nitrosalicylate, salicylate, tartrate, hexafluorotitanate, hexafluorozirconate ou/et tungstate.

23. Composition selon la revendication 22, **caractérisée en ce qu'**elle contient un polymère conducteur, dans lequel sont intégrés des anions à base de titane ou/et de zirconium, ou/et **en ce qu'**elle contient au moins un composé de titane ou/et de zirconium.

24. Objets pourvus d'un revêtement à base de système de liant, de particules et de polymère conducteur, sur une surface métallique, où le revêtement est réalisé selon l'une des revendications 1 à 21.

25. Objets revêtus dotés d'un revêtement selon la revendication 24, **caractérisés en ce que** le revêtement contient du polymère conducteur qui présente des anions contenant du titane ou/et du zirconium, ou/et **en ce que** le revêtement contient au moins un composé de titane ou/et de zirconium.

26. Utilisation de l'objet revêtu conformément au procédé selon au moins une des revendications 1 à 21, par exemple un ruban, un fil métallique, un profilé ou un élément en tant qu'enroulement de fil métallique, un treillis de fil métallique, un ruban d'acier, une tôle, un habillage, un écran de protection, une carrosserie ou un élément de carrosserie, un élément d'un véhicule, d'une remorque, d'un camping-car ou d'un engin volant, un élément de recouvrement, un boîtier, une lampe, un luminaire, un élément de suspension, un meuble ou un élément d'ameublement, un élément d'un appareil ménager, un châssis, un profilé, une pièce moulée à géométrie compliquée, un élément de glissière de sécurité, de radiateur ou de clôture, un pare-chocs, un élément constitué d'au moins un tube ou/et d'un profilé ou comportant au moins un tube ou/et un profilé, un châssis de fenêtre, un encadrement de porte ou un cadre de bicyclette ou une petite pièce, telle qu'une vis, un écrou, une bride, un ressort, ou une monture de lunettes.
